Europäisches Patentamt

**European Patent Office**

**Office européen des brevets**

(11) Publication number: **0 248 165 B1**

# EUROPEAN PATENT SPECIFICATION

(45) Date of publication of patent specification: **07.07.93** (51) Int. Cl.⁵: **G01D 5/24**

(21) Application number: **87104889.8**

(22) Date of filing: **02.04.87**

(54) **Capacitance-type transducer for measuring positions.**

(30) Priority: **04.04.86 JP 78947/86**
**09.04.86 JP 83205/86**
**11.04.86 JP 83470/86**

(43) Date of publication of application:
**09.12.87 Bulletin 87/50**

(45) Publication of the grant of the patent:
**07.07.93 Bulletin 93/27**

(84) Designated Contracting States:
**CH DE GB LI SE**

(56) References cited:
**EP-A- 0 065 625**
**GB-A- 2 009 944**
**US-A- 3 068 457**
**US-A- 3 222 591**
**US-A- 4 429 307**

(73) Proprietor: **MITUTOYO CORPORATION**
**31-19, 5-Chome Shiba Minato-Ku**
**Tokyo(JP)**

(72) Inventor: **Andermo, Ingvar**
**5906-112th Place N.E.**
**Kirkland, WA 98033(US)**

(74) Representative: **Patentanwälte Grünecker,**
**Kinkeldey, Stockmair & Partner**
**Maximilianstrasse 58**
**W-8000 München 22 (DE)**

## Description

BACKGROUND OF THE INVENTION

Field of the Invention

This invention relates to a capacitance type transducer for measuring positions. Specifically, it relates to an improved capacitance type transducer for measuring positions in which the relative positions of a pair of moving structural members which are displaced relatively to each other can be measured accurately from changes in electrostatic capacity.

Description of the Prior Art

Electrical length-measuring devices are well known. These are electrical length-measuring devices in which two scales are displaced relatively to each other, and the relative displacement positions of both of the aforesaid scales are measured by means of changes in the electrostatic capacity between rows of electrodes positioned on both scales. They can be used in a broad range of applications, from large-size length-measuring devices such as three-dimensional measuring devices or numerically controlled finishing machines, to portable calipers, micrometers and other small-size length-measuring devices.

The capacitance type transducers used in these length-measuring devices supply their transmitting electrodes with A.C. signals, preferably A.C. signals with a number of different phases, have electrical measuring circuits connected to the corresponding receiving electrodes, and use the changes in the electrostatic capacity caused by the relative displacement between both electrodes to measure specific positions.

Most of the capacitance type transducers of the past were ordinarily used for relative measurements and were unsuitable for absolute measurements.

That is, the relative displacement between both scales of a transducer was ordinarily detected electrically as repeated changes of the electrostatic capacity. The usual method adopted in the past was to measure the amount of relative displacement by counting the number of these repetitions. In such cases, it was extremely difficult to measure the absolute positions of both scales themselves, and the general method was that of relative measurements, in which both scales were displaced relatively from a reference position to a measuring position, and the number of repeated signals during this interval was counted.

Nevertheless, with this type of relative measurement it was not possible to obtain measurement values easily, and strong demands were being voiced for absolute measurements, especially in portable calipers and other instruments, partially on account of the ease of manipulation.

Additional problems in the aforesaid relative measurements included the fact that there were restrictions on the displacement speed of the two scales and the fact that there was a large power consumption.

In other words, if the aforesaid relative measurements are used, measurements must be made incrementally, and the equipment must always be set back at zero at the beginning of every measurement.

Therefore, on account of the poor manipulability and the large power consumption of the conventional relative measurement devices, either the devices tended to be large in size, or, if they were compact, battery-driven measuring devices, they had the problem of short battery life.

As mentioned before, a problem in relative measurements was the fact that, at rapid displacement speeds between both scales, the processing speed would not be able to keep up and miscounting would occur. This made it necessary to impose restrictions on the displacement speed, or to use A.C. signals of sufficiently high frequencies and to increase sufficiently the processing speed of the detecting circuit.

On the other hand, if absolute measurements are used, as long as the transducer is set at zero at assembly, there is no need to adjust it during subsequent measurements, and there is no need at all to make zero settings at each measured value. In absolute measurements, since the power source needs to be connected only when one is finding the measured values, the power consumption is reduced remarkably. This is advantageous because it is possible to have compact, battery-driven length-measuring devices, and even batteries having a small power capacity such as solar batteries are sufficient to drive such length-measuring devices.

Another advantage of using absolute length measurements is the fact that the electrostatic capacity between both scales is measured only after the relative displacement between them has been established. Therefore, while the scales are being displaced relatively to each other, they make no contribution at all to the measuring operations. As a result, no restrictions are imposed on the displacement speed of the scales.

Transducers using electrostatic capacity to make absolute measurements of positions were known in the past and disclosed in GB-A-209 944.

This past technology was invented by the inventor of this application. In brief, its construction is characterized by the fact that two pairs of transmitting/receiving electrodes are displaced relatively to each other, and the electrode pitch is different in each pair of electrodes. Absolute positions can then be measured by processing electrically the signals of different phases obtained from both pairs of electrodes, or from both scales.

Nevertheless, there were a number of problems such as the following when the aforesaid devices of the past were actually put into practical application as length-measuring devices:

The first problem was the following. That is, the two scales were independent of each other and each constituted a separate capacity detecting circuit, the detected outputs of which were processed by a measuring circuit. However, slight time differences inevitably occurred between both outputs, and large errors in the measured values resulted from these time differences.

In cases where slight measuring errors occurred between both scales, i.e., where accurate position detection was performed on one scale while the other scale contained a slight measurement error, processing of the divergence which occurred on one scale would result in principle as a large error in the absolute value when the measuring circuit judged the absolute position. This led to another problem: i.e., both scales had to be positioned mechanically with an extremely great precision, and the processing characteristics of the electrical circuits, which were installed independently of each other, as described above, also had to be set extremely precisely.

A second problem was the fact that the transducer occupied much space because it required two scales. This acted as a major factor impeding the practical realization of compact, portable length-measuring devices.

A third problem was the fact that the devices of the past had a large power consumption because the two scales were each used separately as capacity detecting circuits. This was another unfavorable characteristic for compact, portable length-measuring devices.

A fourth, additional problem was the fact that, when absolute measurements were performed within a relatively long measuring range, the electrodes had to be miniaturized to such remarkable degree that machining techniques of an extremely high precision were needed in order to achieve them accurately on the scales.

Ordinarily the aforesaid electrodes are formed by methods such as vapor deposition on insulating substrates. However, the problem when the aforesaid finely divided electrodes were relied on in order to obtain length-measuring devices with a high resolution was that it was extremely difficult to machine them, and this necessarily led to increases of costs of the devices.

This invention was made in consideration of the aforesaid tasks of the past, and its purpose is to provide improved capacitance type transducers for measuring positions in which the absolute positions of scales which are displaced relatively to each other are electrically measured by the capacitance method and in which all of the aforesaid problems in the devices of the past are eliminated.

By applying this invention, it is possible to supply improved transducers which, while being compact in size, can make accurate measurements of absolute values, in which it is not necessary to make zero settings at every measurement, which have a small power consumption and which have no restrictions on the displacement speed of the scales.

Moreover, by applying this invention, it is possible to maintain a sufficiently high precision even if the A.C. signals connected to the transmitting electrodes are set at a relatively low frequency. This simplifies the electrical circuitry greatly, and the devices can be completed inexpensively.

Of course, this invention makes it possible to carry out the desired measurement operations by connecting the device to its power source only when the absolute values are to be displayed. Thus, the device's power consumption is reduced remarkably.

## SUMMARY OF THE INVENTION

In order to achieve the aforesaid purpose, this invention as defined in claim 1 relates to improvements of transducers which measure the absolute positions of two structural members which are displaced relatively to each other by measuring the electrostatic capacity. As the aforesaid structural members which are displaced relatively to each other, these transducers have a first scale and a second scale, which are positioned close to each other in a manner so that they can be displaced relatively to each other.

Both of the aforesaid scales are usually formed on a linear scale, and their relative displacement ordinarily is linear. Of course, this invention lends itself also quite well to obtaining rotary transducers, in which scales are formed by two disks arranged coaxially.

On the aforesaid first scale are positioned the first transmitting electrodes, to which A.C. signals are provided, as well as the first receiving electrodes, which are positioned close to the first transmitting electrodes but insulated from them, and to which the measuring circuit is connected.

The second scale contains the second receiving electrodes, which consist of a block of electrodes which are arranged in positions where they can face towards the first transmitting electrodes along the direction of relative displacement and which are coupled capacitively with the first transmitting electrodes, as well as the second transmitting electrodes, which also consist of a block of electrodes which are arranged in positions where they can face towards the first receiving electrodes along the direction of relative displacement and which are coupled capacitively with the first receiving electrodes.

Both of the aforesaid blocks of electrodes located on the second scale are positioned continuously along the necessary measuring region. They ordinarily form a row of electrodes which is considerably longer than the electrodes on the first scale side.

In this invention, the aforesaid second receiving electrodes and second transmitting electrodes are connected to each other electrically by means of coupling electrodes between the transmitting and receiving electrodes. Ordinarily, the number of second transmitting electrodes is the same as the number of second receiving electrodes.

Another characteristic feature in this invention is the fact that the coupled pairs of second receiving electrodes and second transmitting electrodes, which are connected in the manner described above, are each given different deflections along the direction of their relative displacement, and measurements of the absolute values are made on the basis of the aforesaid deflections which are specified for each displacement position.

The different deflections for each of the aforesaid displacement positions are indicated in terms of specific functions with respect to the amount of displacement. These functions usually have linearity, but in this invention they can be given any desired characteristics and do not necessarily have to be linear functions.

In this invention, the second receiving electrodes and second transmitting electrodes mounted on the second scale are each connected to each other by means of coupling electrodes, as described above. As a result, the A.C. signals supplied to the first transmitting electrodes on the first scale are first transmitted by the capacitive couplings to the second receiving electrodes on the second scale side. Next these signals, unchanged, are transmitted electrically to the second transmitting electrodes and are returned again by the capacitive couplings to the first receiving electrodes.

Consequently, in this invention, the changes of the electrostatic capacity can be detected once by a single train of electrical circuits through the second receiving electrodes and second transmitting electrodes. Since the aforesaid deflections between the electrodes are specified uniquely for each displacement position within the necessary measuring regions, the detected values of the electrostatic capacity are established as single values corresponding to the phases of the A.C. signals supplied. Unlike the case in the devices of the past in which two trains of electrical circuits were used, it becomes possible to carry out the measuring operations with an extremely high precision.

The aforesaid measuring circuit, by comparing the received signal levels with the phases of the A.C. signals transmitted and performing prescribed arithmetical processing, can display the absolute values of the relative displacement positions.

Another characteristic feature of this invention is the fact that, in order to achieve a high-precision resolution while maintaining a sufficiently long measuring range, as described above, the measuring operations are divided into two parts: coarse measurements and fine measurements. The coarse measurements are used to confirm the positions accurately but approximately, after which these coarse dimensions are measured finely in order to obtain accurate measurements of the positions. In addition, the electrode positioning for these coarse and fine measurements has been achieved on a single pair of scales.

Consequently, in this invention, the electrodes positioned on both scales are each used to carry out different functions during coarse measurement and during fine measurement. These different functions are selected by merely changing the combinations of the transmitting and receiving signals, and the same positioning of the electrodes themselves is shared in common by both measurements. Therefore, there is the advantage that it is possible to adopt an extremely simple configuration, especially with respect to the positioning of the electrodes arranged along the entire measuring range.

The relative displacement positions, which depend on the deflections between the aforesaid first transmitting electrodes and second receiving electrodes, are used basically in coarse measurements. As is clear from the explanation below, since these deflections cannot exceed the transmitting wavelength pitch, intrinsic restrictions will be imposed on the range of length measurements.

A characteristic feature of this invention is the fact that, since these restrictions based on the aforesaid deflections are separated between coarse measurements and fine measurements, it is possible as a result to measure positions with an extremely high precision while retaining a long measuring range.

That is, the current absolute positions of both relatively displaced parts are found accurately as coarse dimensions on the basis of the aforesaid deflections of both sets of electrodes. These absolute positions between the coarse dimensions are then entrusted to the fine measurements, as described below.

A further characteristic feature of this invention is the fact that the aforesaid second receiving electrodes consist of a number of electrodes having an equally spaced pitch equal to the length of the aforesaid first transmitting electrodes divided by a specified integer. In this way, a high-precision fine scale resolution, amounting to the receiving electrode pitch divided by the number of transmitting electrodes within the block of transmitting electrodes, is achieved within each of the coarse dimensions.

That is, unlike the past devices, in which the first transmitting electrodes were finely divided into sections amounting to integral fractions of the single second receiving electrode pitch, this invention is characterized by the fact that blocks of different numbers of first transmitting electrodes and of second receiving electrodes are positioned facing each other, and the differences between the numbers of electrodes in both blocks are extracted as beat signals. In this way, even though the electrodes themselves are arranged with a large pitch, which is easy to machine, their resolution itself can be set to make extremely fine measurements by means of the aforesaid beats.

Therefore, in this invention, if the first scale and second scale are kept in specified measuring states, the relative displacement distance between both scales at this time is first measured coarsely by means of the aforesaid deflection between the second receiving electrodes and second transmitting electrodes. Next, the electrical circuits are switched over, and while both of the transducer scales are held in exactly the same positions, at the same state in which the approximate positions were measured by the aforesaid measurements of the coarse absolute values, precise, fine measurements are found between these coarse dimensions by the aforesaid combination of the first transmitting electrodes and second receiving electrodes.

Consequently, this invention has the advantage that both measurements of coarse absolute values and measurements of fine absolute values can be made easily by switching over to different combinations of electrodes on the first and second scales. Each electrode is used both for coarse measurements and fine measurements, and high-precision absolute measurements can be carried out with a simple positioning of electrodes.

In this invention, the fine measurements can be made by using unchanged the same electrodes which were used in the aforesaid coarse or medium measurements. The fact that in this invention the electrodes are completely interchangeable in these two different types of measurement is extremely useful in simplifying the positioning of the electrodes.

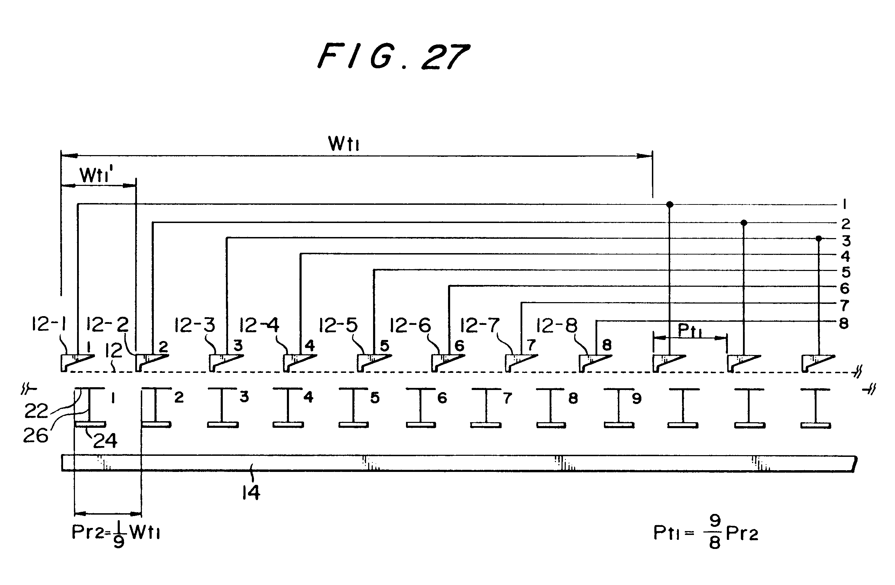

The basic principles of the aforesaid fine measurements are illustrated in Figure 27.

The following is a characteristic feature of the fine measurements of this invention. Whereas in the past the first transmitting electrodes 12 were finely divided into a number of electrodes (for example, 8 electrodes) for each of the second receiving electrodes 22, this invention provides the advantage that one transmitting electrode is extracted at a time from the transmitting wavelength pitch Wt1', where in the past were formed the eight transmitting electrodes, to which transmission signals of different phases were supplied, and these transmitting electrodes are arranged so that their size is far larger.

That is, as is clear from Figure 27, only the first electrode is extracted from the first transmitting wavelength pitch Wt1' of the past, i.e., from the block of eight transmitting electrodes. It is enlarged and used as the first transmitting electrode, as shown by numeral 12-1, and the other electrodes are eliminated.

Similarly, the second electrode 12-2 is also extracted from the first block of transmitting electrodes, and the others are eliminated. The other first transmitting electrodes, shown by 12-3, 12-4 .... 12-8 respectively, are also likely extracted in sequence.

Therefore, one can understand that in the fine measurements the new transmitting wavelength pitch Wt1 is enlarged eightfold in comparison with that of the past.

Consequently, one can understand that on the receiving side, the receiving electrodes will be formed by a number of electrodes having an equally spaced pitch equal to the length of the aforesaid block of transmitting electrodes, i.e., the new transmitting wavelength pitch Wt1, divided by a specified integer (in this case, 9), as is shown in the diagram of the basic principles in Figure 27.

Consequently, one can understand that, in Figure 27, the second receiving electrode pitch Pr2 is equal to $1/9 \times Wt1$.

One can also understand from this diagram of the basic principles that the eight first transmitting electrodes 12 extracted in Figure 27 have the same relationship towards the nine second receiving electrodes 22 arranged in a row as the relationship which the eight first transmitting electrodes which were finely arranged in the past within the transmitting wavelength pitch Wt1' had towards the receiving electrodes. That is, in the fine electrodes of the past also, when both scales were displaced relatively, the relative displacement between the transmitting electrodes and the receiving electrodes could be conceived in exactly the same way as in Figure 27. The only differences is that in Figure 27 the length must be determined in terms of a length spanning across nine receiving electrodes.

Nevertheless, this difference means merely that in a length-measuring device such as calipers the vernier scale will be wider than in the past. In actual fact, since the width of the vernier scale is large enough in relation to the width of the transmitting electrodes, the aforesaid characteristic feature will be no obstacle to the practical realization of the devices.

Still another characteristic feature of this invention is the fact that, in order to achieve a high-precision resolution while maintaining a sufficiently long measuring range, as described above, the measuring operations are divided into three measurements: coarse, medium and fine. The coarse measurements are used to confirm the positions accurately but approximately. Then these coarse dimensions are measured absolutely with a high precision by the second, medium measurements. Finally, the positions of these medium dimensions are accurately measured again by the third, fine measurements. This invention is further characterized by the fact that the electrode positioning for these coarse, medium and fine measurements is realized on a single pair of scales.

Consequently, in this invention, the electrodes arranged on both scales are used to fulfill different functions during coarse and medium measurements and during fine measurements. However, these different functions are selected by merely changing the combinations of the transmitting and receiving signals. Since the electrodes themselves retain a common positioning for each of the measurements, the invention has the advantage that it is possible to adopt an extremely simple configuration, especially with respect to the positioning of the electrodes arranged along the entire measuring range.

On the aforesaid first scale are positioned the first transmitting electrodes, to which A.C. signals are provided, as well as the first coarse/fine receiving electrode and the first medium/fine receiving electrode, which are positioned close to the first transmitting electrodes but insulated from them, and to which the measuring circuit is connected.

The second scale contains the second receiving electrodes, which consist of a block of electrodes which are arranged in positions where they can face towards the first transmitting electrodes along the direction of relative displacement and which are coupled capacitively with the first transmitting electrodes, as well as the second coarse/fine transmitting electrodes and the second medium/fine transmitting electrodes, which also consist of a block of electrodes which are arranged in positions where they can face towards the first coarse/fine receiving electrodes and the first medium/fine receiving electrodes along the direction of relative displacement and which are coupled capacitively with the first coarse/fine receiving electrodes and the first medium/fine receiving electrodes.

The electrodes located on the aforesaid second scale are positioned continuously along the necessary measuring region. They ordinarily form a row of electrodes which is considerably longer than the electrodes on the first scale side.

In this invention, the aforesaid second receiving electrodes and second transmitting electrodes are connected to each other electrically by means of coupling electrodes between the transmitting and receiving electrodes. Ordinarily, the number of second transmitting electrodes is the same as the number of second receiving electrodes.

A first characteristic feature of this invention is the fact that the coupled pairs of second receiving electrodes and second coarse/fine transmitting electrodes, which are connected in the manner described above, are each given different coarse deflections within the entire measuring range along the direction of their relative displacement, and coarse measurements of the absolute values are made within the necessary measuring range on the basis of the aforesaid coarse deflections which are specified for each displacement position.

The different coarse deflections for each of the aforesaid displacement positions are indicated in terms of specific functions with respect to the amount of displacement. These functions usually have linearity, but in this invention they can be given any desired characteristics and do not necessarily have to be linear functions.

Nevertheless, these relative displacement positions when found depend on the aforesaid coarse displacements between the first transmitting electrodes and the second coarse/fine receiving electrodes. As is clear from the explanation below, since these coarse deflections cannot exceed the transmitting wavelength pitch, intrinsic restrictions will be imposed on the range of length measurements.

A second characteristic feature of this invention is the fact that, since these restrictions based on the aforesaid coarse deflections are separated between coarse measurements and medium measurements, it is possible as a result to measure positions with an extremely high precision while retaining a long measuring range.

That is, the current absolute positions of both relatively displaced parts are found accurately but approximately as coarse dimensions on the basis of the aforesaid coarse deflections. These absolute positions between the coarse dimensions are then entrusted to the medium measurements, as described below.

That is, the aforesaid second characteristic feature of this invention consists in the electrode positioning of the second medium/fine transmitting electrodes located on the second scale. These second medium/fine transmitting electrodes are electrically coupled by coupling electrodes with the second receiving electrodes, and both of the coupled pairs at this time are each given different medium deflections within the entire measuring range along the direction of their relative displacement. This makes it possible to measure more accurately the absolute positions within the medium measuring range, which was determined approximately by the aforesaid coarse measurements, on the basis of these medium deflections which are specified for each displacement position within the medium measuring range.

In this way, the coarse measurements and medium measurements are separated in this invention, and it is possible to make both measurements simultaneously by measuring a single absolute value. This is extremely useful in simplifying the measurements.

In this invention, each of the second receiving electrodes on the second scale are connected by coupling electrodes with each of the second coarse/fine transmitting electrodes and second medium/fine transmitting electrodes, as mentioned above. As a result of this, the A.C. signals supplied to the first transmitting electrodes on the first scale are first transmitted by the capacitive couplings to the second receiving electrodes on the second scale side. Next these signals, unchanged, are transmitted electrically to the second coarse/fine transmitting electrodes and second medium/fine transmitting electrodes, and are returned again by the capacitive couplings to the first coarse/fine receiving electrodes and second medium/fine receiving electrodes.

Consequently, in this invention, the changes of the electrostatic capacity can be detected simultaneously by two trains of electrical circuits through the second receiving electrodes and the second coarse/fine transmitting electrodes and second medium/fine transmitting electrodes. Since the aforesaid combinations of coarse deflections and medium deflections between the electrodes are specified uniquely for each displacement position within the necessary measuring regions, the detected combinations of two values of the electrostatic capacity are established as single values corresponding to the phases of the A.C. signals supplied. This makes it possible to carry out the measuring operations with a high precision.

The aforesaid measuring circuit compares the received signal level with the phase of the transmitted A.C. signals, performs specified arithmetical processing, and can thus find the absolute value of the relative displacement distance

Moreover, a third characteristic feature of this invention is the fact that the measured positions established by the aforesaid coarse measurements and medium measurements are detected with an even higher precision by making the following fine measurements of the absolute values of the aforesaid medium dimensions.

In this invention, these fine measurements can be made by using unchanged the same electrodes which were used in the aforesaid coarse or medium measurements. The fact that in this invention the electrodes are completely interchangeable in these two different types of measurement is extremely useful in simplifying the positioning of the electrodes.

That is, the aforesaid third characteristic feature of this invention consists in the fact that the aforesaid second receiving electrodes consist of a number of electrodes having an equally spaced pitch equal to the length of the aforesaid block of first transmitting electrodes divided by a specified integer. In this way, a high-precision fine scale resolution, amounting to the receiving electrode pitch divided by the number of transmitting electrodes within the block of transmitting electrodes, is achieved within each of the medium dimensions.

That is, unlike the past devices, in which the first transmitting electrodes were finely divided into sections amounting to integral fractions of the single second receiving electrode pitch, this invention is characterized by the fact that blocks of different numbers of first transmitting electrodes and of second receiving electrodes are positioned facing each other, and the differences between the numbers of electrodes in both blocks are extracted as beat signals. In this way, even though the electrodes themselves are arranged with a large pitch, which is easy to machine, their resolution itself can be set at extremely fine dimensions by means of the aforesaid beats.

Therefore, in this invention, if the first scale and second scale are kept in specific measuring states, the relative displacement distance between both scales at this time is first measured as coarse and medium dimensions by means of the aforesaid coarse deflection and medium deflection between the second receiving electrodes and second transmitting electrodes. Next, the electrical circuits are switched over, and while both of the transducer scales are held in exactly the same positions, at the same state in which the intermediate positions were measured by the aforesaid measurements of the medium absolute values, fine measurements are found between these medium dimensions by the aforesaid combination of the first transmitting electrodes and second receiving electrodes.

Consequently, this invention has the advantage that both measurements of coarse/medium absolute values and measurements of fine absolute values can be made easily by switching over to different combinations of electrodes on the pair of first and second scales. Each electrode is used both for coarse/medium measurements and fine measurements, and high-precision absolute measurements can be carried out with a simple positioning of electrodes.

BRIEF DESCRIPTION OF THE DRAWINGS

Figure 1 is an oblique view of salient parts of a preferable embodiment of a capacitance type transducer for measuring positions according to this invention.

Figure 2 is an abbreviated explanatory drawing illustrating the first scale side of another embodiment of a transducer according to this invention.

Figure 3 is an abbreviated explanatory drawing illustrating the first scale of still another embodiment of a transducer according to this invention.

Figure 4 is a plane view of the first scale of still another transducer according to this invention.

Figure 5 is a plane view of the second scale side corresponding to the first scale shown in the aforementioned Figure 4.

Figure 6 is a plane view of the second scale of still another embodiment of a transducer according to this invention.

Figure 7 is a block diagram of a suitable measuring circuit for a transducer according to this invention.

Figure 8 is an explanatory drawing illustrating the wave patterns and timing chart of Figure 7.

Figure 9 is an oblique view of salient parts of a preferable embodiment of a capacitance type transducer for measuring positions according to this invention.

Figure 10 is an explanatory drawing illustrating the electrode positioning of the first transmitting electrodes and second receiving electrodes for fine measurements in a transducer according to this invention.

Figure 11 is an oblique view of salient parts of another preferable embodiment of a transducer according to this invention.

Figure 12 is a drawing of another positioning of the electrode combinations for explaining the fine measurements in this invention.

Figure 13 is a plane view of the first scale in another transducer according to this invention.

Figure 14 is a plane view of the second scale side corresponding to the first scale shown in the aforementioned Figure 13.

Figure 15 is a plane view of another embodiment of a transducer according to this invention in which the second receiving electrodes have a sinusoidal shape.

Figure 16 is a plane view of the first and second scales of still another embodiment of a transducer according to this invention in which the second scale has a pair of receiving and transmitting electrodes and a pair of receiving electrodes is located on the first scale.

Figure 17 is a block diagram of a suitable measuring circuit for a transducer according to this invention.

Figure 18 is an explanatory drawing illustrating how transmission and reception are switched over in order to make coarse and fine measurements using the aforesaid measuring circuit.

Figure 19 is an explanatory drawing illustrating the switching operations of the transmitting and receiving signals in order to use the transducer in the embodiment illustrated in Figure 16 for coarse and fine measurements using the aforesaid circuit.

Figure 20 is a block diagram of another suitable measuring circuit for a transducer according to this invention.

Figure 21 is a circuit diagram illustrating an example of the transmitting circuit in Figure 20.

Figure 22 is an explanatory drawing illustrating the phase combinations of the transmitting signals in Figure 21.

Figure 23 is a timing chart illustrating the operations of the measuring circuit illustrated in Figure 20.

Figure 24 is an explanatory drawing illustrating the basic principles of measurement in the measuring circuit illustrated in Figure 20.

Figure 25 is an explanatory drawing illustrating the two types of receiving signals in the measuring circuit in Figure 20 and how they are subjected to positive integration and inverse integration.

Figure 26 is a flow chart illustrating the measuring procedure when coarse measurements and fine measurements are made in the measuring circuit in Figure 20.

Figure 27 is an explanatory drawing illustrating the basic principles of fine measurement in this invention.

Figure 28 is an oblique view of salient parts of the first scale in a preferable embodiment of a capacitance type transducer for measuring positions according to this invention.

Figure 29 is an oblique view of salient parts of the second scale of the transducer illustrated in Figure 28.

Figure 30 is a plane view illustrating the first scale of still another transducer according to this invention.

Figure 31 is a plane view of the second scale corresponding to the first scale illustrated in the aforesaid Figure 30.

Figure 32 is an explanatory drawing illustrating the switching operations of the transmitting and receiving signals for coarse/medium measurements and fine measurements using the aforesaid measuring circuit.

## DESCRIPTION OF THE PREFERRED EMBODIMENT

Preferable embodiments of this invention are described below on the basis of the drawings.

Coarse Measurements

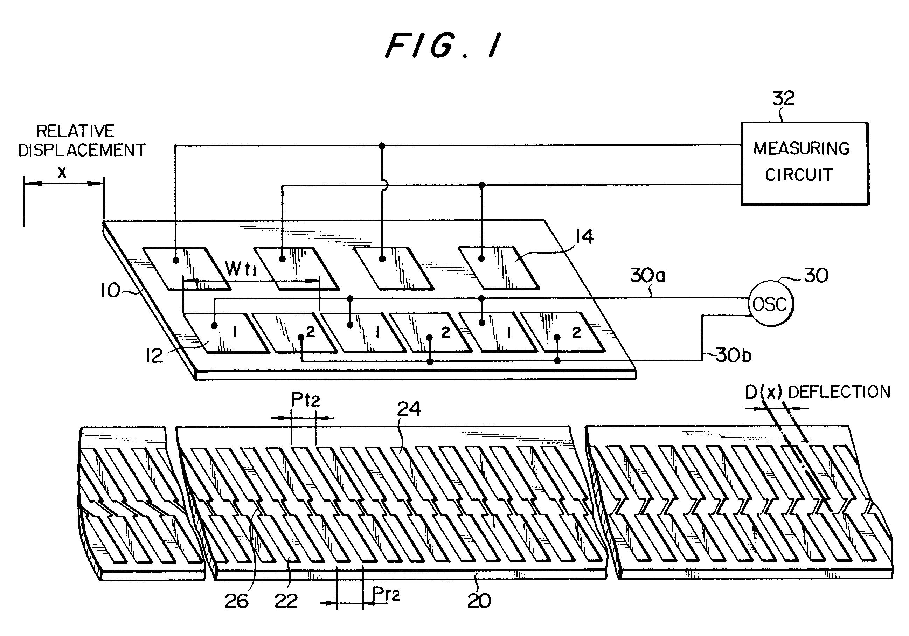

Figure 1 illustrates a preferable embodiment of a capacitance type transducer for measuring positions according to this invention which is suitable for length-measuring devices such as calipers in which the vernier scale is displaced linearly with respect to the regular scale. It includes a first scale 10 and a second scale 20. The first scale 10 may be incorporated, for example, on the vernier scale side of the calipers, and the second scale 20 on the regular scale side.

Both of the aforesaid scales 10 and 20 are positioned close to each other in a manner so that they can be displaced relatively to each other. In Figure 1, the positions on the X axis show the displacement positions of the first scale 10 with reference to the second scale 20.

The first transmitting electrodes 12 are located on the aforesaid first scale 10, and A.C. signals are supplied from the oscillator 30 to these first transmitting electrodes 12.

In the embodiment illustrated in the drawing, the first transmitting electrodes 12 have a configuration of two blocks of first transmitting electrodes each consisting of three electrodes positioned at equal intervals. Each block is supplied from the aforesaid oscillator 30 with A.C. signals 30a and 30b with different phases. The electrical phase difference between both signals is set at 180 degrees.

The first receiving electrodes 14 are also located on the aforesaid first scale 10. In this embodiment, these first receiving electrodes 14 consist of two blocks of electrodes each consisting of two electrodes positioned at equal intervals. They are positioned adjacent to and parallel with the aforesaid first transmitting electrodes.

Each block of the first receiving electrodes 14 is connected with the measuring circuit 32.

The aforesaid electrodes 12 and 14 are each formed by vapor deposition or other methods on the insulating substrate of the first scale 10, and the electrodes are each put in an electrically insulated state from each other.

The characteristic feature of the transducers of this invention consists in the positioning of the electrodes on the second scale 20. As is clear from the figure, the second receiving electrodes 22 and second transmitting electrodes 24 are positioned in rows on the second scale 20.

The second receiving electrodes 22 consist of a block of electrodes arranged along the direction of relative displacement (the X axis) in positions where they can face towards the first transmitting electrodes. They are coupled capacitively with the first transmitting electrodes.

The second receiving electrodes 22 in this embodiment are positioned at equal intervals, and their pitch is indicated by Pr2.

On the other hand, the second transmitting electrodes 24 consist of a block of electrodes arranged along the direction of relative displacement (the X axis) in positions where they can face towards the aforesaid first receiving electrodes 14. They are coupled capacitively with the first receiving electrodes 14.

These second transmitting electrodes 24 in this embodiment are positioned at equal intervals, and their pitch is indicated by Pt2.

In this invention, the pitch of the aforesaid second receiving electrodes 22 and the pitch of the second transmitting electrodes 24 are set at different values. One can understand that, as a result, a deflection shown by symbol D(x) is given between both electrodes.

Thus, a characteristic feature of this invention is that the aforesaid deflection

$$D(x) = (Pt2 - Pr2) f(x)$$

will have a definite, specified value in accordance with the relative displacement position, i.e., the value of X.

A further characteristic feature of this invention is the fact that the aforesaid second receiving electrodes 22 and second transmitting electrodes 24 are each connected electrically with each other by coupling electrodes 26.

Therefore, one can understand that in this invention the deflection between both electrodes D-(x) coupled to each other by the coupling electrodes 26 will have a uniquely specified value for each relative displacement position (X). Thus, one can understand that the detected value of the electrostatic capacity will correspond to the deflection D(x) and that measurement of absolute values will be possible.

Of course, it is true that this deflection D(x) increases as the transducer's range of measurement increases, and there is the restriction that the amount of the deflection D(x) cannot exceed the transmitting pitch, in this embodiment the transmitting wavelength pitch on the first transmitting electrodes 12, i.e. Wt1 in Figure 1.

This is so because it becomes difficult to identify the receiving signals if the aforesaid deflection D(x) exceeds the transmitting wavelength pitch Wt1.

Consequently, in the embodiment in Figure 1, the second scale 20 is set in such a way that the maximum deflection D(x) along the entire length of the regular scale of the calipers will not exceed the aforesaid transmitting wavelength pitch Wt1. To describe it in greater detail, the deflection D(x) in Figure 1 is set at zero at the center of the second scale 20 so that, as the scale moves to the left or right, its value will increase in the opposite direction. The second scale 20 will have a shape in which the deflection at both of its ends will be centered symmetrically between plus and minus.

The second scale 20 also has an insulating substrate, and the aforesaid second receiving electrodes 22, second transmitting electrodes 24 and coupling electrodes 26 are formed by vapor deposition or other methods on the aforesaid insulating substrate. The corresponding second receiving electrodes 22 and second transmitting electrodes 24 are each connected electrically, and these pairs of electrodes are positioned along the relative displacement direction (the X axis) in a state where they are electrically insulated from each other.

As described above, in this invention, the second receiving electrodes 22 and second transmitting electrodes 24 on the second scale 20 have a uniquely specified deflection D(x) for each position along the relative deflection direction. Therefore, the electrostatic capacity which is detected when the first scale 10 moves will have a uniquely specified value for each position, and it will be possible to make absolute measurements at any position.

In this invention, the A.C. signals supplied to the first transmitting electrodes 12 are transmitted by the capacitive couplings to the second receiving electrodes. They are immediately transmitted to the second transmitting electrodes by the conductance of the coupling electrodes, and after having been shifted in the direction of the relative displacement (X axis) are returned again by the capacitive couplings to the first receiving electrodes 14.

Therefore, in this invention, it is possible to detect signals by means of a single electrical system alone through electrodes which have been given the aforesaid different deflections, and absolute measurements can be made with an extremely high precision without any shifting of the signal positions and without any time differences.

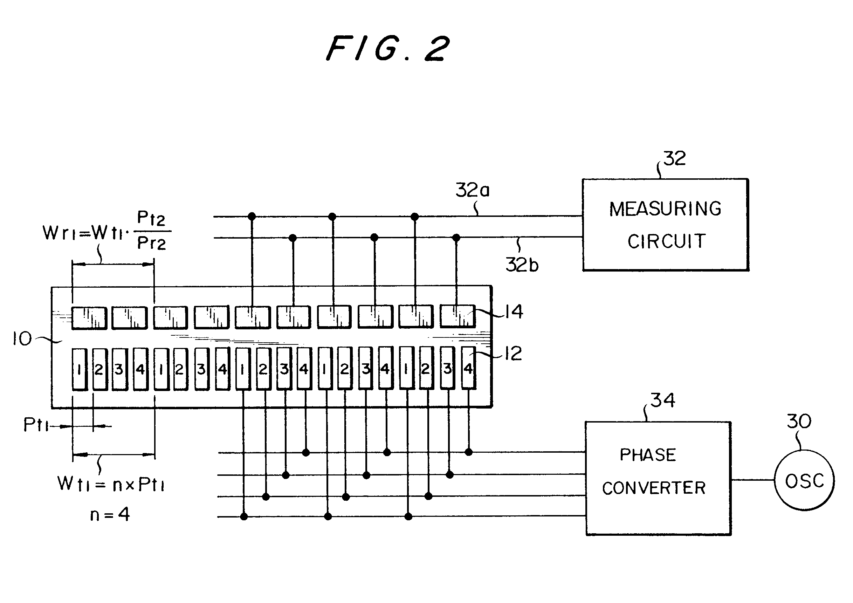

Figure 2 illustrates another embodiment of a first scale according to this invention. The same or corresponding structural members as those in Figure 1 are assigned the same symbols, and explanations of them are omitted.

The first transmitting electrodes 12 in this embodiment are supplied with A.C. signals with four different phases. Therefore, four electrodes, indicated by the numerals 1 - 4, form a single block, and A.C. signals with phases each differing by 90 degrees are supplied from the oscillator 30 through the phase converter 34 to each of the electrodes.

As is clear from the figure, the pitch between the first transmitting electrodes 12 is shown by Pt1. If the number of A.C. signals, that is, the number of transmitting electrode groups, is n, then the number in this embodiment will be n = 4, and one can understand that the length of each group of electrodes, that is, the transmitting wavelength pitch Wt1, will be:

$$n \times Pt1$$

The first receiving electrodes 14 which are positioned in a row adjacent to the aforesaid first transmitting electrodes 12 form blocks each consisting of two electrodes. They each supply two detecting signals 32a and 32b to the detecting circuit.

Moreover, in this embodiment, the pitch of each block of the aforesaid first receiving electrodes 14, that is, the receiving wavelength pitch Wr1, is set as follows in accordance with the specified amount of the shift undergone by the transmitting signals as they pass through the second scale, as mentioned above:

$$Wr1 = Wt1 \times Pt2/Pr2$$

Consequently, one can understand that, if this receiving wavelength pitch Wr1 is used, the A.C. signals transmitted from the first transmitting electrodes 12 will first be shifted by the predetermined amount on the second scale. Then the first receiving electrodes 14 having a length corresponding to the aforesaid amount of shift will be able to receive them again.

The measuring signals 32a and 32b output to the measuring circuit 32 each have inverse phases. As a result, it is possible to improve the detection precision still further by calculating the differences between both signals.

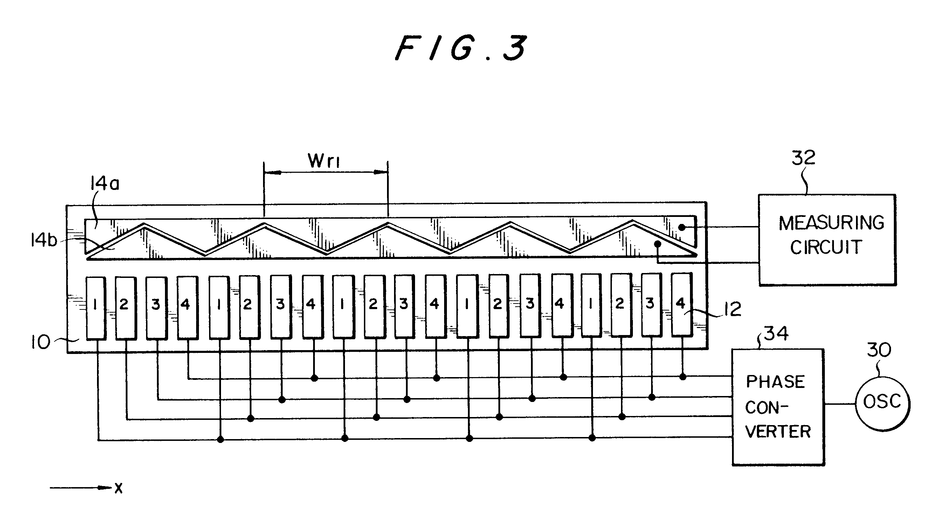

Figure 3 illustrates another embodiment of a first scale of this invention. It is similar to that of Figure 2, but the first receiving electrodes 14 have a triangular wave shape repeated at the receiving wavelength pitch Wr1 with respect to the relative displacement direction (X axis).

Moreover, this triangular wave shape consists of two first receiving electrodes 14a and 14b which are arranged in opposite phases to each other.

When their detected values are subjected to differential calculation, it is possible to improve the sensitivity of the detected signals.

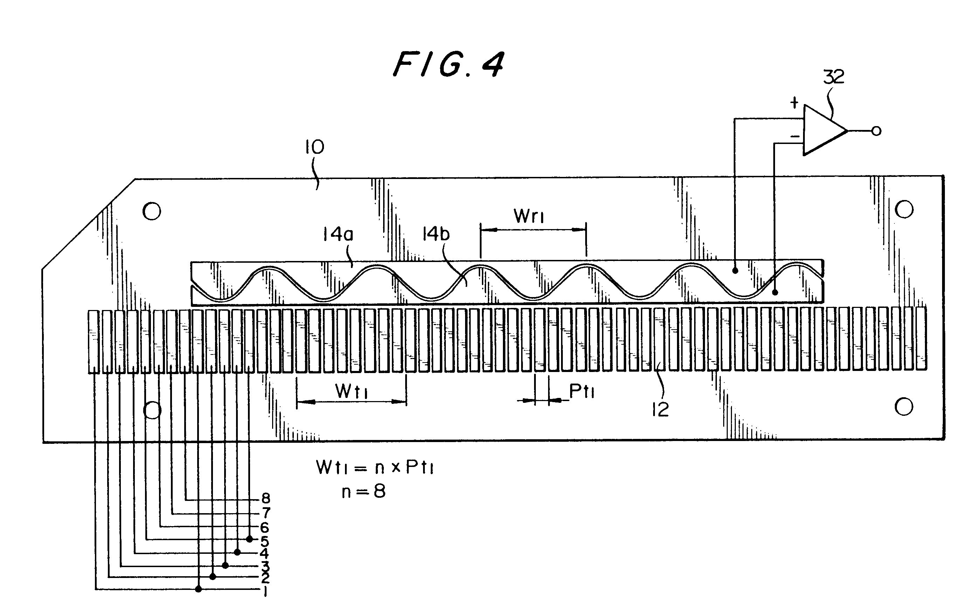

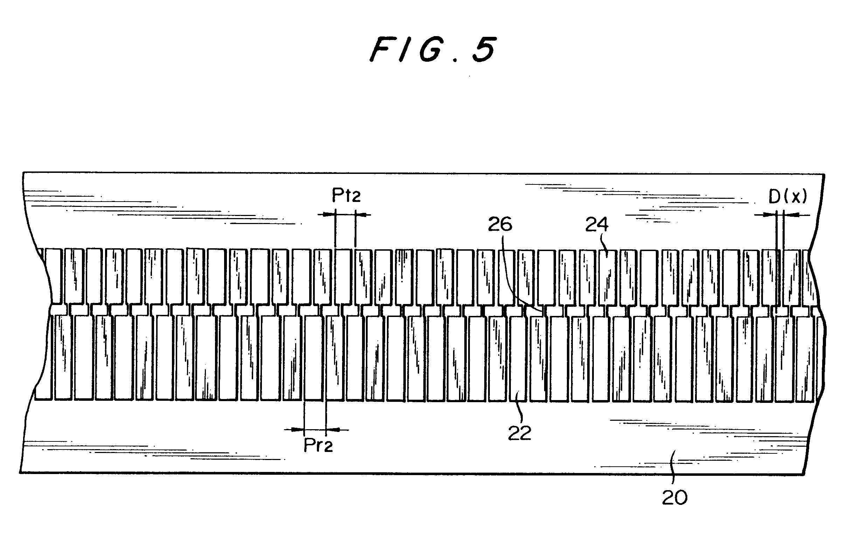

Figures 4 and 5 illustrate in detail concrete embodiments of the first scale 10 and second scale 20 of a transducer according to this invention.

The first scale 10 in Figure 4 is similar to that in the embodiment shown above in Figure 3, but a characteristic feature is that the first receiving electrodes 14a and 14b have sinusoidal shapes, unlike the triangular wave shapes of those in Figure 3. The output from both first receiving electrodes 14a and 14b is subjected to differential calculations in the differential amplifier of the measuring circuit 32.

In the first scale 10 in Figure 4, the A.C. signals supplied to the first transmitting electrodes 12 are divided into eight phases, each of them having an electrical phase difference of 45 degrees.

In a first scale 10 such as that in Figure 4, square-wave signals are selected as the A.C. signals supplied to the first transmitting electrodes 12. Since the first receiving electrodes 14a and 14b have sinusoidal shapes, one can understand that the two output signals of inverse phases which are supplied to the measuring circuit 32 display sinusoidal wave patterns.

The second scale 20 in Figure 5 consists of a scale extended along the entire necessary measuring range, and only a part of it in this embodiment is cut out and shown in the figure.

As is clear from the figure, the pairs of electrodes in the second receiving electrodes 22 and second transmitting electrodes 24 in this embodiment are electrically connected to each other by the coupling electrodes 26, and one can understand that, as a result of this, the A.C. signals received by the second receiving electrodes 22 are shifted by a specific amount of deflection in the second transmitting electrodes 24.

As mentioned above, this deflection D(x) is set so as to give a uniquely specified value for each of the relative displacement positions. In this embodiment, since both electrodes 22 and 24 are positioned at equal intervals at pitches Pr2 and Pt2, respectively, one can understand that the aforesaid deflection D(x) will be a proportional function of the relative displacement distance.

As is shown in Figure 1, the aforesaid deflection D(x) is set at zero at the center of the second scale 20, and its value increases gradually as it approaches both ends of the scale. If the entire length of the second scale 20 is S, the deflection varies from the $-\frac{1}{2}$ value on the minus side of the transmitting wavelength pitch (Wt1) to the $+\frac{1}{2}$ value on the plus side. This is expressed by the following equation:

$$D(x) = (-\tfrac{1}{2} + x/S) \times Wt1$$

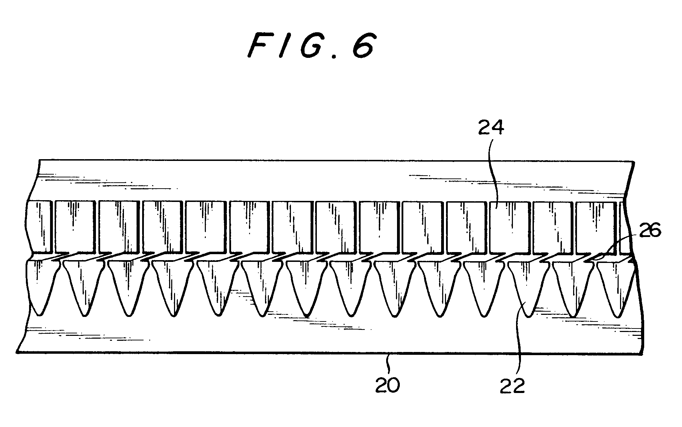

Figure 6 illustrates still another preferable embodiment of the second scale according to this invention. The characteristic feature of this embodiment is the fact that the second receiving electrodes display a half-wave sinusoidal shape, and output of the desired sinusoidal wave pattern can be obtained.

As described above, in this invention, the A.C. signals supplied to the first transmitting electrodes are transmitted to the second receiving electrodes by the capacitive couplings. They are then immediately shifted by the specified amount of deflection and are conducted to the second transmitting electrodes, from which they are returned again to the first receiving electrodes by the capacitive couplings. Their detected output signals contain the deflection information of the second receiving electrodes and second transmitting electrodes on the second scale. In this invention, this deflection always has uniquely specified values for the relative displacement positions within the necessary measuring range. As a result, the detected signals hold sufficient information for calculating the relative displacement positions.

Moreover, this invention makes it possible to supply superior length-measuring devices which can carry out accurate absolute measurements by measuring the aforesaid deflection D(x). These devices do not require zero setting, which was necessary at every measurement in the relative measurements in the past, do not have large power consumption, and have no restrictions on the displacement speed of the scales.

Since in this invention there is only one electrical circuit penetrating through the transducer, as mentioned above, the measuring precision can be improved remarkably without taking into consideration differences such as mechanical error in the electrode positioning or differences in the electrical delay time. Moreover, since measurements are made by one pair of scales, transducers which take up little space and have little power consumption can be supplied.

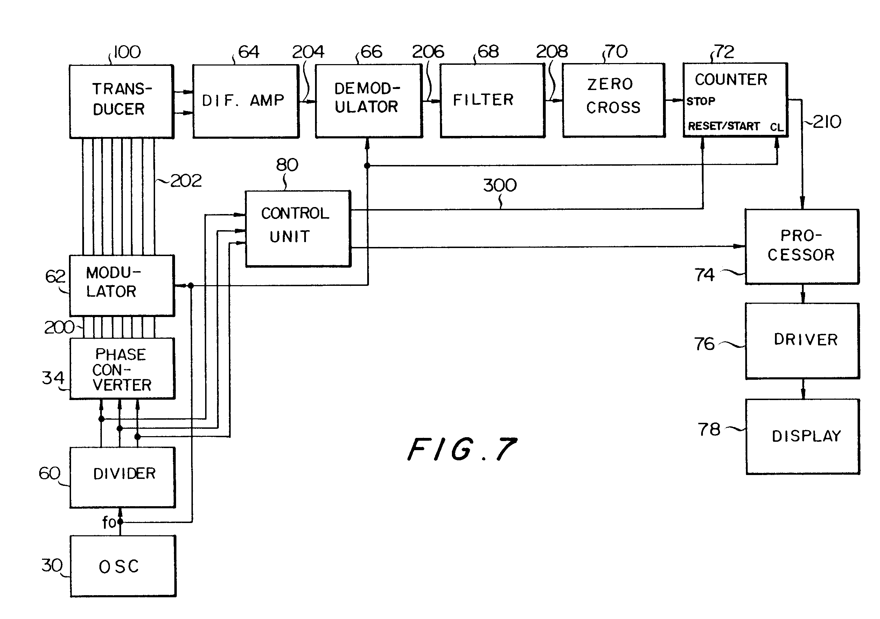

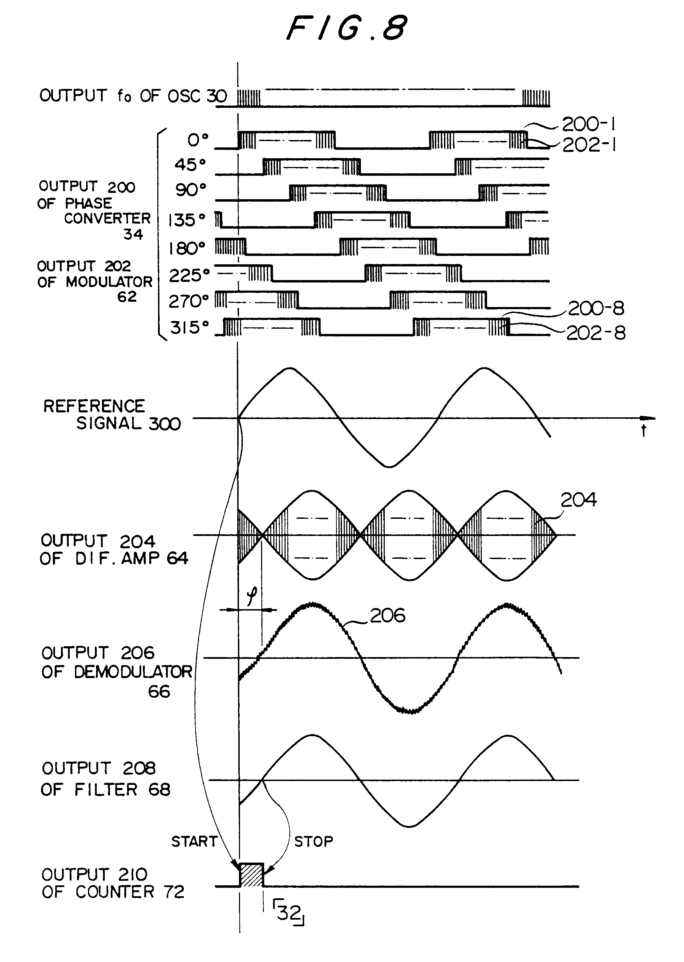

Figure 7 illustrates an embodiment of a length-measuring circuit connected to a transducer according to this invention. Figure 8 gives the wave patterns at its various parts and its timing chart.

The aforesaid transducer according to this invention is shown by numeral 100. A number of A.C. signals with different phases are supplied to its first transmitting electrodes. These A.C. signals are obtained from the oscillator 30. Its oscillated output $f_0$ does not need to be of a very high frequency in this invention. It can be, for example, a relatively low frequency of about 100-200 kHz.

The output $f_0$ of the aforesaid oscillator 30 is subjected to further frequency division by the frequency divider 60, and the resulting signals are supplied to the transducer 100. The signals are also used as synchronizing signals for the modulator and demodulator, and they comprise one of the factors for determining the resolution of the device. However, since this basic frequency, as well as the frequencies of the A.C. signals which have undergone frequency division and are supplied to the first transmitting electrodes, are low, as was mentioned above, this invention has the effect that a sufficient resolution can be obtained with inexpensive devices with a simplified circuit configuration.

The output of the aforesaid frequency divider 60 is further converted by the phase converter 34 into the desired eight A.C. signals 200-1 to 200-8 which each have electrical phase differences of 45 degrees. Therefore, it is desirable for these eight A.C. signals with different phases to be supplied to first transmitting electrodes such as those of Figure 4, as described above.

The aforesaid eight A.C. signals are modulated in the modulator 62 with the output $f_0$ of the aforesaid oscillator 30, and these signals 200-1 to 200-8 are supplied to the first transmitting electrodes 12 of the transducer 100.

After the aforesaid A.C. signals 202 have been supplied to the transducer 100, as mentioned above, they undergo conversion of their signal levels corresponding to the relative displacement positions of the first and second scales. Then they are output as electrical signals from the first receiving electrode. This output is output from the differential amplifier 64 as signal 204. One can understand that this will be a signal with an envelope describing a sinusoidal curve, as is shown in Figure 8.

The output 204 of this differential amplifier 64 will be further demodulated by the synchronizing demodulator 66, and one can understand that its output 206 will have an electrical phase difference $\phi$ in comparison with the reference signal 300 when both scales are at their reference positions. By finding this electrical phase difference $\phi$, one can find an absolute value determined by the relative positions of both scales.

Incidentally, the output 206 of the aforesaid demodulator 66 contains high-frequency components, as is shown in the figure. In this embodiment, these high-frequency components are removed by a filter 68 to obtain a signal 208 from which high-frequency components have been removed.

The aforesaid signal 208 then goes into the zero-crossing circuit 70, where the zero-crossing position of the wave pattern is detected.

In this embodiment, since the aforesaid electrical phase difference $\phi$ is calculated digitally, the device includes a counter 72. In this embodiment, its reset/start signals are synchronously controlled by the trigger signals of the modulator 62 and demodulator 66 and by the control unit 80. Starting of measurements by the device is used as the trigger for the reference signal, and the counter 72 begins its counting operations from this time. The timing of counting by the counter 72 is controlled by the output frequency $f_0$ of the oscillator 30.

Stopping of the counting by the counter 72 is controlled by signals from the aforesaid zero-crossing circuit 70. At the phase $\phi$ position in Figure 8, the aforesaid zero-crossing circuit 70 outputs a stop signal to the counter 72 from the output 208 of the filter 68, and the counting operations of the aforesaid counter 72 stop at this time.

Consequently, the count value of the aforesaid counter 72 will indicate the electrical phase difference by which the reference signal 300 has been shifted by the transducer. As mentioned above, in this invention, this electrical phase difference $\phi$ will correspond to the deflection $D(x)$ between both scales 10 and 20 at the time of measurement, and the output of the aforesaid counter 72 will be processed by the arithmetic unit 74 to convert it to an absolute value.

The output of the arithmetic unit 74, which is controlled by the control unit 80, passes through the display driver 76 and supplies the desired display signal to the display unit 78. The aforesaid measured values are ordinarily displayed digitally.

In this embodiment, the aforesaid display unit 78 may consist of a liquid-crystal display unit embedded and fastened onto the surface of, for example, the vernier scale of calipers. This enables the user to read the measured value of the length easily.

As has been explained above, this invention makes it possible to obtain battery-driven, compact and lightweight capacitance type transducers by which the amount of relative displacement between two structural members which are displaced relatively to each other, ordinarily between a first scale and a second scale, can be measured in absolute values as changes in electrostatic capacity.

Moreover, in this invention, the second receiving electrodes and second transmitting electrodes on the second scale side electrically connected to each other by means of coupling electrodes, and both blocks of electrodes are positioned so that they will have a different deflection along the relative displacement direction and so that these deflections will have uniquely specified values through the entire measuring range. Therefore, by using a single capacitive coupling circuit penetrating through both scales, it is possible to learn the absolute values of the relative displacement positions of both scales from the shift values between the transmitting and receiving signals.

Moreover, since a single capacitive coupling circuit is used, it is possible to reduce remarkably the intrusion of mechanical and electrical errors and to obtain compact transducers with a low power consumption.

A preferable embodiment of this invention in which both coarse and fine measurements are carried out is described below.

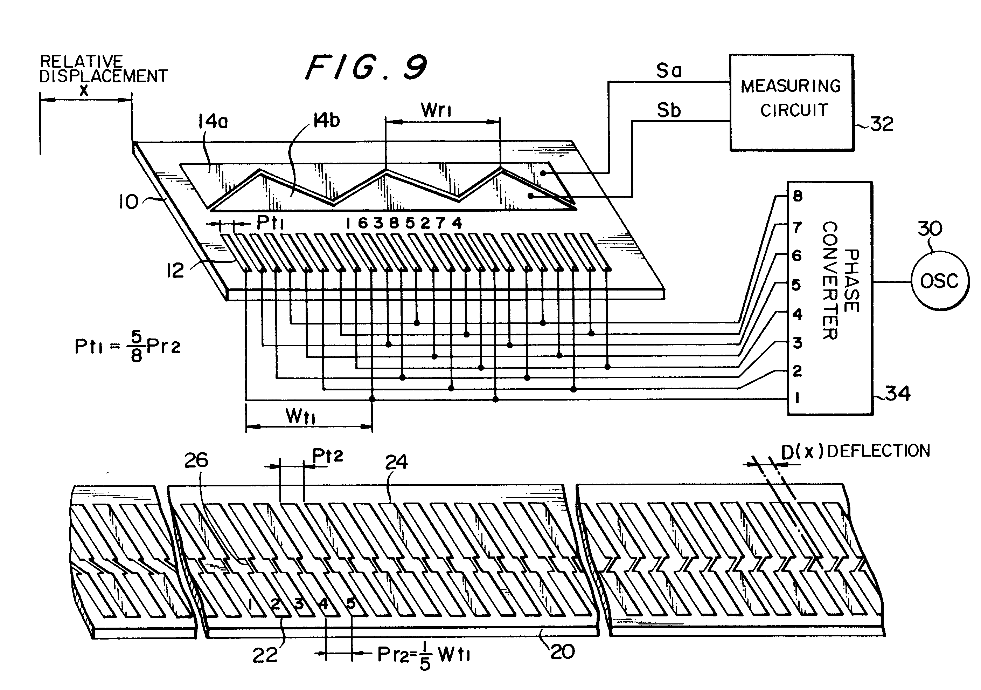

Figure 9 illustrates a preferable embodiment of a capacitive transducer for measuring positions according to this invention. It is suitable for length-measuring devices such as calipers in which the vernier scale is displaced linearly with reference to the regular scale. It includes a first scale 10 and second scale 20. The aforesaid first scale 10 might be incorporated on the vernier scale side of the calipers, and the second scale 20 might be incorporated on the regular scale side.

Both of the aforesaid scales 10 and 20 are positioned close to each other in a manner so that they can be displaced relatively to each other. In Figure 1, the positions on the X axis show the displacement positions of the first scale 10 with reference to the second scale 20.

The first transmitting electrodes 12 are located on the aforesaid first scale 10, and A.C. signals are supplied from the oscillator 30 to these first transmitting electrodes 12.

In the embodiment illustrated in the drawing, the first transmitting electrodes 12 have a configuration of three blocks of first transmitting electrodes each consisting of eight electrodes positioned at equal intervals. Each block is supplied from the aforesaid oscillator 30 with eight different A.C. signals, 1 - 8, each with an electrical phase difference of 45 degrees.

In addition, the first receiving electrodes 14 are also located on the aforesaid first scale 10. In this embodiment, these first receiving electrodes 14 consist of a pair of electrodes 14a and 14b which are arranged inversely to each other with a triangular wave shape having a pitch Wr1. They are arranged close to and in parallel with the aforesaid first transmitting electrodes 12.

The first receiving electrodes 14 are each connected with the measuring circuit 32.

The aforesaid electrodes 12 and 14 are each formed by vapor deposition or other methods on the insulating substrate of the first scale 10, and the electrodes are each put in an electrically insulated state from each other.

## Positioning of Electrodes for Coarse Measurements

The first characteristic feature of the transducers according to this invention is the electrode positioning on the second scale 20 for coarse absolute measurements. As is clear from the figure, the second receiving electrodes 22 and second transmitting electrodes 24 are positioned in rows on the second scale 20. Since the positioning of these electrodes is the same as that in Figure 1, described above, a detailed description of it is omitted.

As is clear from the explanation of Figure 1, in this invention, the second receiving electrodes 22 and second transmitting electrodes 24 on the second scale 20 have a uniquely specified deflection $D(x)$ for each position along the relative deflection direction. Therefore, the electrostatic capacity which is detected when the first scale 10 moves will have a uniquely specified value for each position, and it will be possible to make absolute measurements at any position.

In this invention, the A.C. signals supplied to the first transmitting electrodes 12 are transmitted by the capacitive couplings to the second receiving electrodes 22. They are immediately transmitted to the second transmitting electrodes 24 by the conductance of the coupling electrodes 26, and after having been shifted in the direction of the relative displacement (X axis) are returned again by the capacitive couplings to the first receiving electrodes 14.

Therefore, in this invention, it is possible to detect signals by means of a single electrical system alone through electrodes which have been given the aforesaid different deflections, and coarse absolute measurements can be made with an extremely high precision without any shifting of the signal positions and without any time differences.

## Positioning of Electrodes for Fine Measurements

As is clear from the preceding description, in this invention it is possible to make absolute measurements along the entire measuring range by means of the deflection $D(x)$ between the second receiving electrodes 22 and second transmitting electrodes 24 on the second scale 20. However, the measuring precision becomes progressively coarser as the range measured becomes longer, and one can obtain only coarse absolute measurement signals with the receiving signals obtained in accordance with the preceding description.

A characteristic feature of this invention is the fact that the coarse dimensions in these coarse absolute measurements are next supplied by a second electrical processing to the fine absolute measurements. After the measurements of the approximate positions by means of the aforesaid coarse absolute measurements are completed, it is possible to make fine absolute measurements of these approximate positions merely by electrical processing alone, and accurate absolute measured values with a high resolution are obtained from both measured values.

The fine absolute measurements according to this invention are described below.

A characteristic feature of this invention is the electrode positioning of the first transmitting electrodes 12 and second receiving electrodes 22, as described above. In this embodiment, the first transmitting electrodes 12 form groups each consisting of eight electrodes for the purpose of receiving eight A.C. signals with different phases, the electrical phase difference amounting to 45 degrees.

Therefore, the length of one of these groups forms the transmitting wavelength pitch Wt1, and the pitch between each of these first transmitting electrodes is indicated by Pt1 in the figure. In this embodiment, the second receiving electrodes consist of a number of electrodes 22 with a pitch of equal intervals equal to the length of the aforesaid group of transmitting electrodes, i.e. the transmitting wavelength pitch Wt1 divided by a specified integer. In this embodiment, the number of these divisions is set at 5.

In this embodiment, the integer used tor dividing the aforesaid transmitting wavelength pitch Wt1 was given a value less than the number of first transmitting electrodes 12 within the transmitting wavelength pitch Wt1. This is not an essential item in this invention. However, in actual fact, it is useful in order to increase as much as possible the electrode pitch Pr2 of the second scale 20, which extends over the entire scale length, and in order to simplify working of the electrodes on the second scale.

As a result of the foregoing, the second receiving electrodes 22 are arranged in the sequence 1-2-3-4-5 within the transmitting wavelength pitch Wt1, and the receiving electrode pitch Pr2 will be:

1/5Wt1

On the other hand, while the second receiving electrodes 22 are positioned in this manner, the pitch Pt1 between the aforesaid first transmitting electrodes 12 will be:

5/8Pr2

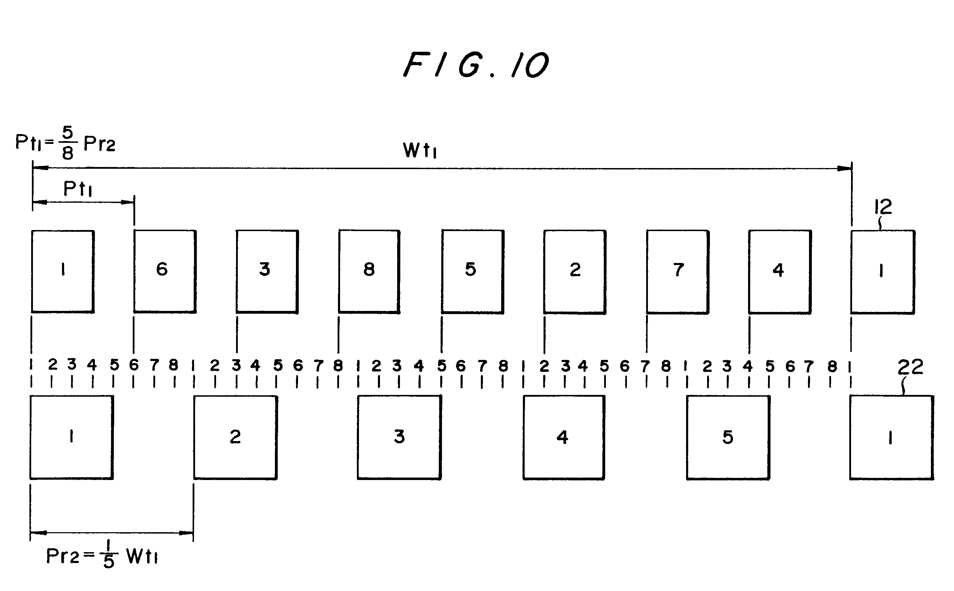

In order to facilitate processing in the measuring circuit 32, the sequence with which the A.C. signals are supplied to them is established as follows, as is clear from the enlarged drawing in Figure 10.

That is, when the receiving electrode pitch Pr2 is divided by the number of transmitting electrodes (8 in this embodiment), A.C. signals corresponding to the divided positions of the aforesaid receiving electrode pitch are supplied to the transmitting electrodes 12. In this embodiment, the A.C. signals are supplied in the following sequence from left to right: 1, 6, 3, 8, 5, 2, 7, 4. Such a supplying sequence is not essential in this invention. However, unlike Figure 27, where the basic principles are illustrated, in cases where the number of second receiving electrodes is less than the number of first transmitting electrodes, it will be useful later in facilitating the processing of the detected signals if they are arranged, as shown in the figure, in the order of the electrical phase differences between both groups of electrodes.

As described above, in this invention the second receiving electrodes 22 are arranged at an equally spaced pitch equal to the transmitting electrode wavelength pitch Wt1 divided by an integer, as is clear from the embodiment in Figure 9. Therefore, positions can be detected with a fine scale precision equal to the receiving electrode pitch Pr2 divided by the number of transmitting electrodes within the group of first transmitting electrodes 22, that is, 1/8.

Consequently, in this invention, the first coarse measurements are carried out with the desired measuring positions established on the first scale 10 and second scale 20, as is shown in the electrical circuits described below, in order to obtain accurately the approximate current scale positions. Next, the precise positions of these dimensions are measured finely by switching over the electrical circuits. It is then possible to measure the desired scale relative positions as absolute values by adding both measured values. The two electrical measuring processes described above are performed at a high speed, with both scales 10 and 20 held in exactly the same state. In actual practice, at the instant, for example, when the user presses the Measure button, the results of the aforesaid two measurements and of the addition are displayed on the display.

As described above, this invention has the advantage that the same electrodes are used for both fine measurements and the aforesaid coarse measurements. Since it is not necessary to position dedicated electrodes for each of the measurements, high-precision measurements can be made over a long measuring range with a simplified electrode positioning.

The embodiments illustrated in Figures 2 and 3 are also useful in the first scale for the aforesaid coarse measurements.

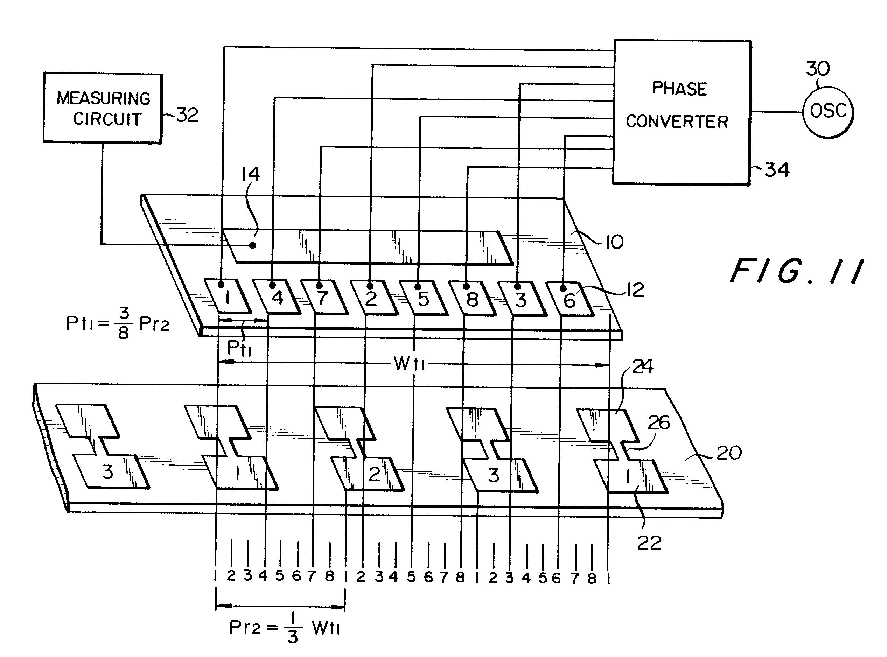

Figure 11 illustrates another combination of transmitting and receiving electrodes for fine measurements in this invention.

In the embodiment in Figure 11, the first receiving electrode 12 receives eight A.C. signals with different phases, just as in Figure 9. The transmitting wavelength pitch is indicated by Wt1, and the electrode pitch is indicated by Pt1. The second receiving electrodes 22 in this embodiment have a configuration in which the aforesaid transmitting wavelength pitch Wt1 is divided by 3. As a result, the receiving electrode pitch Pr2 is:

1/3Wt1

In this embodiment also, the sequence with which the A.C. signals are supplied to the transmitting electrodes 12 is determined by positions obtained by dividing the receiving electrode pitch Pr2 by eight, the number of the transmitting signals. In the figure, the following sequence is set from left to right: 1, 4, 7, 2, 5, 8, 3, 6.

In the embodiment in Figure 11, the transmitting electrode pitch Pt1 is set at:

3/8 Pr2

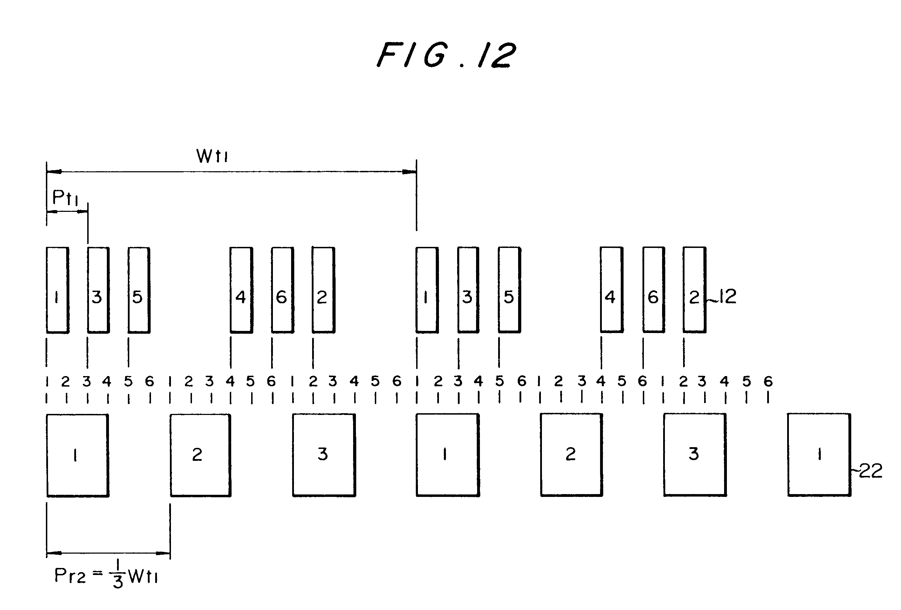

Figure 12 illustrates still another embodiment for fine measurements according to this invention. The characteristic feature of this embodiment is the fact that the first transmitting electrodes 12 are positioned at unequal intervals.

That is, in the embodiment in Figure 12 the transmitting wavelength pitch Wt1 is set for a block of six first transmitting electrodes, but the electrode pitch Pt1 within each group is not uniform, and each group is divided into subgroups each consisting of three electrodes.

Nevertheless, even in such a device, good position detecting operations can be carried out without violating the basic principles of this invention as long as the second receiving electrodes 22 are positioned in a row with equal intervals.

Of course, even in such an arrangement with unequal intervals, the sequence with which the A.C. signals are supplied is determined, as described above, by the positions obtained by dividing the receiving electrode pitch Pr2 by the number of transmitting electrodes. In this embodiment, the following sequence is set up: 1, 3, 5, 4, 6, 2.

In this embodiment, as is shown in the figure, the following receiving electrode pitch Pr2 is selected:

1/3Wt1

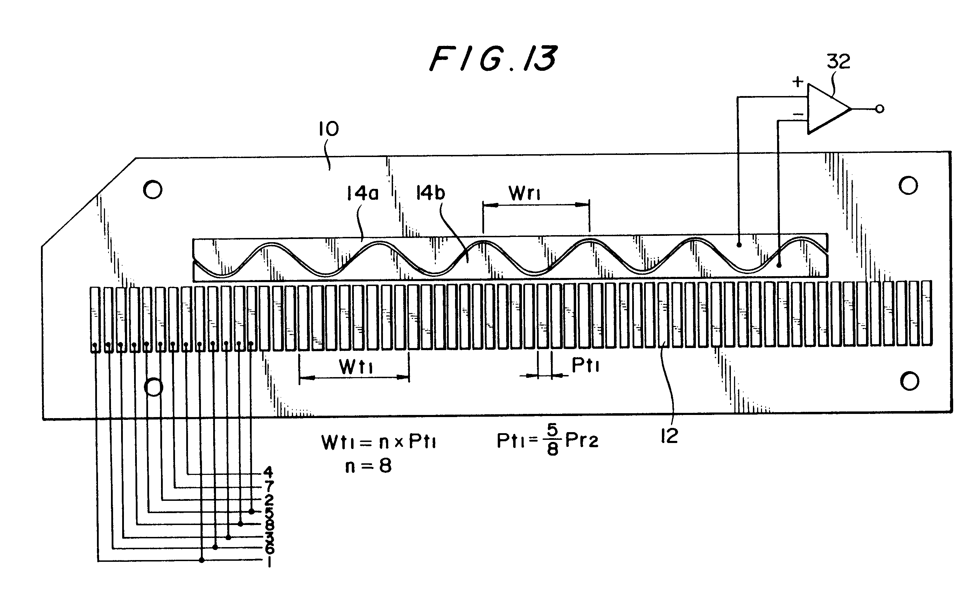

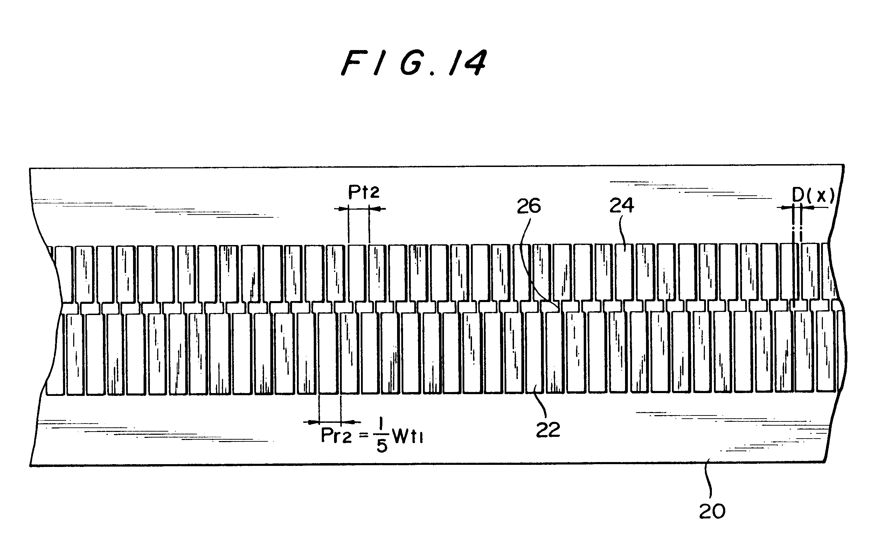

The first scale 10 and second scale 20 of a transducer following this invention are shown in concrete details in Figures 13 and 14, respectively. They have electrode arrangements similar to those shown above in Figures 4 and 5, but the sequence of the A.C. signals supplied to the first transmitting electrodes 12 has been changed for the purpose of performing fine measurements.

The second receiving electrodes 22 shown in Figure 14 consist of a number of electrodes with an equally spaced pitch equal to the transmitting wavelength pitch Wt1 of the aforesaid first transmitting electrodes 12 divided by five. Their electrode positioning for performing fine absolute measurements is similar to that in Figure 9.

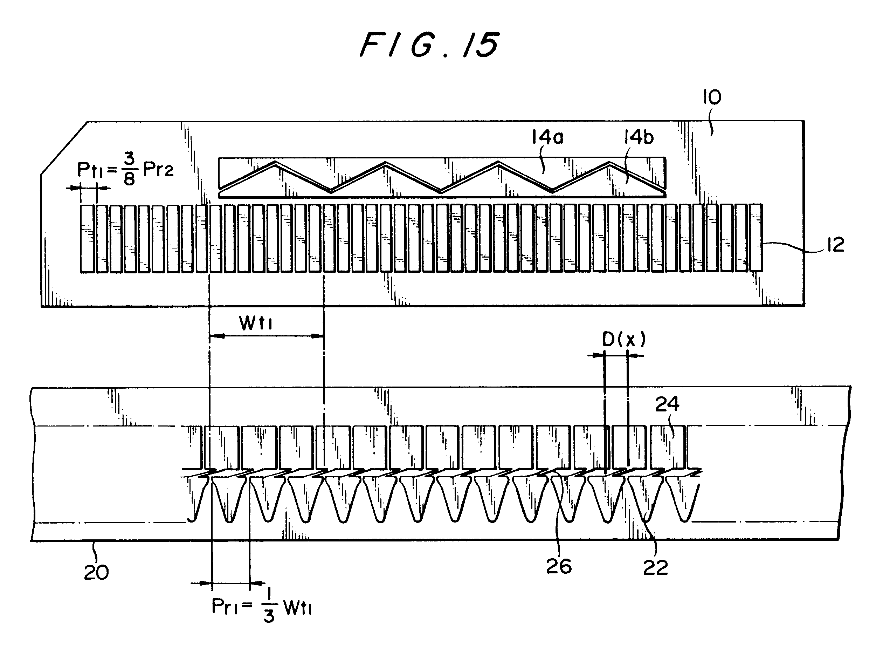

Figure 15 shows still another preferable embodiment of a transducer according to this invention. The characteristic feature of this embodiment is the fact that the second receiving electrodes 22 display a half-wave sinusoidal shape, and output of the desired sinusoidal wave pattern can be obtained.

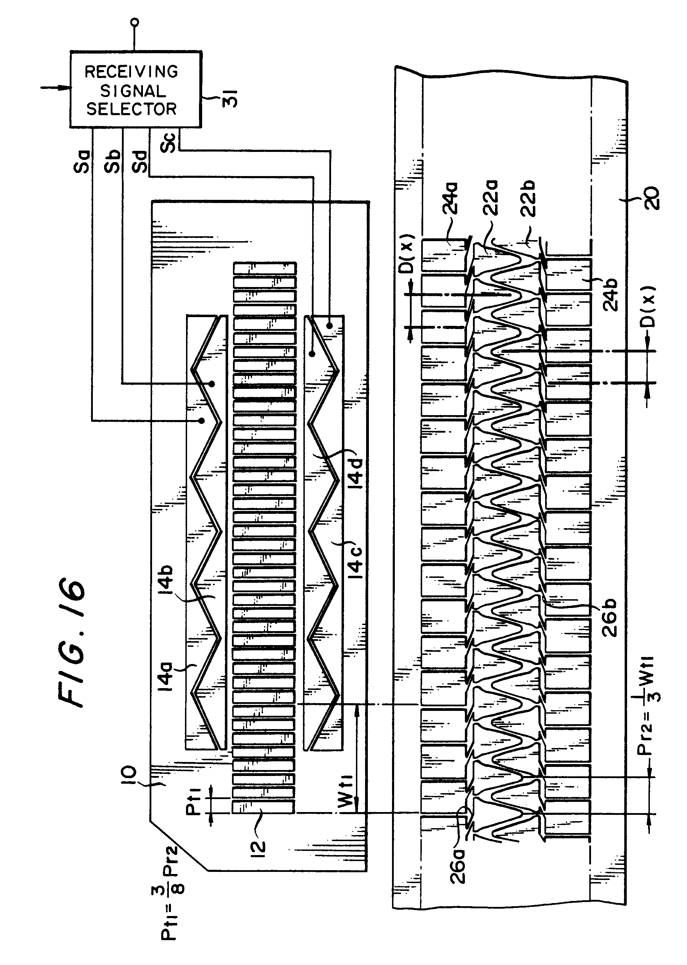

Figure 16 shows still another preferable embodiment of a transducer according to this invention. The characteristic feature of this embodiment is the fact that two sets of the second receiving electrodes 22 and second transmitting electrodes 24 provided on the second scale 20 in Figure 15, described above, are provided symmetrically to each other, and two sets of the first receiving electrodes 14 on the first scale 10 are also provided, corresponding to them.

The other basic electrode arrangements are extremely similar to that in the embodiment in Figure 15. The second receiving electrodes 22 each display a half-wave sinusoidal shape.

The second receiving electrodes 22 have an equally space pitch equal to the transmitting wavelength pitch Wt1 of the first transmitting electrodes 12 divided by three.

In Figure 16, the second receiving electrodes 22 consist of two electrodes 22a and 22b positioned so that their positions are reversed to each other with a difference of 180 degrees. They are each coupled with electrodes 22a and 22b by means of coupling electrodes 26a and 26b, each with the same deflection D(x) in the same directions.

A pair of first receiving electrodes 14a and 14b, which have a triangular wave shape and are coupled capacitively with the aforesaid second transmitting electrodes 20a, are also provided on the first scale 10 side in this embodiment, corresponding to the aforesaid second scale 20 side. Similarly, a pair of first receiving electrodes 14c and 14d, which are capacitively coupled, are provided facing the second transmitting electrodes 24b.

Consequently, in this embodiment, the receiving signals Sa, Sb, Sc and Sd obtained from each of the aforesaid first receiving electrodes 14 are subjected to any addition or differential calculations in the arithmetical selector 31, and extremely high-precision signals can be output even should some of the electrodes happen to be soiled.

Switching of the aforesaid arithmetical selector 31 is performed by means of the measuring circuit, described below.

As described above, in this invention, the A.C. signals supplied to the first transmitting electrodes are transmitted to the second receiving electrodes by the capacitive couplings. They are immediately shifted by the specified amount of deflection and conducted to the second transmitting electrodes. Then they are returned again by the capacitive couplings to the first receiving electrodes. These detected output signals contain deflection information for the second receiving electrodes and second transmitting electrodes on the second scale. In this invention, this deflection always has a uniquely specified value for the relative displacement positions within the necessary measuring range. As a result, the detected signals will hold sufficient information for calculating the relative displacement positions.

Moreover, this invention makes it possible to make accurate rough absolute measurements by measuring the aforesaid deflection D(x) and to provide superior length-measuring devices which do not require zero setting, which was necessary at every measurement in the relative measurements in the past, do not have large power consumption, and have no restrictions on the displacement speed of the scales.

Since in this invention there is only one electrical circuit penetrating through the transducer, as mentioned above, the measuring precision can be improved remarkably without taking into consideration differences such as mechanical error in the electrode positioning or differences in the electrical delay time. Moreover, since measurements are made by one pair of scales, transducers which take up little space and have little power consumption can be supplied.

Furthermore, in this invention, the coarse absolute values are measured by using the aforesaid deflection D(x) as described above, and the fine absolute positions in each of the coarse measurements at the coarse absolute positions within the total scale length found coarsely at the aforesaid coarse measurements on the basis of the specified electrode pitch set between the first transmitting electrodes 12 and the second receiving electrodes 22 are next obtained by switching to a different electrical circuit. It is possible to obtain extremely accurate fine absolute measured values within the entire measuring range by adding together both of these measured values which have been found.

Measuring Circuit

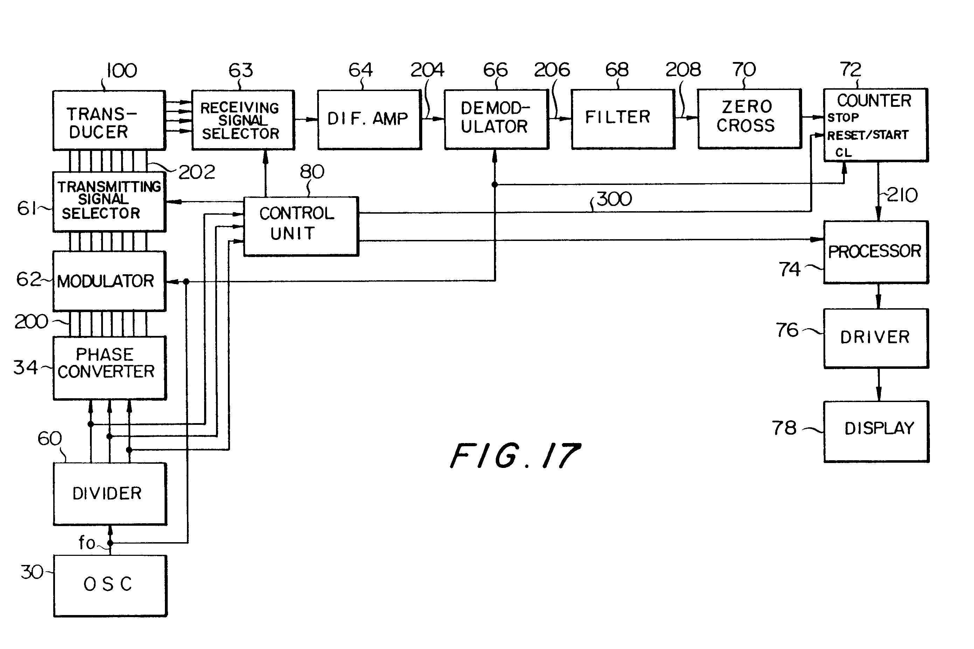

Figure 17 illustrates an embodiment of the measuring circuit connected to the aforesaid transducer according to this invention. The configuration of this circuit is more or less the same as that of Figure 7, described above, but a receiving signal selector 61 has been provided for switching between coarse measurements and fine measurements.

Consequently, the eight A.C. signals are modulated in the modulator 62 with the output $f_0$ of the aforesaid oscillator 30, and these signals 200-1 - 200-8 are transmitted through the receiving signal selector 61 and supplied to the first transmitting electrodes 12 of the transducer 100.

Since the basic operations of this circuit have been explained in Figures 7 and 8, the details are omitted here, and only the switching operations between coarse and fine measurements are explained below.

That is, as is clear from the explanations of Figures 7 and 8, the count value obtained by the aforesaid counter 72 will indicate the electrical phase differences when the reference signal 300 has been shifted by the transducer. As mentioned above, in this invention this electrical phase difference $\phi$ will indicate the signals of the coarse and fine absolute values for both measurements of the coarse absolute values and measurements of the fine absolute values.

That is, in measurements of the coarse absolute values, in accordance with the deflection D(x) between both scales 10 and 20, the output of the aforesaid counter 72 will be processed by the arithmetic unit 74 to convert it to absolute values.

On the other hand, in measurements of the fine absolute values, as described above, the absolute positions between the coarse measurements found by the electrode pattern beats between the first transmitting electrodes 12 and second receiving electrodes 12 will be found accurately as an electrical phase difference $\phi$. The arithmetic unit 74 can obtain the desired high-precision absolute value by adding this fine absolute value to the aforesaid coarse absolute value.

In the aforesaid coarse measurements and fine measurements, the transmitting phases and receiving phases are selected at will by switching them to the optimal values. This selection is performed by the control unit 80, which instructs the aforesaid transmitting signal selector 61 and receiving signal selector 63 to switch over to the given phases.

For example, on the transmitting side, when making ordinary coarse absolute measurements, transmitting signals of phases 1, 2, 3, 4, 5, 6, 7 and 8 are supplied repeatedly in that sequence to the first transmitting electrodes 12 following the sequence in which the electrodes are aligned in a row. They give the receiving signals a displacement corresponding to the coarse scale position at the aforesaid deflection D(x) on the second scale 20 side and cause the desired coarse absolute values to be measured.

On the other hand, when making fine measurements, as is shown by the state of connections in Figures 9 and 10, signals of phases 1, 6, 3, 8, 5, 2, 7 and 4 are supplied repeatedly in that sequence to the first transmitting electrodes 12 following the sequence in which they are aligned in a row. Fine absolute measurements can be made by means of the pattern beats of these first transmitting electrodes 12 and second receiving electrodes 22.

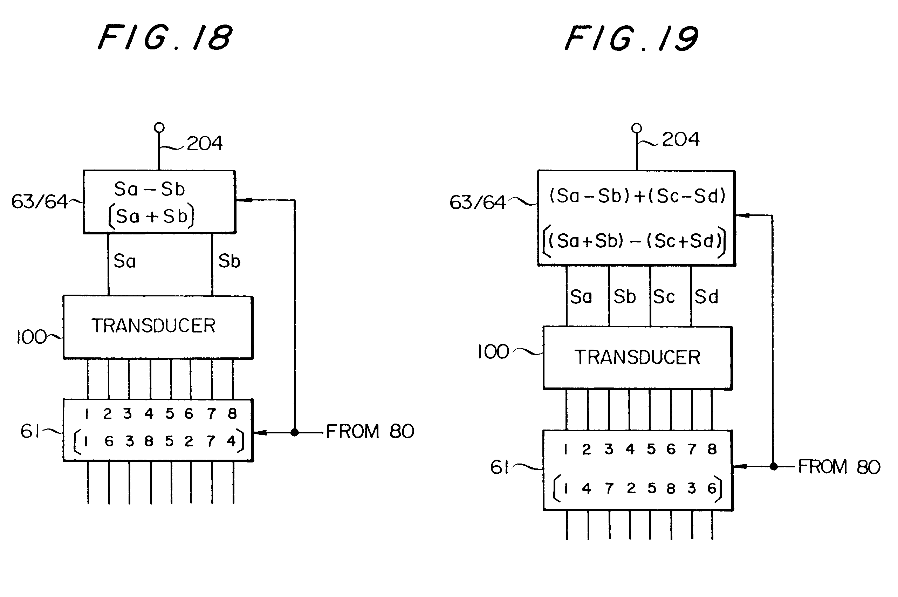

Figure 18 illustrates how the coarse and fine transmitting and receiving signals are selected in the aforesaid embodiment in Figure 1.

As was mentioned above, the first measurements made are the coarse measurements. At this time, the control unit 80 sets the transmitting signal selector 61 at phases 1, 2, 3, 4, 5, 6, 7 and 8, as shown in the figure. The receiving signals Sa and Sb obtained from the transducer 100 at this time are output as Sa-Sb. One can understand that during coarse measurements the pair of first receiving electrodes 14 are connected in a differential state.

On the other hand, the state indicated by the square brackets in Figure 18 is the fine measurement state. At this time, the transmitting phases are changed to 1, 6, 3, 8, 5, 2, 7 and 4, and the pattern beats between the transmitting and receiving electrodes are obtained. The receiving signals are also switched to Sa + Sb, and the pair of first receiving electrodes 14 are treated as if they were single electrically connected electrodes.

The control unit 80, as described above, first selects coarse measurements and next selects fine measurements. These sequences are prestored in the unit's memory. The user needs only to switch on, for example, the Measure button on the measuring device. Then the aforesaid series of coarse and fine sequences will be carried out automatically within an extremely short time, and the user needs only to be aware of the results as the measured values on the display 78.

Figure 19 illustrates another suitable way of selecting the transmitting and receiving signals in the transducer shown in Figure 16.

In this embodiment, as is shown in the figure, during the coarse measurements which are carried out first, the transmitting signal phases 1, 2, 3, 4, 5, 6, 7 and 8 are selected. At this time, since the receiving signals in this embodiment include the signals Sa, Sb, Sc and Sd from the two pairs of first receiving electrodes 14a, 14b, 14c and 14d, the total of their differential signals will be obtained.

That is, the receiving signal output in coarse measurements will be (Sa-Sb) + (Sc-Sd).

Next, during the fine measurements, the transmitting signal phases are switched to 1, 4, 7, 2, 5, 8, 3 and 6, and at the same time the difference between the two added signals of the receiving signals will be taken. That is, the signals will be switched to (Sa + Sb) - (Sc + Sd).

Therefore, since in the transducer of the embodiment shown in Figures 16 and 19 the measured values are obtained by using two signals to supplement each other, the measuring precision can be improved to a remarkable degree, and the errors can be minimized even in cases where, for example, the scales are soiled.

The output of the arithmetic unit 74, which is controlled by the control unit 80, supplies the desired display signals through the display driver 76 to the display 78. The aforesaid measured values are ordinarily displayed digitally.

In this embodiment, the aforesaid display 78 may consist of a liquid-crystal display unit embedded and fastened onto the surface of, for example, the vernier scale of calipers. This enables the user to read the measured value of the length easily.

Other Measuring Circuits

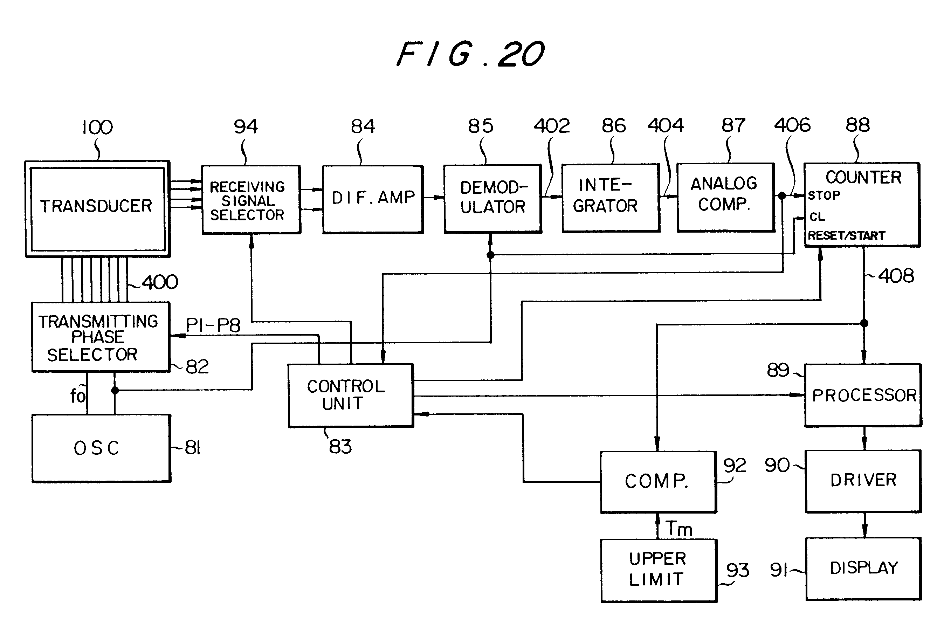

Figure 20 shows another preferable embodiment of a measuring circuit suitable for position-measuring transducers according to this invention.

In the figure, the transducer is shown by the numeral 100. As is clear from the preceding description, this transducer 100 has a first scale and a second scale which are displaced relatively to each other. The first transmitting electrodes are located on the aforesaid first scale, and the second receiving electrodes are located on the second scale. Both of the electrodes are coupled with each other capacitively, and the electrostatic capacity value changes according to the relative displacement positions of both scales.

The first transmitting electrodes of the aforesaid transducer 100 are supplied from the transmitting circuit with a number of A.C. signals which are modulated with different phases. The transmitting circuit in this embodiment contains an oscillator 81 and a transmitting phase selector circuit 82. It can supply the transmitting electrodes with A.C. signals modulated with any specific phase needed for the coarse measurements and fine measurements selected by the control unit 83.

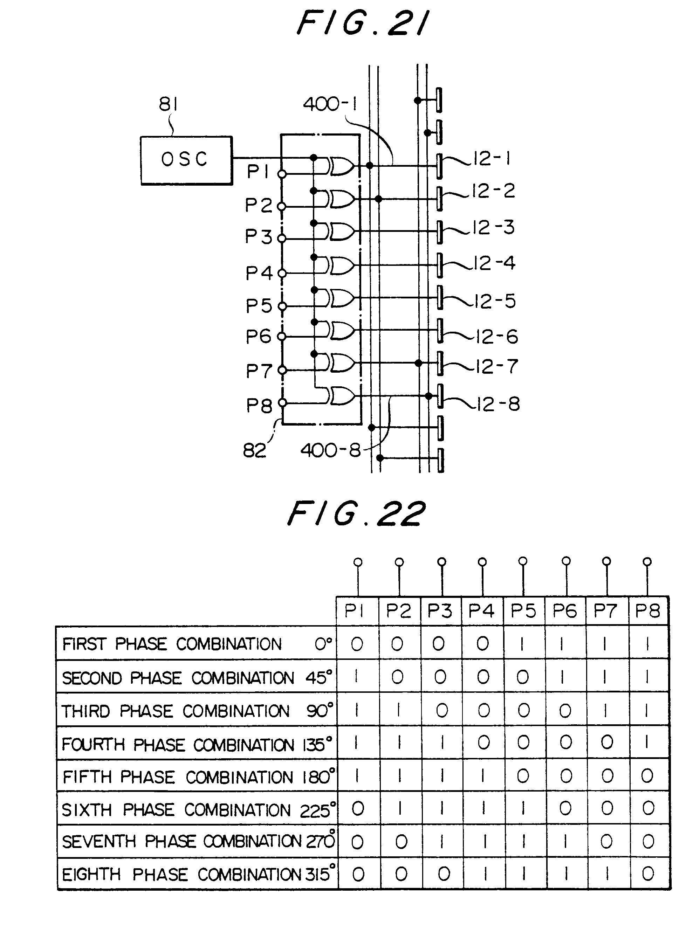

Figure 21 illustrates an embodiment of a transmitting circuit in this embodiment. Signals with eight transmitting phases differing by 45 degrees are modulated with the high-frequency signals of the oscillator 81, and this output is supplied as a group to the transmitting electrodes 12-1 - 12-8.

The high-frequency signals of the oscillator 81 in this embodiment may be A.C. signals, for example of about 100-200 kHz. They are subjected to modulation by eight exclusive OR gates provided in the transmitting phase selector circuit 82.

Selection signals P1 - P8 are supplied from the control unit 83 to each of the exclusive OR gates in the aforesaid transmitting phase selector circuit 82. In this embodiment, the combination of the aforesaid control signals P is set at eight different phases, from the first phase combination to the eight phase combination, as is shown in Figure 22. The control unit 83 can specify selectively any of these eight phase combinations at random.

In actual fact, the aforesaid eight combinations consist of signals giving an electrical phase difference of 45 degrees to the signals received by the transducer 100.

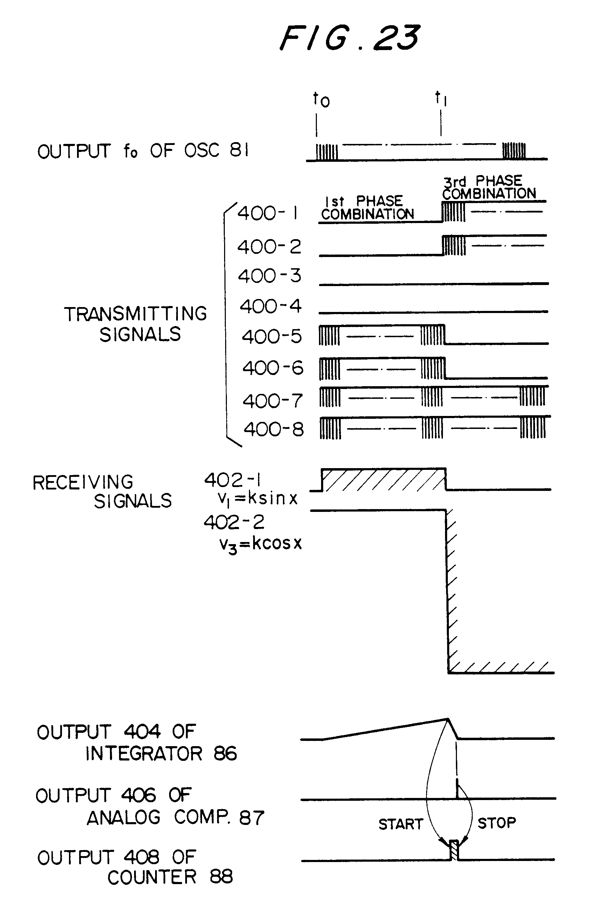

Figure 23 gives diagrams explaining the operations of this embodiment. Its overall operations will be described below, but the output $f_0$ of the aforesaid oscillator 81 is shown in the figure as trains of clock pulses, and signals of the first phase combination and third phase combination are shown in Figure 23 as the transmitting signals 400.

Let us take the first phase combination as an example in our explanation. As is clear from Figure 22, when the transmitting phase selector circuit 82 is outputting the first phase combination, P1 - P4 are 0, and P5 - P8 are all 1. As a result, the transmitting signals 400 are shown as signals output as clock pulses at 400-5 - 400-8.

If the actual transmitting phase selector circuit 82 shown in Figure 21 is used, since the circuit consists of exclusive OR gates, transmitting signals 400-1 - 400-4 in the first phase combination will, accurately speaking, contain clock pulses with electrical phase differences of 180 degrees, but indication of the clock pulses for the reverse phase signals is omitted in Figure 23 in order to make the explanation easier to understand.

Similarly, the third phase combination can be considered in terms of signals with electrical phase differences of 90 degrees on the receiving side, as compared with the first phase combination. In this case, clock pulses, while 400-3 - 400-6 are supplied to the first transmitting electrodes 12 of the transducer 100 as signals without clock pulses (reversed signals).

This is not shown in detail in the figures, but eight transmitting signals 400 are combined and supplied to the first transmitting electrodes 12 similarly also in the other transmitting phase combinations shown in Figure 22. Thus, the transmitting circuit is able to give the transducer 100 transmitting signals of any of the selected eight different phase combinations shown in Figure 22.

Receiving signals corresponding to the aforesaid transmitting signals are output from the receiving electrodes of the aforesaid transducer 100. In this embodiment, two sets of second receiving electrodes of the transducer 100 are provided in mutually reversed shapes, the outputs of both of them are subjected to differential calculation and amplification by the receiving signal selector circuit 94 and the differential amplifier 84, and receiving signals with a sufficiently large sensitivity are obtained.

As for the output of the differential amplifier 84, its receiving signal level is determined by the electrostatic capacity, which is determined by the relative positions between the first scale and second scale of the transducer 100, i.e. by the relative displacement positions of the first transmitting electrodes and the second receiving electrodes. Since its output has wave patterns modulated with the high-frequency signals, it is synchronized and demodulated by the synchronizing demodulator 85, as is shown in this embodiment. The output $f_0$ of the oscillator 81 is supplied to this demodulator 85.

The output 402 of the synchronizing demodulator 85 is determined by the transmitting phase of the transmitting circuit and the positions of the transmitting and receiving electrodes of the transducer 100. Receiving signals 402-1 and 402-2 are shown in Figure 23 as examples of this.

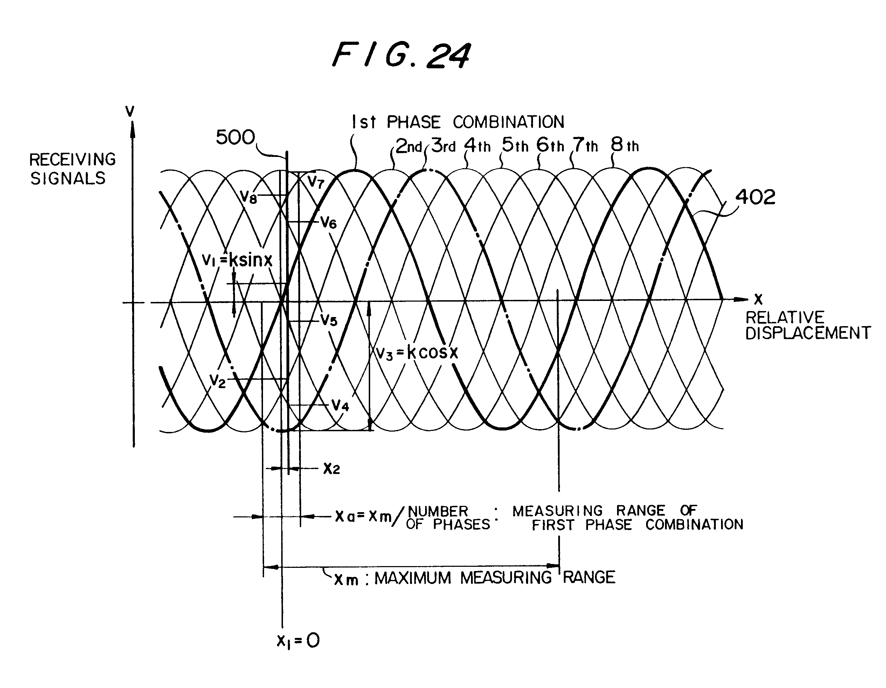

Figure 24 illustrates how the receiving signals V differ as a result of the transmitting phase combinations on the transmitting side with respect to the relative displacement distance X of the transmitting and receiving electrodes in the aforesaid transducer 100. The variations shown by the sinusoidal wave patterns in the figure correspond to changes of the eight transmitting phase combinations from the first phase combination to the eighth phase combination or to changes in the relative displacement distance X between both electrodes.

The wave patterns of these changes of the receiving signals V are determined by the shapes of the electrodes in the transducer 100. The shape of the second receiving electrodes selected in this embodiment is one in which sinusoidal changes are obtained in response to the relative displacement distance X when the relative positions of the first transmitting electrodes and second receiving electrodes have changed. It is also possible to select a shape of the second receiving electrodes in which other shapes of changing signals would be obtained, for example triangular shaped signals.

In Figure 24, if we focus our attention, for example, only on the transmitting position of the first phase combination, the receiving signals 402 following the thick line in the figure will be output from the demodulator 85 when the relative displacement distance X of the transducer 100 has changed.

In the figure, when the receiving signals V of the first phase combination are 0, this is assumed to correspond to a relative displacement distance $X_1 = 0$ (500) position. When the relative displacement distance X of both electrodes or both scales has changed from this reference position, the signals 402 received from the demodulator 85 will vary, following the sine wave of the first phase combination in Figure 24.

In Figure 24, if the phase combination transmitted from the transmitting circuit changes, different receiving signals V will necessarily be received from the transducer located at the same relative displacement distance X. For example, if the transmitting phase is changed while this transducer 100 remains fixed at the $X_2$ scale position 500, shown as an example, one can understand that the receiving signal V at this time will reach the level of the transmitting phase combination specified on the line at a distance $X_2$ from $X_1$.

That is, at the relative displacement distance $X_2$ (the 500 position), signal V1 will be obtained if a transmitting phase of the first phase combination is supplied to the transmitting electrodes 12. Similarly, signal V2 will be obtained for the second transmitting phase, signal V3 will be obtained for the third transmitting phase, and the signals indicated by V4, V5, V6. V7 and V8 will be obtained for the fourth, fifth, sixth, seventh and eight transmitting phases, respectively.

Consequently, one can understand that, in this circuit, the receiving signals V obtained will take eight different values if the transmitting phase combinations are changed in eight different ways while the relative displacement distance X remains fixed at the relative measuring positions of the first scale and second scale determined on the transducer 100 (for example, at $X_2$).

In this circuit, if a specific transmitting phase combination is selected for the relative displacement distance X, one can understand that the receiving signals V obtained at this time will be those specified within wavelength 1 on the receiving side, i.e., within $X_m$, taking into consideration the gradient of the receiving signals V, and that this will form the maximum measuring range of each phase combination. Thus, it will be clear that changes of the relative displacement distance X within this maximum measuring range $X_m$ will be obtained by processing of the receiving signals V. In other words, it is clear that, if there have been relative displacements exceeding this maximum measuring range $X_m$, the receiving wavelength will again repeat in the sinusoidal shape, so that it will be difficult to distinguish between both of them.

In this invention, the desired measured values are obtained by adding the coarse measurements and the fine measurements as described above. During coarse measurements, the aforesaid maximum measuring range $X_m$ is set so that it will include the entire scale length, and during fine measurements the aforesaid maximum measuring range $X_m$ is set so that it will include the relative displacement distance between the coarse measurements.

In this circuit, this maximum measuring range $X_m$ is divided by the number of transmitting phase combinations, and the transmitting signals for each of the transmitting phase combinations are assigned to each of these divided measuring ranges. In this embodiment, eight transmitting phase combinations are selected. Therefore, the aforesaid maximum measuring range $X_m$ is divided into eight parts, and the displacement distance of each forms the measuring range of each phase combination. In Figure 24, $X_a$ indicates the measuring range of the first phase combination for transmissions of the first phase combination.

These measurement ranges are each positioned centering around the position where the received signals V obtained in response to transmissions of the first phase combination cross zero, i.e. the $X_1 = 0$ position for the first phase shown in the figure. The ranges are each positioned so as to cover 45 degrees divided by half, that is 22.5 degrees on both sides of the $X_1 = 0$ position.

Consequently, the device is configured so that each phase combination will obtain a measurement range of 45 degrees and it will be possible to measure the maximum measuring range $X_m$ by these eight phase combinations.

Once it has been understood from the foregoing that the positions within the measuring range shown by $X_a$ in Figure 24 are measured by the first phase combination, it will also be understood that the other phases will be able to measure other ranges in a similar manner. In the following we shall explain the measuring/processing circuit and its operations with reference to the first phase combination.

In this circuit, once a transmitting phase combination has been determined, the aforesaid measurement range also will necessarily be determined. For example, if the first phase combination is selected, its reference position will be determined as $X_1 = 0$. If we find the displacement within this measurement range (i.e., $X_2$ in Figure 24), by adding the aforesaid $X_1$ and $X_2$ we will be able to find the relative displacement distance X determined by the current transducer 100.

The characteristic feature in this circuit is the fact that, in order to determine the aforesaid $X_2$, transmission signals having two different transmitting phase combinations are supplied to the first transmitting electrodes, and the relative displace-

ment distance $X_2$ is found by simple processing from the two receiving signals obtained at this time.

The desired measured value is obtained in this circuit by subjecting the two aforesaid receiving signals to positive integration, and then to inverse integration, by an integrator.

In this embodiment, the aforesaid integrator is indicated by numeral 86. It positively integrates for a definite time the analog output 402 of the demodulator 85; then it inversely integrates the receiving signals obtained at a different transmitting phase.

In order to simplify the explanation, it is assumed that there is an electrical phase difference of 90 degrees at the receiving side between the transmitting phase combination of the signals subjected to the second inverse integration and those subjected to the first positive integration in this embodiment.

If there is a relative displacement distance shown by numeral 500 in Figure 24, the transmitting electrodes of the transducer 100 are first excited by the first phase combination. The signal V received at this time will be a sinusoidal function of the relative displacement distance X:

$$V1 = k \sin x$$

Here, k is a constant.

At the state of this first transmitting phase combination, the integrator 86 will first perform positive integration for a definite time, and the integral value Vi will be obtained.

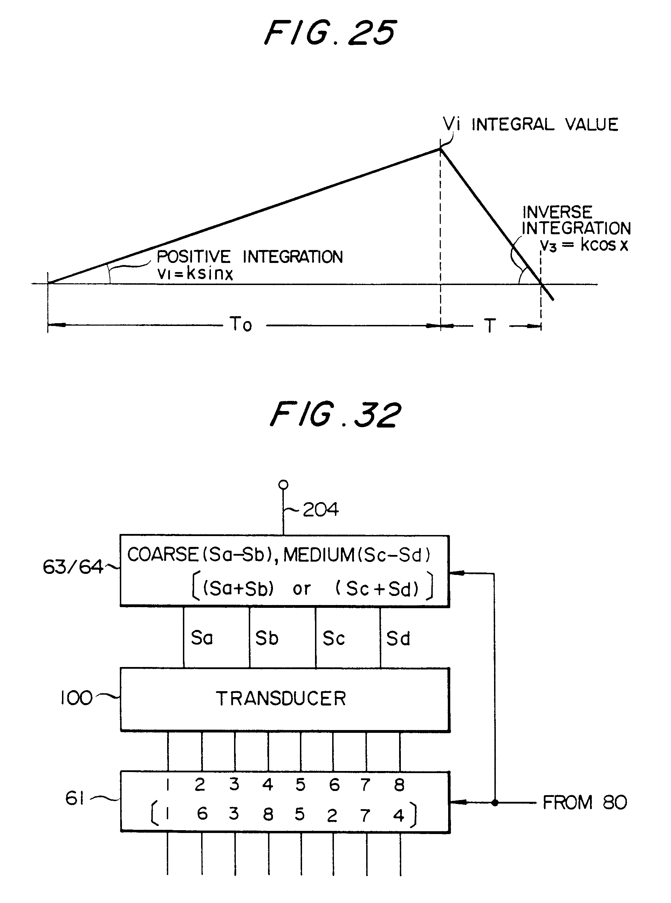

This integrating operation is plotted in Figure 25. The positive integrating time $T_0$ is set at any specific time. The value of this specific time $T_0$ is predetermined in accordance with the resolution of the circuit.

As for the integral gradient during positive integration in Figure 25, it is understood from Figure 24 that the received signal V is

$$V1 = k \sin x$$

Therefore, the integral value Vi after the passage of the definite time in Figure 25 will be:

$$Vi \simeq T_0 \ k \sin x \qquad (1)$$

When the aforesaid positive integration is completed, the second transmission takes place from the transmitting circuit with a transmitting phase combination having an electrical phase difference of 90 degrees. At this time, the relative position of the transducer 100 is unchanged, and it remains stationary at position 500 in Figure 24. Therefore, the receiving signal V obtained at this time will be that obtained from the wave patterns of the third phase combination, i.e. V3. One can understand that this V3 is the cosine function of the relative displacement distance X:

$$V3 = k \cos x$$

Consequently, the integrator 86 will perform inverse integration of the signal $V3 = k \cos x$ received at the state of this second transmitting phase combination, and the aforesaid integral value Vi will be inversely integrated, as shown in Figure 25, by the integral gradient of

$$V3 = -k \cos x$$

Therefore, the output 404 of the integrator 86, i.e. the integral value Vi, will assume a value of zero as a result of this inverse integration, and this zero value will be detected by the analog comparator circuit 87.

In this embodiment, the analog comparator circuit 87 will produce output 406 when the output 404 of the aforesaid integrator 86 has become zero.

The time until the output 404 (Vi) of the integrator 86 reaches zero is shown by T in Figure 25. As is clear from the figure, the following relationship applies in this inverse integration:

$$Vi \simeq -Tk \cos x \qquad (2)$$

Consequently, the following relationship applies approximately as a result of the aforesaid positive integration and inverse integration:

$$Vi = T_0 \ k \sin x = -T \ k \cos x \qquad (3)$$

Therefore, it follows that:

$$T = -T_0 \ \sin x/\cos x \qquad (4)$$

Since

$$\sin x/\cos x = \tan x,$$

the following is obtained:

$$T = -T_0 \ \tan x \qquad (5)$$

As was mentioned before, the measuring range for each transmitting phase combination is assigned here to the vicinity of the zero position of the receiving signals shown in Figure 24, that is, to a range of ±22.5 degrees. On account of this, within each measuring range the wave patterns of the receiving signals will be approximated in a more or less linear manner, and the following relationship will apply in regions with such small phase

angles:

$$\tan x \simeq x$$

Therefore, the aforesaid equation (5) will assume the following form:

$$T = -T_0 x \qquad (6)$$

and the following approximate equation will be obtained:

$$X = -T/T_0 \qquad (7)$$

Here $T_0$ is a constant value. Therefore, one can understand that, if the aforesaid inverse integration time T is found, one can find the relative displacement distance X within the measuring range ($X_2$ in this case) by simple arithmetical processing.

In this embodiment, this arithmetical processing is performed by a counter 88. The counter 88 is started by signals from the control unit 83 at the beginning of the aforesaid inverse integration and is stopped by the output 406 from the aforesaid analog comparator circuit 87. It counts the output $f_0$ of the aforesaid oscillator 81 as clock signals, and its output 408 will indicate the aforesaid inverse integration time T.

Therefore, $X_2$ can be found if the aforesaid inverse integration time T is supplied to the arithmetic unit 89 and the arithmetical processing of the aforesaid equation (7) is performed by a command from the control unit 83. In addition, since the control unit 83 supplies to the arithmetic unit 89 the first transmitting phase combination which served as the reference at this time, the desired relative displacement distance X can be found by addition with the known $X_1$, which is determined from this first transmitting phase combination.

In this embodiment, this relative displacement distance passes through a display driver 90 and is displayed as a measured value on a display unit 91.

The relative displacement distance at each selected transmitting phase combination is calculated as described above. However, as mentioned above, the measuring range of each phase is limited to a range of 22.5 degrees before and after the first transmitting phase combination, which is the reference. If this range is exceeded, the aforesaid linear approximation will be difficult, and this will be a major factor causing errors.

For this reason, in this embodiment, the comparator 92 compares the output of the aforesaid counter 88 with the output of the upper-limit setting device 93. If the aforesaid inverse integration time T has exceeded the upper limit value, it outputs a signal to the control unit 83 to the effect that measurement is impossible, and the transmitting phase combination is switched over to the first phase combination which is used as the reference.

Consequently, if the phase displacement distance which is sought is not within the measuring range of the first transmitting phase combination which was selected when measurement was started, the next transmitting phase combination is selected, and the first transmitting phase combinations are tried repeatedly one after another until the output of the counter 88, i.e. the inverse integration time T, comes within the limit value. Since a maximum of eight repeated measurements are taken, it will be possible to obtain a high-precision measured value without fail.

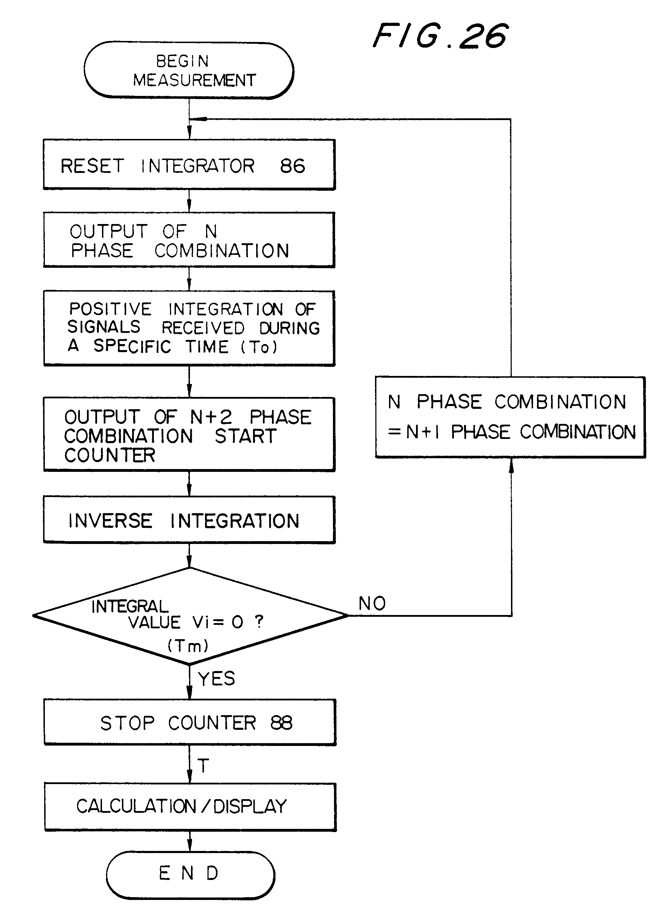

Figure 26 illustrates the overall flow of the measuring operations of this circuit during the aforesaid coarse and fine measurements.

Once the measurement position is determined by the transducer 100, the circuitry enters the state where measurement is started. First, the contents of the integrator 85 are reset.

Next, an optional specified phase combination is set on the oscillator circuit side, and A.C. signals modulated with phase combination N are supplied to the transmitting electrodes.

The signals V received for a definite time ($T_0$) at the state of transmission at this phase combination N are integrated.

The integrator 86 will hold the integral value Vi resulting from this positive integration.

Next, the transmitting phase combination of the transmitting circuit is changed to phase combination N + 2, that is, to a transmitted phase combination with a difference of 90 degrees from the aforesaid first transmitted phase combination. The signals received from the transducer 100 at this state are detected.

The counting operations of the counter 88 are started at the same time that this phase combination N + 2 is output, and at the same time the integrator 86 performs inverse integration of the aforesaid integral value Vi.

The integral value Vi is monitored by the analog comparator circuit 87, which determines whether the integral value Vi becomes zero within the upper limit value $T_m$ set by the upper-limit setting device 93. If the inverse integration time T is too large at this time, it assumes that the first transmitting phase combination is not appropriate, and the aforesaid operations are repeated again at phase combination N + 1.

These integration operations are repeated until the inverse integral value Vi becomes zero within the upper limit value $T_m$. When the desired output has been obtained, the counter 88 is stopped, and this inverse integration time T is calculated and displayed on the display unit 91. At this, the series of measurements is completed.

As is clear from the foregoing explanation, using this embodiment will make it possible to find the relative displacement distance accurately by obtaining different receiving signals with two transmitting phase combinations having an electrical phase difference of 90 degrees and by processing them arithmetically.

Of course, the number of divisions of the transmitting phase combinations in this circuit is not limited only to eight, and any number of them can be selected. Moreover, the two different transmitting phase combinations can be set at an electrical phase difference of 45 degrees, rather than 90 degrees, as given in this embodiment. In the embodiment given above, when a 90-degree electrical phase difference is used, the receiving signals obtained when both phase combinations are transmitted will be combinations of sine signals and cosine signals, and it is easy to calculate them. However, when the electrical phase difference between them is 45 degrees, it will also be possible to find the relative displacement distance by carrying out the specified arithmetical processing of functions in a similar way.

As described above, if this circuitry is applied, it is possible to calculate the desired measured values by sending two transmission signals having different phase combinations one after another to the transmitting electrodes, and by using the two receiving signals obtained at this time (in this embodiment) in a combination of positive integration and inverse integration. In this invention, the aforesaid signals with different phase combinations are first transmitted in coarse measurements, and the coarse measured values are obtained. Next, fine measurements are made by supplying transmitting signals of a phase combination determined by the electrode positioning, as in the fine measurements described above.

Therefore, it is possible to obtain the desired measured values quite accurately by adding these two measured values together.

As was explained above, this invention makes it possible to measure the amount of relative displacement between two structural members which are displaced in relation to each other (usually the displacement between a first and second scales) in terms of absolute values as changes in electrostatic capacity. Thus, it is possible to obtain compact, lightweight capacitance type transducers which can run on batteries.

In this invention, since the second transmitting electrodes and the second receiving electrodes on the second scale side are electrically connected to each other by coupling electrodes, it is possible to use the single capacitive coupling circuit penetrating through both scales to discover the absolute values of the relative displacement positions of both scales from the shift values between the transmitting and receiving signals.

Furthermore, since a single capacitive coupling circuit is used, it is possible to reduce remarkably the intrusion of mechanical and electrical errors and to obtain compact transducers with a low power consumption.

Another advantage of this invention is the fact that extremely accurate measurements of positions over the entire extent of a long measuring range can be made by a combination of coarse measurements and fine measurements. The aforesaid characteristic does not impede in any way the practical realization of the devices.

Next let us explain preferable embodiments of this invention for making both coarse/medium and fine measurements.

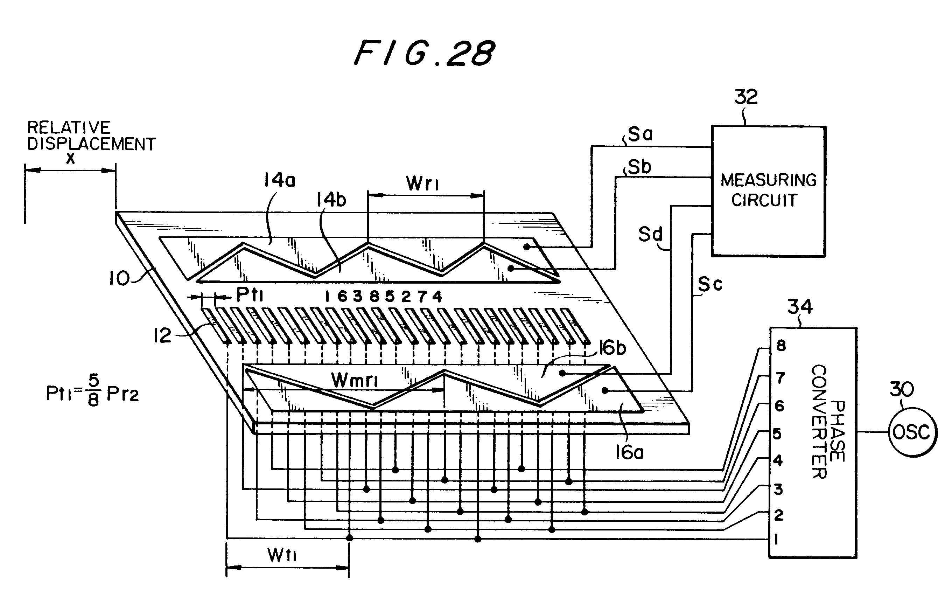

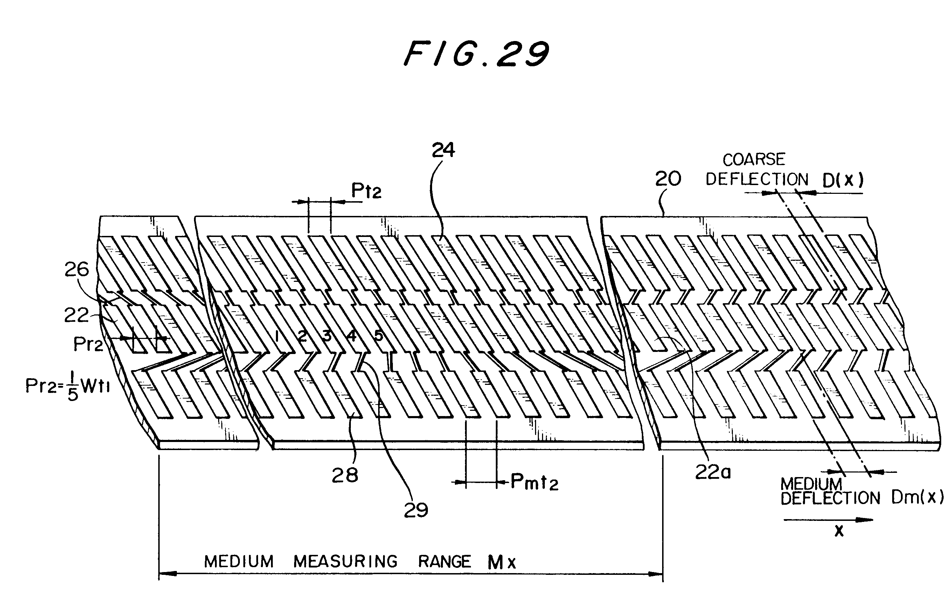

Figures 28 and 29 show a preferable embodiment of a capacitance type transducer for measuring positions according to this invention which is suitable for length-measuring devices such as calipers in which the vernier scale is displaced linearly with reference to the regular scale. The first scale 10 and second scale 20 in Figure 28 are combined, and the aforesaid first scale 10 may be incorporated on the vernier scale side of the calipers, and the second scale 20 on the regular scale side.

The two aforesaid scales 10 and 20 are positioned close to each other in a manner so that they can be displaced relatively to each other. In Figure 28, the X axis positions indicate the displacement positions of the first scale 10 with reference to the second scale 20.

The first transmitting electrodes 12 are located on the aforesaid first scale 10, and A.C. signals are supplied to these first transmitting electrodes 12 from the oscillator 30.

In the embodiment illustrated in the drawing, the first transmitting electrodes 12 have a configuration of three blocks of first transmitting electrodes each consisting of eight electrodes positioned at equal intervals. Each block is supplied from the aforesaid oscillator 30 with eight different A.C. signals, 1 - 8, each with an electrical phase difference of 45 degrees.

In addition, the first coarse/fine receiving electrodes 14 are also located on the aforesaid first scale 10. In this embodiment, these first coarse/fine receiving electrodes 14 consist of a pair of electrodes 14a and 14b which are arranged inversely to each other with a triangular wave shape having a pitch Wr1. They are arranged close to and in parallel with the aforesaid first transmitting electrodes 12.

The first medium/fine receiving electrodes 16 are also located on the aforesaid first scale 10.

These first medium/fine receiving electrodes 16 also consist of a pair of electrodes 16a and 16b which are arranged inversely to each other with a triangular wave shape having a pitch Wmr1. They are arranged close to and in parallel with the aforesaid first transmitting electrodes 12, but insulated from them.

The first receiving electrodes 14 and 16 are each connected with the measuring circuit 32.

The aforesaid electrodes 12, 14 and 16 are each formed by vapor deposition or other methods on the insulating substrate of the first scale 10, and the electrodes are each put in an electrically insulated state from each other.

Positioning of Electrodes for Coarse Measurements

The first characteristic feature of the transducers according to this invention is the electrode positioning on the second scale 20 for coarse absolute measurements. As is clear from Figure 29, the second receiving electrodes 22 and second coarse/fine transmitting electrodes 24 are positioned in rows on the second scale 20.

The second receiving electrodes 22 consist of a block of electrodes positioned along the direction of relative displacement (X axis) in positions where they can face the first transmitting electrodes. They are coupled capacitively with the first transmitting electrodes.

The second receiving electrodes 22 in this embodiment are positioned with equal intervals, and their pitch is shown by Pr2.

On the other hand, the second coarse/fine transmitting electrodes 24 consist of a block of electrodes arranged along the direction of relative displacement (the X axis) in positions where they can face towards the aforesaid first coarse/fine receiving electrodes 14. They are coupled capacitively with the first coarse/fine receiving electrodes 14.

These second coarse/fine transmitting electrodes 24 are positioned in this embodiment at equal intervals, and their pitch is shown by Pt2.

In this invention, the pitch of the aforesaid second receiving electrodes 22 is set at a different value from the pitch of the second coarse/fine transmitting electrodes 24. One can understand that as a result a coarse deflection shown by the symbol D(x) is imparted between both electrodes.

Thus, a characteristic feature of this invention is that the aforesaid coarse deflection

$$D(x) = (Pt2 - Pr2) f(x)$$

will have a definite, specified value in accordance with the relative displacement position, i.e., the value of X.

A further characteristic feature of this invention is the fact that the aforesaid second receiving electrodes 22 and second coarse/fine transmitting electrodes 24 are each connected electrically with each other by coupling electrodes 26.

Therefore, one can understand that in this invention the deflection between both electrodes D(x) coupled to each other by the coupling electrodes 26 will have a uniquely specified value for each relative displacement position (X) throughout the entire measuring range. Thus, one can understand that the detected value of the electrostatic capacity will correspond to the coarse deflection D(x) and that measurement of absolute values will be possible.

Of course, it is true that the absolute value of this coarse deflection D(x) increases as the transducer's measuring range increases, and there is the restriction that the amount of the coarse deflection D(x) cannot exceed the transmitting pitch, in this embodiment the transmitting wavelength pitch on the first transmitting electrodes 12, i.e. Wt1 in Figure 1.

This is so because it becomes difficult to identify the receiving signals if the aforesaid coarse deflection D(x) exceeds the transmitting wavelength pitch Wt1.

Consequently, in the embodiment in Figure 29, the second scale 20 is set in such a way that the maximum coarse deflection D(x) along the entire length of the regular scale of the calipers will not exceed the aforesaid transmitting wavelength pitch Wt1. To describe it in greater detail, the coarse deflection D(x) in Figure 29 is set at zero at the center of the second scale 20 so that, as the scale moves to the left or right, its value will increase in the opposite direction. The second scale 20 has a shape in which the coarse deflection at both of its ends will be centered symmetrically between plus and minus.

As described above, in this invention, the second receiving electrodes 22 and the second coarse/fine transmitting electrodes 24 on the second scale 20 have a uniquely specified value for each position along the relative displacement direction. Therefore, the electrostatic capacity value detected when the first scale 10 has moved will be a uniquely specified value for each position along the entire measuring range, and absolute measurements of any position will be possible.

In this invention, the A.C. signals supplied to the first transmitting electrodes 12 are transmitted by the capacitive couplings to the second receiving electrodes 22. They are immediately transmitted to the second coarse/fine transmitting electrodes 24 by the conductance of the coupling electrodes 26, and after having been shifted in the direction of the relative displacement (X axis) are returned again by the capacitive couplings to the first coarse/fine receiving electrodes 14.

Therefore, in this invention, it is possible to detect signals by means of a single electrical system alone through electrodes which have been given the aforesaid different coarse deflections, and coarse absolute measurements can be made with an extremely high precision without any shifting of the signal positions and without any time differences.

## Positioning of Electrodes for Medium Measurements

The second characteristic feature of the transducers according to this invention consists in their electrodes for medium absolute measurements which are located on the second scale 20. As is clear from Figure 29, the second medium/ fine transmitting electrodes 28 are positioned in a row on the second scale 20. In this embodiment, these second medium/fine transmitting electrodes 28 are positioned at equal intervals, and their pitch is shown by Pmt2.

These second medium/fine transmitting electrodes 28 consist of a block of electrodes arranged along the direction of relative displacement (the X axis) in positions where they can face towards the aforesaid first medium/fine receiving electrodes 16. They are coupled capacitively with the first medium/fine receiving electrodes 16.

In this invention, the pitch of the aforesaid second receiving electrodes 22 is set at a different value from the pitch of the second medium/fine transmitting electrodes 28. One can understand that as a result a medium deflection shown by the symbol Dm(x) is imparted between both electrodes.

Thus, a characteristic feature of this invention is that the aforesaid medium deflection

$$Dm(x) = (Pmt2 - Pr2) g(x)$$

will have a definite, specified value in accordance with the relative displacement position, i.e., the value of X.

A further characteristic feature of this invention is the fact that the aforesaid second receiving electrodes 22 and second medium/fine transmitting electrodes 28 are each connected electrically with each other by coupling electrodes 29.

The aforesaid electrode positioning for medium measurements basically resembles the electrode positioning for coarse measurements, but when the electrodes for medium/fine absolute measurements are used, the aforesaid coarse dimensions will be absolutely measured more finely. Therefore, one can understand that within the medium measuring range, which consists of the aforesaid full measuring range divided by a specific number, there will be a uniquely specified value of the medium deflection Dm(x) within the medium measuring range for each relative displacement position (X) between both electrodes coupled to each other by coupling electrodes 29. Thus, the detected electrostatic capacity value will have a value corresponding to the medium deflection Dm(x), and it will be possible to measure the medium absolute values within this medium measuring range.

This medium measuring range is indicated by Mx in Figure 29, and the medium deflection Dm(x) displays the shape of the pattern which is repeated in each of these medium measuring ranges Mx.

The aforesaid medium deflection Dm(x) changes more than the aforesaid coarse deflection D(x) in response to changes in the relative displacement distance X. That is, the pitch Pmt2 of the second medium/fine transmitting electrodes 28 has been selected at a value larger than the pitch Pt2 of the aforesaid second coarse/fine transmitting electrodes 24. This makes it possible to make medium measurements in which the coarse dimensions are finely divided.

Of course, this medium deflection Dm(x) also cannot exceed the transmitting wavelength pitch on the first transmitting electrodes 12, i.e. the Wt1 in Figure 28.

As is clear from Figure 29, if the medium deflection Dm(x) of this invention is used, in each medium measuring range Mx there will be second receiving electrodes 22 which are not coupled with the second middle/fine transmitting electrodes 28, for example the one indicated by 22a in Figure 29. However, this also exerts no adverse effects at all on the medium measurements.

As described above, according to the second characteristic feature of this invention, the second receiving electrodes 22 and the second medium/fine transmitting electrodes 28 on the second scale 20 have a uniquely specified medium deflection Dm(x) for each position within the medium measuring range Mx along the relative displacement direction. Therefore, the electrostatic capacity values detected when the first scale 10 has moved will have a uniquely specified value at each position within the medium measuring range Mx, and it will be possible to make accurate medium absolute measurements between the aforesaid coarse dimensions.

In this embodiment, the A.C. signals supplied to the first transmitting electrodes 12 are used also in coarse measurements, as mentioned above, and they are also used in the same way in the medium measurements described in this Section. The A.C. signals in this case are first transmitted by the capacitive couplings to the second receiving electrodes 22; then they are transmitted through the coupling electrodes 29 to the second medium/fine transmitting electrodes 28. After being shifted by the medium deflection Dm(x) in the direction of the relative displacement (X axis), they are again returned by the capacitive couplings to the first medium/fine receiving electrodes 16.

Therefore, in this invention, both coarse measurements and medium measurements are executed by two electrical systems formed simultaneously using common transmitting signals, and the coarse measurements as well as the medium measurements of these coarse dimensions are carried out simultaneously with an extremely high precision without any shifting of the signal positions and without any time differences. The coarse receiving signals Sa and Sb obtained in this way, as well as the medium measurement signals Sc and Sd, are processed by the measuring circuit 32, and the desired absolute values can be obtained up to the medium level.

The aforesaid second scale 20 also has an insulating substrate, and the aforesaid second receiving electrodes 22, second transmitting electrodes 24 and coupling electrodes 26 and 29 are formed by vapor deposition or other methods on the aforesaid insulating substrate. The corresponding second receiving electrodes 22 and second transmitting electrodes 24 are each connected electrically, and these pairs of electrodes are positioned along the relative displacement direction (the X axis) in a state where they are electrically insulated from each other.

### Positioning of Electrodes for Fine Measurements

As is clear from the descriptions given above, in this invention, the deflections D(x), Dm(x) between the second receiving electrodes 22 and the second transmitting electrodes 24 and 28 on the second scale 20 make it possible to make coarse and medium absolute measurements along the entire measuring range. However, as the measuring range increases, the measuring precision becomes proportionally coarser, and restrictions are imposed on the precision of the receiving signals obtained in accordance with the descriptions given above.

A third characteristic feature of this invention is the fact that the medium dimensions of these medium absolute measurements are next subjected to fine absolute measurements by a second electrical processing. After the approximate position measurements by the aforesaid coarse/medium absolute measurements are completed, it is possible to make fine absolute measurements of these approximate positions by mere electrical processing alone, obtaining accurate absolute measured values with a high resolution from both of the measured values.

The fine absolute measurements according to this invention have been explained in Figures 9 and 10, and the details are omitted here.

As is clear from the explanations of Figures 9 and 10, in this invention, the second receiving electrodes 22 are arranged at an equally spaced pitch equal to the transmitting electrode wavelength pitch Wt1 divided by an integer. Therefore, positions can be detected with a fine scale precision equal to the second receiving electrode pitch Pr2 divided by the number of transmitting electrodes within the group of first transmitting electrodes 12, that is, 1/8.

Consequently, in this invention, the first coarse/medium measurements are carried out with the desired measuring positions established on the first scale 10 and second scale 20 to obtain accurately the approximate current scale positions. Next, the precise positions of these medium dimensions are measured finely by switching over the electrical circuits. It is then possible to measure the desired scale relative positions as absolute values by adding both measured values. The two electrical measuring processes described above are performed at a high speed, with both scales 10 and 20 held in exactly the same state. In actual practice, at the instant, for example, when the user presses the Measure button, the results of the aforesaid two measurements and of the addition are displayed on the display.

As described above, this invention has the advantage that the same electrodes are used for both fine measurements and the aforesaid coarse/medium measurements. Since it is not necessary to position dedicated electrodes for each of the measurements, high-precision measurements can be made over a long measuring range with a simplified electrode positioning.

In this embodiment, the signals received during the aforesaid fine measurements can also be transmitted from the aforesaid second receiving electrodes 22 by either the electrical circuit of the coarse measurements or of the medium measurements to the first scale 10 side.

That is, in this embodiment, the second receiving electrodes 22 on the second scale 20 side are coupled electrically through the coupling electrodes 26 and 29 to both the second coarse/fine transmitting electrodes 24 or the second medium/fine transmitting electrodes 28. As a result, the fine measurements of this embodiment can be coupled capacitively with the second receiving electrodes 14 or 16 on the first scale 10 side by means of the second transmitting electrodes 24 or 28. Either electrical system can be selected at will. Naturally, it is also possible to use both electrical systems in parallel for the fine measurements and to calculate both signals. This will make it possible to obtain receiving signals with even less errors.

The first scale for coarse measurements shown in Figures 2 and 3, described above, can be applied without change in this embodiment, and the combination of the first and second scales for fine measurements shown in Figures 11 and 12, described above, can also be applied without change in this embodiment.

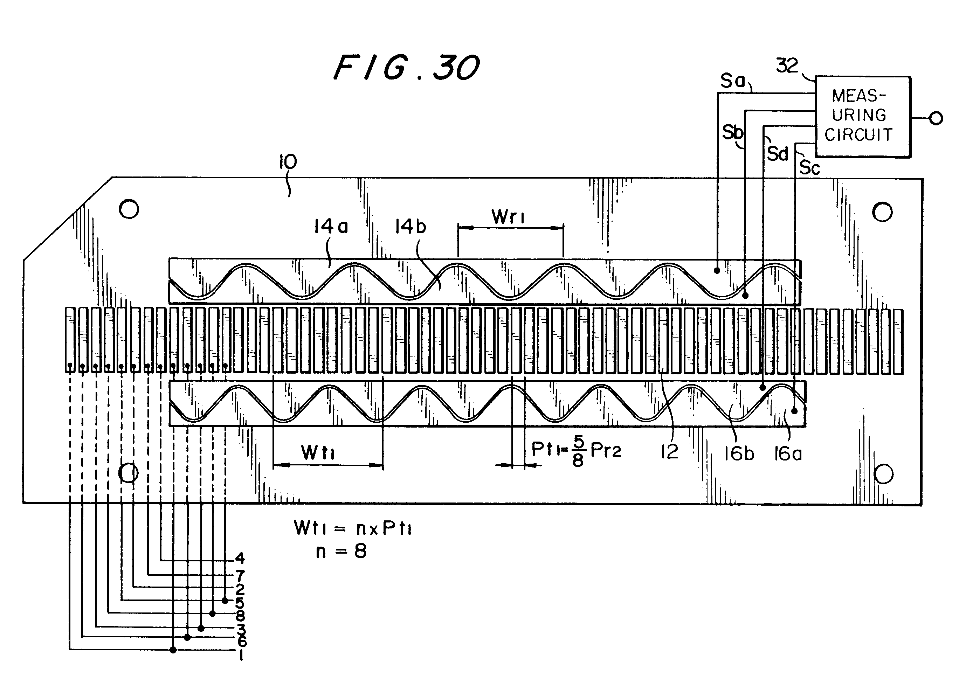

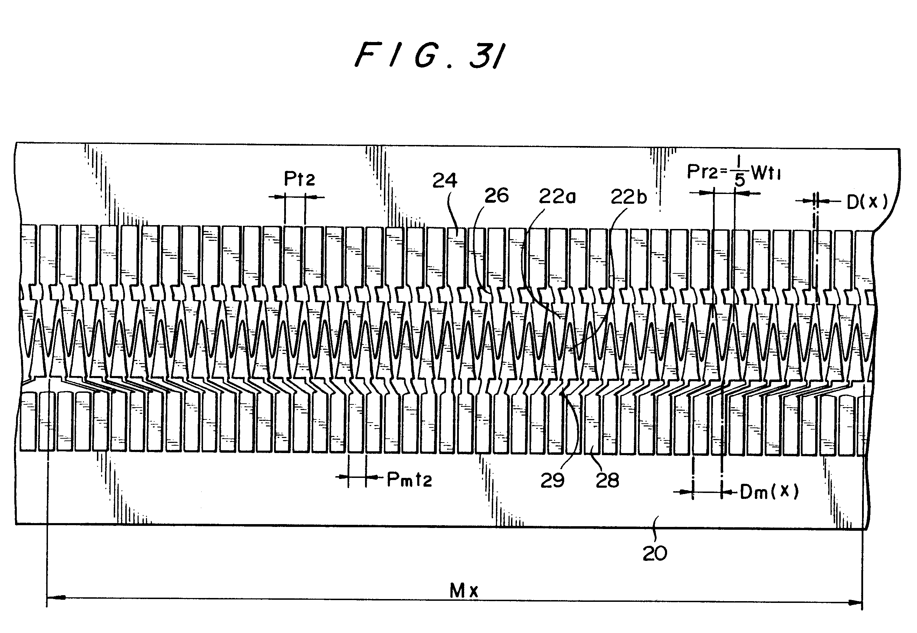

Figures 30 and 31 illustrate in concrete detail the first scale 10 and second scale 20 of another transducer according to this invention.

The first scale 10 in Figure 30 is characterized by the fact that its first coarse/fine receiving electrodes 14a and 14b and first medium/fine receiving electrodes 16a and 16b display a sinusoidal shape. The outputs from the electrode pairs 14a - 14b and 16a - 16b are subjected to differential calculations in the differential amplifier in the measuring circuit 32.

In the first scale 10 in Figure 30, the A.C. signals supplied to the first transmitting electrodes 12 are divided into eight phases, each having an electrical phase difference of 45 degrees.

In a first scale 10 like that in Figure 30, square-wave signals are selected as the A.C. signals supplied to the first transmitting electrodes 12. Moreover, since the electrode shapes of the first receiving electrodes 14a, 14b, 16a and 16b are sinusoidal, one can understand that the two types of output signals of the inverse phase supplied to the measuring circuit 32 will display a sinusoidal shape.

The second scale 20 in Figure 31 consists of a scale extended along the entire necessary measuring range, and only a part of it in this embodiment is cut out and shown in the figure.

As is clear from the figure, separate second receiving electrodes for coarse measurements and for medium measurements are provided the second scale 20 in this embodiment. Both groups of electrodes are shown in the figure as the second coarse/fine receiving electrodes 22a and the second medium/fine receiving electrodes 22b. Each electrode 22 is formed in a half-wave sinusoidal shape, and they are provided on the second scale 20 so that they are mutually reversed and they have electrical phase differences of 180 degrees.

The aforesaid second coarse/fine receiving electrodes 22a are coupled electrically with the second coarse/ fine transmitting electrodes 24 by means of coupling electrodes 26. The second medium/fine receiving electrodes 22b also are electrically coupled through coupling electrodes 29 with the second medium/fine transmitting electrodes 28.

As is clear from the positioning of the receiving electrodes in Figure 31, both second receiving electrodes 22a and 22b in this embodiment are positioned on the second scale 20 in a state electrically insulated from each other. However, they are each capacitively coupled separately with the first transmitting electrodes 12 shown in Figure 30. Thus, one can understand that in this embodiment the common transmitting signals are divided into two electrical circuits from the first transmitting electrodes 12 and are thence provided to the coarse measurements and medium measurements.

That is, in the circuit for coarse measurements the signals pass through the following pathway. They are transmitted from the first transmitting electrodes 12 by capacitive couplings to the second coarse/fine receiving electrodes 22a. Then they are passed through coupling electrodes 26 and conducted electrically to the second coarse/fine transmitting electrodes 24. Then they are returned by capacitive couplings to the first coarse/fine receiving electrodes 14.

On the other hand, in the circuit for medium/fine measurements the signals pass through the following pathway. They are coupled capacitively from the aforesaid first transmitting electrodes 12 to the second medium/fine receiving electrodes 22b and transmitted by electrical conductance of the coupling electrodes 29 to the second medium/fine transmitting electrodes 28. From there they are returned by capacitive couplings to the first medium/fine receiving electrodes 16.

As is described above, the coarse deflection D-(x) in the aforesaid coarse measurements is set so that it will have uniquely specified values throughout the entire measuring range. In this embodiment, both electrodes 22a and 24 are positioned with equal intervals at pitches of Pr2 and Pt2, respectively. Therefore, one can understand that the aforesaid coarse deflection D(x) will be a proportional function of the relative displacement distance.

Just as in Figure 28, the aforesaid coarse deflection D(x) is set at zero at the center of the second scale 20 and its values increase gradually towards both ends. If the overall length of the second scale 20 is S, it will vary from the $-\frac{1}{2}$ value on the minus side of the transmitting wavelength pitch (Wt1) to the $+\frac{1}{2}$ value on the plus side, as is shown by the following expression:

$$D(x) = (-\tfrac{1}{2} + x/S) \times Wt1$$

Moreover, the second coarse/fine receiving electrodes 22a and 22b shown in Figure 31 consist of a number of electrodes with an equally spaced pitch equal to the transmitting wavelength pitch Wt1 of the aforesaid first transmitting electrodes 12 divided by five. The positioning of the electrodes for making the fine absolute measurements is the same as that shown in Figure 28.

Similarly, in Figure 31, the medium deflection Dm(x) for medium measurements is indicated in terms of the electrical phase difference between the second medium/fine receiving electrodes 22b and the second medium/fine transmitting electrodes 28. The second medium/fine receiving electrodes 22b are formed with the same pitch as the aforesaid second coarse/fine receiving electrodes 22a (i.e., Pr2), and the pitch Pmt2 of the second medium/fine transmitting electrodes 28 is set to be smaller than that of the aforesaid second coarse/fine transmitting electrodes Pt2. As a result, one can understand that within the medium measuring range Mx the medium deflection Dm(x) will be a proportional function of a large gradient with respect to the relative displacement distance X.

As described above, in this invention, coarse measurements and medium measurements are performed simultaneously, as necessary, by means of the aforesaid electrode positioning on the first scale and second scale. Furthermore, fine measurements are performed using the same electrode positioning, ordinarily by using either the coarse side or the medium side electrodes, or by using them both in parallel.

In the aforesaid coarse and medium measurements, the A.C. signals supplied to the first transmitting electrodes are transmitted by capacitive couplings to the second receiving electrodes, which may be provided either in common or separately for them. From here the signals are processed by the coarse system and the medium system.

In the aforesaid coarse system, coarse absolute measurements are made by operations in which coarse shifting is performed during electrical conductance to the second coarse/fine transmitting electrodes and the signals are then returned by capacitive couplings to the first coarse/fine receiving electrodes.

Similarly, the signals of the second receiving electrodes are first given medium shifting aiming at the second medium/fine transmitting electrodes. Then they are returned by capacitive couplings to the first medium/fine receiving electrodes, and measured signals of the medium absolute values can be obtained.

Consequently, the relative displacement position X can be obtained at the medium stage by calculating both the coarse and medium measured values.

Consequently, this invention makes it possible to make accurate coarse and medium absolute measurements by measuring the aforesaid deflections D(x) and Dm(x) and to provide superior length-measuring devices which do not require zero setting, which was necessary at every measurement in the relative measurements in the past, do not have large power consumption, and have no [restrictions on the] displacement speed of the scales.

Moreover, since in this invention there is only one electrical circuit penetrating through the transducer for the coarse measurements and for the medium measurements, as mentioned above, the measuring precision can be improved remarkably without taking into consideration differences such as mechanical error in the electrode positioning or differences in the electrical delay time. Moreover, since measurements are made by one pair of scales, transducers which take up little space and have little power consumption can be supplied.

In addition, measurements of the medium absolute values are also made in this invention by using the aforesaid medium deflection Dm(x) as described above, and the fine absolute positions in the medium dimensions at the medium absolute positions within the entire scale length obtained in the aforesaid medium dimensions on the basis of specifically set electrode pitches for the first transmitting electrodes 12 and the second receiving electrodes 22, are next obtained by switching over to a different electrical circuit. By adding together both measured values obtained, it is possible to obtain extremely accurate fine absolute measured values within the entire measuring range.

Measuring Circuits

The coarse, medium and fine measurements in this embodiment can be made by means of the circuit in Figure 17, as described above. Since the operations of this circuit have been explained in Figures 17 and in Figure 7 and 8, the details are omitted here.

That is, the count value of the counter 72 in Figure 17 will indicate the electrical phase differences when the reference signal 300 has been shifted by the transducer. As mentioned above, in this invention this electrical phase difference $\phi$ will indicate the signals of the coarse, medium and fine absolute values for the measurements of the coarse absolute values, the measurements of the medium absolute values and the measurements of the fine absolute values, respectively.

That is, in measurements of the coarse absolute values, in accordance with the coarse deflection D(x) between both scales 10 and 20, the output of the aforesaid counter 72 will be processed by the arithmetic unit 74 to convert it to absolute values.

In measurements of the medium absolute values, in accordance with the medium deflection Dm-(x) between both scales 10 and 20, the output of the aforesaid counter 72 will be processed by the arithmetic unit 74 to convert it to absolute values.

On the other hand, in measurements of the fine absolute values, as described above, the absolute positions between the medium measurements found by the electrode pattern beats between the first transmitting electrodes 12 and second receiving electrodes 12 are found accurately as an electrical phase difference $\phi$. The arithmetic unit 74 can obtain the desired high-precision absolute value by adding this fine absolute value to the aforesaid medium absolute value.

In the aforesaid coarse measurements, medium measurements and fine measurements, the transmitting phases and receiving phases are selected at will by switching them to the optimal values. This selection is performed by the control unit 80, which instructs the aforesaid transmitting signal selector 61 and receiving signal selector 63 to switch over to the given phases.

For example, on the transmitting side, when making both ordinary coarse and medium absolute measurements, transmitting signals of phases 1, 2, 3, 4, 5, 6, 7 and 8 are supplied repeatedly in that sequence to the first transmitting electrodes 12 following the sequence in which the electrodes are aligned in a row. They give the receiving signals a displacement corresponding to the coarse or medium scale position at the aforesaid deflections D-(x) and Dm(x) on the second scale 20 side and cause the desired coarse and medium absolute values to be measured.

On the other hand, when making fine measurements, as is shown by the state of connections in Figure 28, signals of phases 1, 6, 3, 8, 5, 2, 7 and 4 are supplied repeatedly in that sequence to the first transmitting electrodes 12 following the sequence in which they are aligned in a row. Fine absolute measurements can be made by means of the pattern beats of these first transmitting electrodes 12 and second receiving electrodes 22.

Figure 32 illustrates how the coarse/medium and fine transmitting and receiving signals are selected in the aforesaid embodiment in Figure 28.

As was mentioned above, the first measurements made are the coarse/medium measurements. At this time, the control unit 80 sets the transmitting signal selector 61 at phases 1, 2, 3, 4, 5, 6, 7 and 8, as shown in the figure. The receiving signals Sa, Sb, Sc and Sd obtained from the transducer 100 at this time are output as

[Coarse (Sa-Sb)], [Medium (Sc-Sd)]

One can understand that during coarse/medium measurements the pairs of first receiving electrodes 14 and 16 are connected in a differential state.

On the other hand, the state indicated by the square brackets in Figure 32 is the fine measurement state. At this time, the transmitting phases are changed to 1, 6, 3, 8, 5, 2, 7 and 4, and the pattern beats between the transmitting and receiving electrodes are obtained. The receiving signals are also switched to

[Sa + Sb], [Sc + Sd]

and the first receiving electrodes of each pair, 14 and 16, are treated as if they were single electrically connected electrodes.

The control unit 80, as described above, first selects coarse/medium measurements and next selects fine measurements. These sequences are prestored in the unit's memory. The user needs only to switch on, for example, the Measure button on the measuring device. Then the aforesaid series of coarse/medium and fine sequences will be carried out automatically within an extremely short time, and the user needs only to be aware of the results as the measured values on the display 78.

The output of the arithmetic unit 74, which is controlled by the control unit 80, supplies the desired display signals through the display driver 76 to the display 78. The aforesaid measured values are ordinarily displayed digitally.

In this embodiment, the aforesaid display 78 may consist of a liquid-crystal display unit embedded and fastened onto the surface of, for example, the vernier scale of calipers. This enables the user to read the measured value of the length easily.

Other Measuring Circuits

The circuit in Figure 20, described above, can be applied to the coarse, medium and fine measurements in this embodiment.

That is, the first transmitting electrodes of the aforesaid transducer 100 are supplied from the transmitting circuit with a number of A.C. signals which are modulated with different phases. The transmitting circuit in Figure 20 contains an oscillator 81 and a transmitting phase selector circuit 82. It can supply the transmitting electrodes with A.C. signals modulated with any specific phase needed for the coarse measurements, medium measurements and fine measurements selected by the control unit 83.

The operations in Figures 21-26, described above, are exactly the same in the measurements in this embodiment as well.

In this embodiment, the desired measured values are obtained by adding together the aforesaid coarse measurements, medium measurements and fine measurements. During coarse measurements, the aforesaid maximum measuring range $X_m$ is set

so as to include the entire scale length. During medium measurements, the aforesaid maximum measuring range $X_m$ is set so as to include the medium measuring range Mx of the scale. During fine measurements, the aforesaid maximum measuring range $X_m$ is set so that it will be the second receiving electrode pitch Pr2.

As is clear in the explanation of Figures 20-26, if this circuitry is applied, it is possible to calculate the desired measured values by sending two transmission signals having different phase combinations one after another to the transmitting electrodes, and by using the two receiving signals obtained at this time in this embodiment in a combination of positive integration and inverse integration.

In this invention, coarse measurements are first made. The aforesaid signals with different phase combinations are first transmitted, and the coarse measured values are obtained. Next, medium measurements are made in the same way as the aforesaid coarse measurements. The phase combination of the transmission signals in these medium measurements are the same as those in the fine measurements. However, if the electrode positioning and circuit designs are selected suitably, the aforesaid selected phase combination N used in the aforesaid measurements can be made to coincide in the medium measurements with the phase combination which will be set finally in the fine measurements. As a result, the necessary phase combination can be selected directly in the medium measurements without the need to make a number of trials of the phase combinations. In this way, the absolute values at the medium stage can be obtained by adding the absolute measured values obtained by medium measurements to the aforesaid coarse measured values.

In addition, fine measurements are made by supply the transmission signals with the phase combination determined by the electrode positioning as described above for the fine measurements.

Consequently, it is possible to obtain the desired measured values extremely accurately by adding these two measured values together.

As was explained above, this invention makes it possible to measure the amount of relative displacement between two structural members which are displaced in relation to each other (usually the displacement between a first and second scales) in terms of absolute values as changes in electrostatic capacity. Thus, it is possible to obtain compact, lightweight capacitance type transducers which can run on batteries.

In this invention, since the second receiving electrodes and the second transmitting electrodes on the second scale side are electrically connected to each other by coupling electrodes, it is possible to use the single capacitive coupling circuits for coarse and medium use penetrating through both scales to discover the absolute values of the relative displacement positions of both scales from the coarse shift values or the medium shift values between the transmitting and receiving signals.

Furthermore, since single capacitive coupling circuits are used, it is possible to reduce remarkably the intrusion of mechanical and electrical errors and to obtain compact transducers with a low power consumption.

Another advantage of this invention is the fact that extremely accurate measurements of positions over the entire extent of a long measuring range can be made by a combination of coarse measurements, medium measurements and fine measurements.

## Claims

1. A capacitance type transducer for measuring positions which has a first scale (10) and a second scale (20) which are positioned close to each other in a manner so that they can be displaced relatively to each other,

   the aforesaid first scale (10) is provided with first transmitting electrodes (12) to which A.C. signals are supplied and first receiving electrodes (14) which are positioned in an insulated state with respect to the aforesaid first transmitting electrodes (12) and to which a measuring circuit (32) is connected,

   the aforesaid second scale (20) is provided with second receiving electrodes (22) which consist of groups of electrodes positioned along the relative displacement direction (x) at positions where they can face towards the aforesaid first transmitting electrodes (12) and which are coupled capacitively with the first transmitting electrodes (12), and second transmitting electrodes (24) which consist of groups of electrodes positioned along the relative displacement direction (x) at positions where they can face towards the first receiving electrodes (14) and which are coupled capacitively with the first receiving electrodes (14),

   each second receiving electrode (22) is connected electrically to a respective second transmitting electrode (24) by a respective coupling electrode (26),

   **characterized in that**

   each connected second receiving electrode (22) and second transmitting electrode (24) pair have a relative deflection (D) along the relative displacement directions (x),

   said deflections are uniquely defined for each relative displacement position so that absolute position measurements may be carried out.

2. A capacitance type transducer for measuring positions **characterized by** the fact that, in the transducer described in claim 1, the second receiving electrodes (22) and second transmitting electrodes (24) are positioned so that the amount of deflection of the second scale (20) is set at zero at the centre of the second scale (20), and the deflection (D) increases in the opposite direction, towards the plus or minus side, as both ends of the scale are approached.

3. A capacitance type transducer for measuring positions **characterized by** the fact that, in either one of the transducers described in claims 1 and 2, the adjacent groups (1, 2) of the first transmitting electrodes (12) form blocks one after another, and A.C. signals (30a, 30b) with different phases are supplied to the first transmitting electrodes (12) in each group (1, 2), so that, if the pitch of this block is taken as the transmitting wavelength pitch (Wt1), the aforesaid deflection (D) will not exceed the aforesaid transmitting wavelength pitch (Wt1) within the measurable scale range.

4. A capacitance type transducer for measuring positions **characterized by** the fact that, in the device described in claim 3, the first receiving electrodes (14) consist of a group of two types of electrodes for outputting signals of two different phases, and if the receiving wavelength pitch is Wr1, the aforesaid transmitting wavelength pitch is Wt1, the second receiving electrode (22) pitch is Pr2, and the second transmitting electrode (24) pitch is Pt2, the pitch of the group of first receiving electrodes (14) is set at:

$$Wr1 = Wt1 \times Pt2/Pr2.$$

5. A capacitance type transducer for measuring positions **characterized by** the fact that, in the transducer described in claim 4, the first receiving electrodes (14) consist of two electrodes (14a, 14b) which are extended along the displacement direction and essentially parallel, with the adjacent sides having mutually reversed shapes.

6. A capacitance type transducer for measuring positions **characterized by** the fact that, in the transducer described in claim 5, the aforesaid mutually reversed shapes of the aforesaid first receiving electrodes (14a, 14b) consist of sinusoidal shapes.

7. A capacitance type transducer for measuring positions **characterized by** the fact that, in the transducer described in claim 5, the aforesaid mutually reversed shapes of the aforesaid first receiving electrodes (14a, 14b) consist of triangular wave shapes.

8. A capacitance type transducer for measuring positions **characterized by** the fact that, in the transducer described in any of claims 1 to 7, coarse absolute measurements can be carried out along the entire measuring range by means of the aforesaid deflections (D) which are uniquely defined for each relative displacement position,
the aforesaid second receiving electrodes (22) consist of a number of electrodes having an equally spaced pitch (Pr2) equal to the transmitting wavelength pitch (Wt1) of the aforesaid group of first transmitting electrodes (12) divided by a specific integer,
and the aforesaid coarse dimensions can be measured finely with a scale precision equal to the aforesaid second receiving electrodes pitch (Pr2) divided by the number of transmitting electrodes within the aforesaid group of first transmitting electrodes (12).

9. A capacitance type transducer for measuring positions **characterized by** the fact that, in the transducer described in claim 8, the second receiving electrodes (22) consist of a number of electrodes having an equally spaced pitch (Pr2) equal to the transmitting wavelength pitch (Wt1) of the aforesaid group of first transmitting electrodes (12) divided by an integer less than the number of transmitting electrodes within the group of first transmitting electrodes (12).

10. A capacitance type transducer for measuring positions **characterized by** the fact that, in either one of the transducers described in claims 8, the first transmitting electrodes (12) have an unequally spaced pitch (Pt1).

11. A capacitance type transducer for measuring positions **characterized by** the fact that, in either one of the transducers described in claim 8 and 9, on the second scale (20) are provided two sets of second receiving electrodes (22a, 22b) and second transmitting electrodes (24a, 24b), on the first scale (10) are provided two first receiving electrodes (14) which face towards the aforesaid two second transmitting electrodes (24a, 24b) and are coupled capacitively with them, and measuring operations can be performed by combining the two receiving signals.

12. A capacitance type transducer for measuring positions **characterized by** the fact that, in the transducer described in claim 11, the aforesaid two second receiving electrodes (22a, 22b) are both coupled capacitively with a single first transmitting electrode (12) on the first scale (10) side.

13. A capacitance type transducer for measuring positions **characterized by** the fact that, in the transducer as described in any one of the foregoing claims, the aforesaid first scale (10) is provided with first coarse/fine receiving electrodes (14a, 14b) and first medium/fine receiving electrodes (16a, 16b) which are each extended along the displacement direction and essentially parallel, which the adjacent sides having mutually reversed shapes and positioned in an insulated state with respect to the aforesaid first transmitting electrodes (12) to which said measuring circuit (32) is connected, the aforesaid second scale (20) is provided with second coarse/fine transmitting electrodes (24) and second medium/fine receiving electrodes (28) which consist of groups of electrodes positioned along the relative displacement direction (x) at positions where they can face towards the first coarse/fine receiving electrodes (14a, 14b) and the first medium/fine receiving electrodes (16a, 16b) and which are each coupled capacitively with the first coarse/fine receiving electrodes (14a, 14b) and the first medium/fine receiving electrodes (16a, 16b),
the second receiving electrodes (22) and the second coarse/fine transmitting electrodes (24) are connected electrically with each other by said coupling electrodes (26),
the connected second receiving electrodes (22) and second coarse/fine transmitting electrodes (24) are each given different coarse deflections (D) within the entire measuring range along the relative displacement direction (x),
coarse absolute measurements can be carried out along the entire measuring range by means of the aforesaid coarse deflections (D) which are uniquely defined for each relative displacement position,
the aforesaid second receiving electrodes (22) and second medium/fine transmitting electrodes (28) are connected electrically with each other by said coupling electrodes (29), and the connected second receiving electrodes (22) and second medium/fine transmitting electrodes (28) are each given different medium deflections (Dm) along the relative displacement direction (x) within the medium measuring range equal to the aforesaid entire measuring range divided into specified fractions,
medium absolute measurements can be made within the medium measuring range by means of the aforesaid medium deflections (Dm) specified for each relative displacement position,
the aforesaid second receiving electrodes (22) consist of a number of electrodes having an equally spaced pitch (Pr2) equal to the transmitting wavelength pitch (Wt1) of the aforesaid group of first transmitting electrodes (12) divided by a specific integer,
and the aforesaid medium dimensions can be measured finely with a scale precision equal to the aforesaid second receiving electrode pitch (Pr2) divided by the number of transmitting electrodes within the aforesaid group of first transmitting electrodes (12).

14. A capacitance type transducer for measuring positions **characterized by** the fact that, in the transducer described in claim 13, the second receiving electrodes (22) and the second coarse/fine transmitting electrodes (24) are positioned so that the amount of coarse deflection (D) of the second scale is set at zero at the center of the second scale (20), and the deflection (D) increases in the opposite direction, towards the plus or minus side, as both ends of the scale are approached.

15. A capacitance type transducer for measuring positions **characterized by** the fact that, in either one of the transducers described in claims 13 and 14, the adjacent groups of the first transmitting electrodes (12) form blocks one after another, and A.C. signals with different phases are supplied to the first transmitting electrodes (12) in each group, so that, if the pitch of this block is taken as the transmitting wavelength pitch (Wt1), the aforesaid two deflections (D, Dm) will not exceed the aforesaid transmitting wavelength pitch (Wt1) within the measureable scale range.

16. A capacitance type transducer for measuring positions **characterized by** the fact that, in the device described in claim 15, the first coarse/fine receiving electrodes (14a, 14b) and first medium/fine receiving electrodes (16a, 16b) consist of groups of two types of electrodes for outputting signals each of two different phases,
if the coarse/fine receiving wavelength pitch is Wr1, the aforesaid transmitting wavelength pitch is Wt1, the second receiving electrode pitch is Pr2, and the second coarse/fine transmitting electrode pitch is Pt2, the pitch of the group for first coarse/fine receiving electrodes (14a, 14b) is set at:

$$Wr1 = Wt1 \times Pt2/Pr2,$$

if the medium/fine receiving wavelength pitch is Wmr1 and the aforesaid first medium/fine transmitting electrode pitch is Pmt2, the pitch if the group of first medium/fine receiving electrodes (16a, 16b) is set at:

$$Wmr1 = Wt1 \times Pmt2/Pr2.$$

17. A capacitance type transducer for measuring positions **characterized by** the fact that, in either one of the transducers described in claim 13, on the second scale (29) are positioned, in a state electrically insulated from each other, the second coarse/fine receiving electrodes (22a) and second medium/fine receiving electrodes (22b) in positions where they can be coupled capacitively with the first transmitting electrodes (12), and the second coarse/fine transmitting electrodes (24) or second medium/fine transmitting electrodes (28) are electrically connected to the second receiving electrodes (22) through said coupling electrodes (26a, 26b) with the prescribed coarse deflection (D) or medium deflection (Dm).

18. A capacitance type transducer for measuring positions **characterized by** the fact that, in the transducer described in claim 17, the aforesaid second coarse/fine receiving electrodes (22a) and second medium/fine receiving electrodes (22b) are positioned along the displacement direction and are essentially parallel, with the adjacent sides having a half-wave sinusoidal shape and positioned in mutually reversed shapes with electrical phase differences of 180 degrees.

19. A capacitance type transducer for measuring positions, **characterized by** the fact that, in the transducer as described in any of the foregoing claims there are further provided: excitation signal means (61, 62) for selectively applying periodically varying excitation signals to the first transmitting electrodes (12) in a first sequence following the sequence in which the electrodes are positioned relative to each other in the first transmitter electrode group, and in a second sequence which is different from the aforesaid first sequence

means (63, 64) for processing the first and second output signals produced by the first receiving electrodes (14) in response to the first and second sequence of excitation signals for obtaining the relative displacement between the two scales (10, 20).

20. A capacitance type transducer for measuring positions **characterized by** the fact that, in the transducer described in claim 19 there are further provided: control means (80) for prestoring said sequences in a memory and controlling signal processing means (63, 64) for selectively combining the output signals (Sa, Sb) obtained from the first receiving electrodes (14), which have been produced in response to the different sequences of excitation signals applied to the first transmitting electrodes (12).

21. A capacitance type transducer for measuring positions **characterized by** the fact that, in either one of the transducers described in claims 19 or 20 there are further provided: excitation signal generating means (82) for generating different phase combinations of excitation signals (400) for application to the respective electrodes of at least one group of transmitter electrodes (12) in a predetermined spatial order, each of said phase combinations of excitation signals comprising two sets of excitation signals which are phase inverted with respect to each other and in spatial phase quadrature when applied to said transmitter electrodes (12) and the relative spatial phase positions occupied by the respective sets of excitation signals in each phase combination of excitation signals successively incrementally changing from one phase combination to the next; first control means (83) for controlling said excitation signal generating means to selectively apply a pair of first and second ones of said phase combinations of excitation signals to at least one group of transmitter electrodes; output signal selecting means (94) for selecting a signal corresponding to either the differential or the combination of the first and second output signals produced by the first receiving electrodes (14a-14d) as an electrode array means output signal, and thereby producing successive first and second electrode array means output signals in response to said pair of excitation signal phase combinations; means (85, 86) for demodulating said first and second output signals to produce first and second demodulation signals (402), and for performing a dual ramp integration of said first and second demodulation signals (402) wherein said first demodulated signal is positively integrated for a predetermined time interval (To) by integrator means (86); and said second demodulated signal is inversely integrated by said integrator means (86) until the integrator output (404) returns to a reference level, said first and second ones of said phase combinations of excitation signals being selected such that said integration of said second demodulation signal causes integration of the integrator output (404) in the reverse direction from said positive integration of said first demodulation signal output;

means (88) for measuring the integration time (T) of said second demodulated signal integration and comparator means (92, 93) for producing an output when the integration time (T) exceeds a predetermined limit value (Tm);

second control means (83) responsive to said output of said comparator means (92) for resetting said demodulation (85) and dual ramp integration means (86), for repetitively selectively applying a different further pair of first and second ones of said phase combinations of excitation signals to said at one group of transmitter electrodes (12), and for causing said demodulation (85) and dual ramp integration means (86) to integrate the resultant first and second demodulation signals (402) until there is no output from said comparator means (92).

22. A capacitance type transducer for measuring positions **characterized by** the fact that, in the transducer described in claim 21 the predetermined limit value (Tm) for said integration time (T) of said demodulated signals corresponds to the range over which the ratio of said first and second electrode array means output signals is substantially linear.

23. A capacitance type transducer for measuring positions **characterized by** the fact that, in the transducer described in claim 21 or 22 there is a phase difference of 90° between the first and second ones of said phase combinations of excitation signals.

24. A capacitance type transducer for measuring positions **characterized by** the fact that, in either one of the transducers described in claim 21 to 23 there is further provided an arithmetic unit (89) responsive to said control means (83) which calculates the relative displacement between the two scales from the integration time (T) of said second demodulated signal integration measured by said integration time measuring means (88) when said comparator means (92) does not produce an output following a second demodulated signal integration.

25. A capacitance type transducer for measuring positions **characterized by** the fact that, in the transducer described in claim 24 there is further provided master control means (83) for controlling said excitation signal generating means (82) and said output signal selecting means (94) so as to perform a measurement cycle for sequentially producing:

a coarse measurement value from a second demodulation signal produced from an electrode array means output signal corresponding to the differential between first and second output signals produced by the first receiving electrodes (14a, 14b) in response to a phase combination of excitation signals (400) generated in a first spatial order corresponding to said first sequence;

a medium measurement value from a second demodulation signal produced from an electrode array means output signal corresponding to the differential between first and second output signals produced by the first receiving electrodes (16a, 16b) in response to a phase combination of excitation signals (400) generated in said first spatial order; and

a fine measurement value from a second demodulation signal produced from the combination of first and second output signals produced the first receiving electrodes (14a, 14b or 16a, 16b) in response to a phase combination of excitation signals generated in a second spatial order corresponding to said second sequence; and

said arithmetic unit (89) combines said coarse, medium and fine measurement values to produce a position measurement corresponding to the relative displacement between the two scales (10, 20).

**Patentansprüche**

1. Kapazitiver Meßwertumformer zur Lagemessung mit einem ersten Maßstab (10) und einem zweiten Maßstab (20), welche nahe zueinander so positioniert sind, daß sie relativ zueinander verschoben werden können, wobei

der genannte erste Maßstab (10) erste Sendeelektroden (12) aufweist, an die Wechselstromsignale angelegt werden und erste Empfangseleketroden (14), welche isoliert bezüglich der genannten ersten Sendeelektroden (12) angeordnet sind und an die eine Meßschaltung (32) angeschlossen ist,

der genannte zweite Maßstab (20) zweite Empfangselektroden (22) aufweist, die aus Gruppen von Elektroden bestehen, welche entlang der relativen Verschiebungsrichtung (x) an Positionen angeordnet sind, an denen sie den genannten ersten Sendeelektroden (12) gegenüberstehen können und die kapazitiv mit den ersten Sendeelektroden (12) gekoppelt sind; und zweite Sendeelektroden (24), die aus Gruppen von Elektroden bestehen, welche entlang der relativen Verschiebungsrichtung (x) an Positionen angeordnet sind, an denen sie den ersten Empfangselektroden (14) gegenüberstehen können und die kapazitiv mit den ersten Empfangselektroden (14) gekoppelt sind, jede zweite Empfangselektrode (22) mit einer entsprechenden zweiten Sendeelektrode (24) über eine entsprechende Koppelelektrode (26) elektrisch verbunden ist,
**dadurch gekennzeichnet,**
daß jedes Paar von miteinander verbundenen zweiten Empfangselektroden (22) und zweiten Sendeelektroden (24) eine relative Ablenkung (D) entlang der relativen Verschiebungsrichtungen (x) besitzt,
wobei die genannten Ablenkungen für jede relative Verschiebungsposition eindeutig definiert sind, so daß absolute Lagemessungen ausgeführt werden können.

2. Kapazitiver Meßwertumformer zur Lagemessung, dadurch gekennzeichnet, daß in dem in Anspruch 1 beschriebenen Meßwertumformer die zweiten Empfangselektroden (22) und zweiten Sendeelektroden (24) so angeordnet sind, daß der Betrag der Ablenkung des zweiten Maßstabes (20) auf Null in der Mitte des zweiten Maßstabes (20) gesetzt wird, und daß die Ablenkung (D) in entgegengesetzten Richtungen zur positiven oder negativen Seite zunimmt, wenn man sich beiden Enden des Maßstabs annähert.

3. Kapazitiver Meßwertumformer zur Lagemessung, dadurch gekennzeichnet, daß in einem der in den Ansprüchen 1 und 2 beschriebenen Meßwertumformer die nebeneinander liegenden Gruppen (1, 2) der ersten Sendeelektroden (12) einen Block nach dem anderen formen und Wechselstromsignale (30a, 30b) mit unterschiedlichen Phasen an die ersten Sendeelektroden (12) in jeder Gruppe (1, 2) angelegt werden, so daß, wenn der Abstand dieses Block als der Abstand der Sendewellenlänge (Wt1) angenommen wird, die genannte Ablenkung (D) den vorher genannten Abstand (Wt1) der Sendewellenlänge innerhalb des meßbaren Maßstabsbereichs nicht überschreitet.

4. Kapazitiver Meßwertumformer zur Lagemessung, dadurch gekennzeichnet, daß in der in Anspruch 3 beschriebenen Vorrichtung die ersten Empfangselektroden (14) aus einer Gruppe von zwei Elektrodentypen bestehen zur Ausgabe von Signalen mit zwei verschiedenen Phasen, und wenn angenommen wird, daß der Abstand der Empfangswellenlänge Wr1 ist, der vorher genannte Abstand der Sendewellenlänge Wt1 ist, der Abstand der zweiten Empfangselektrode (22) Pr2 ist, und der Abstand der zweiten Sendeelektrode (24) Pt2 ist, der Abstand der Gruppe der ersten Empfangselektroden (14) wie folgt gesetzt wird:

$$Wr1 = Wt1 \times Pt2/Pr2.$$

5. Kapazitiver Meßwertumformer zur Lagemessung, dadurch gekennzeichnet, daß in dem in Anspruch 4 beschriebenen Umformer die ersten Empfangselektroden (14) aus zwei Elektroden (14a, 14b) bestehen, welche sich entlang der Verschiebungsrichtung und im wesentlichen parallel zueinander sich erstrecken, wobei die nebeneinanderliegenden Seiten entgegengesetzt umgekehrte Formgebungen besitzen.

6. Kapazitiver Meßwertumformer zur Lagemessung, dadurch gekennzeichnet, daß in dem in Anspruch 5 beschriebenen Umformer die entgegengesetzt umgekehrten Formgebungen der genannten ersten Empfangselektroden (14a, 14b) sinusförmige Gestalt besitzen.

7. Kapazitiver Meßwertumformer zur Lagemessung, dadurch gekennzeichnet, daß in dem in Anspruch 5 beschriebenen Umformer die entgegengesetzt umgekehrten Formgebungen der genannten ersten Empfangselektroden (14a, 14b) dreieckige Wellenform besitzen.

8. Kapazitiver Meßwertumformer zur Lagemessung, dadurch gekennzeichnet, daß in dem in einem der Ansprüche 1 bis 7 beschriebenen Umformer absolute Grobmessungen entlang des gesamten Meßbereichs ausgeführt werden können unter Verwendung der genannten Ablenkungen (D), welche für jede relative Verschiebungsposition eindeutig definiert sind, die genannten zweiten Empfangselektroden (22) aus einer Anzahl von Elektroden bestehen, die einen gleichen Abstand (Pr2) voneinander besitzen, welcher gleich dem Abstand der Sendewellenlänge (Wt1) der genannten Gruppe von ersten Sendeelektroden (12), geteilt durch eine spezifische ganze Zahl ist, und die genannten Grobabmessungen feingemessen werden können mit einer Maßstabsgenauigkeit, die gleich dem Abstand der zweiten Empfangselektroden (Pr2) geteilt durch die Anzahl der Sendeelektroden innerhalb der genannten Gruppe der ersten Sendeelektroden (12) ist.

9. Kapazitiver Meßwertumformer zur Lagemessung, dadurch gekennzeichnet, daß in dem in Anspruch 8 beschriebenen Umformer die zweiten Empfangselektroden (22) aus einer Anzahl von Elektroden bestehen, die einen gleichen Abstand (Pr2) besitzen, welcher gleich dem Abstand der Sendewellenlänge (Wt1) der vorher genannten Gruppe von ersten Sendeelektroden (12) geteilt durch eine ganze Zahl, welche weniger als die Anzahl der Sendeelektroden innerhalb der Gruppe der ersten Sendeelektroden (12) ist.

10. Kapazitiver Meßwertumformer zur Lagemessung, dadurch gekennzeichnet, daß in dem in Anspruch 8 beschriebenen Umformer die ersten Sendeelektroden (12) einen unterschiedlichen Abstand (Pt1) voneinander besitzen.

11. Kapazitiver Meßwertumformer zur Lagemessung, dadurch gekennzeichnet, daß in einem der in Anspruch 8 und 9 beschriebenen Umformer auf dem zweiten Maßstab (20) zwei Sätze von zweiten Empfangselektroden (22a, 22b) und zweiten Sendeelektroden (24a, 24b) vorgesehen sind, auf dem ersten Maßstab (10) sich zwei erste Empfangselektroden (14) befinden, welche den genannten zwei zweiten Sendeelektroden (24a, 24b) gegenüberstehen, und mit diesen kapazitiv gekoppelt sind und Messungen durch Kombinieren der zwei Empfangssignale ausgeführt werden können.

12. Kapazitiver Meßwertumformer zur Lagemessung, dadurch gekennzeichnet, daß in dem in Anspruch 11 beschriebenen Umformer die genannten zwei zweiten Empfangselektroden (22a, 22b) beide kapazitiv mit einer ersten einzelnen Sendeelektrode (12) auf der ersten Maßstabsseite (10) gekoppelt sind.

13. Kapazitiver Meßwertumformer zur Lagemessung, dadurch gekennzeichnet, daß in dem in einem der vorangehenden Ansprüche beschriebenen Umformer der erste Maßstab (10) erste Grob/Feinempfangselektroden (14a, 14b) und erste Mittel/Feinempfangselektroden (16a, 16b) aufweist, welche sich jeweils entlang der Verschiebungsrichtung und im Wesentlichen parallel erstrecken, wobei die nebeneinanderliegenden Seiten entgegengesetzte umgekehrte

Formen besitzen und in einem isolierten Zustand bezüglich der ersten Sendeelektroden (12) angeordnet sind, an welche die Meßschaltung (32) angeschlossen ist,

der zweite Maßstab (20) zweite Grob/Feinsendeelektroden (24) und zweite Mittel/Feinempfangselektroden (28) aufweist, welche aus Gruppen von Elektroden bestehen, die entlang der relativen Verschiebungsrichtungen (x) an Positionen angeordnet sind, an denen sie den ersten Groß/Feinempfangselektroden (14a, 14b) und den ersten Mittel/Feinempfangselektroden (16a, 16b) gegenüberstehen und die kapazitiv mit den ersten Grob/Feinempfangseletroden (14a, 14b) und den ersten Mittel/Feinempfangselektroden (16a, 16b) gekoppelt sind,

die zweiten Empfangselektroden (22) und die zweiten Grob/Feinsendeelektroden (24) elektrisch miteinander über die Koppelelektroden (26) verbunden sind,

die verbundenen zweiten Empfangselektroden (22) und die zweiten Grob/Feinsendeelektroden (24) unterschiedliche Grobablenkungen (D) innerhalb des gesamten Meßbereichs entlang der relativen Verschiebungsrichtung (x) aufweisen,

absolute Grobmessungen entlang des gesamten Meßbereichs unter Verwendung der genannten Grobablenkungen (D), welche eindeutig für jede relative Verschiebungsposition definiert sind, ausgeführt werden können, die zweiten Empfangselektroden (22) und zweiten Mittel/Feinsendeelektroden (28) über die Koppelelektroden (29) elektrisch miteinander verbunden sind und die verbundenen zweiten Empfangselektroden (22) und die zweiten Mittel/Feinsendeelektroden (28) jeweils eine unterschiedliche mittlere Ablenkung (Dm) entlang der relativen Verschiebungsrichtung (x) innerhalb des mittleren Meßbereichs aufweisen, der gleich dem vorher genannten gesamten Meßbereich geteilt in bestimmte Teile ist,

absolute mittlere Messungen innerhalb des mittleren Meßbereichs unter Verwendung der genannten mittleren Ablenkungen (Dm), die für jede relative Verschiebungsposition bestimmt sind, gemacht werden können,

die genannten zweiten Empfangselektroden (22) aus einer Anzahl von Elektroden bestehen, die einen gleichen Abstand (Pr2) voneinander besitzen, der gleich dem Abstand der Sendewellenlänge (Wt1) der genannten Gruppe von ersten Sendeelektroden (12) geteilt durch eine spezifische ganze Zahl ist,

die mittleren Abmessungen feingemessen werden können mit einer Maßstabsgenauigkeit, welche gleich dem Abstand der zweiten Empfangselektroden (Pr2) geteilt durch die Anzahl der Sendeelektroden innerhalb der genannten Gruppe der ersten Sendeelektroden (12) ist.

14. Kapazitiver Meßwertumformer zur Lagemessung, dadurch gekennzeichnet, daß in dem in Anspruch 13 beschriebenen Umformer die zweiten Empfangselektroden (22) und die zweiten Grob/Feinsendeelektroden (24) so angeordnet sind, daß der Betrag der Grobablenkung (D) des zweiten Maßstabs zu Null in der Mitte des zweiten Maßstabs (20) gesetzt ist, und daß die Ablenkung (D) in den entgegengesetzten Richtungen auf der psotiven oder negativen Seite zunimmt, wenn man sich beiden Enden des Maßstabs annähert.

15. Kapazitiver Meßwertumformer zur Lagemessung, dadurch gekennzeichnet, daß in einem der den Ansprüchen 13 und 14 beschriebenen Umformer die nebeneinanderliegenden Gruppen der ersten Sendeelektroden (12) einen Block nach dem anderen bilden, und Wechselstromsignale mit verschiedenen Phasen an die ersten Sendeelektroden (12) in jeder Gruppe angelegt werden, so daß, wenn der Abstand dieses Blocks als der Abstand der Sendewellenlänge (Wt1) bestimmt wird, die genannten zwei Ablenkungen (D, Dm) den genannten Abstand der Sendewellenlänge (Wt1) innerhalb des meßbaren Maßstabsbereichs nicht überschreiten.

16. Kapazitiver Meßwertumformer zur Lagemessung, dadurch gekennzeichnet, daß in der in Anspruch 15 beschriebenen Vorrichtung die ersten Grob/Feinempfangselektroden (14a, 14b) und die ersten Mittel/Feinempfangselektroden (16a, 16b) aus Gruppen von zwei Elektrodentypen bestehen zur Ausgabe von Signalen mit zwei verschiedenen Phasen,
wenn der Abstand der Grob/Feinempfangswellenlänge Wr1 ist, der genannte Abstand der Sendewellenlänge Wt1 ist, der Abstand der zweiten Empfangselektroden Pr2 ist, und der Abstand der Grob/Feinsendeelektroden Pt2 ist, der Abstand der Gruppe der ersten Grob/Feinempfangselektroden (14a, 14b) auf den Wert:

$$Wr1 = Wt1 \times Pt2/Pr2$$

gesetzt wird,
wenn der Abstand der Mittel/Feinempfangswellenlänge Wmr1 und der genannte Abstand der ersten Mittel/Feinsendeelektroden Pmt2 ist, wird der Abstand der Gruppe der ersten Mittel/Feinempfangselektroden (16a, 16b) auf den Wert:

$$Wmr1 = Wt1 \times Pmt2/Pr2,$$

gesetzt.

17. Kapazitiver Meßwertumformer zur Lagemessung, dadurch gekennzeichnet, daß in einem der in Anspruch 13 betriebenen Umformern, auf dem zweiten Maßstab (20), in einem elektrisch voneinander isoliertem Zustand, die zweiten Grob/Feinempfangselektroden (22a) und die zweiten Mittel/Feinempfangselektroden (22b) an Positionen angeordnet sind, an denen sie kapazitiv mit den ersten Sendeelektroden (12) gekoppelt werden können und die zweiten Grob/Feinsendeelektroden (24) oder zweiten Mittel/Feinsendeelektroden (28) mit den zweiten Empfangselektroden (22) über die genannten Koppelelektroden (26a, 26b) mit der vorbeschriebenen Grobablenkung (D) oder mittleren Ablenkung (Dm) elektrisch verbunden sind.

18. Kapazitiver Meßwertumformer zur Lagemessung, dadurch gekennzeichnet, daß in dem in Anspruch 17 beschriebenen Umformer die zweiten Grob/Feinempfangselektroden (22a) und die zweiten Mittel/Feinempfangselektroden (22b) entlang der Verschiebungsrichtung und im wesentlichen parallel angeordnet sind, wobei die nebeneinanderliegenden Seiten eine halbwellen-sinusförmige Form besitzen und in entgegengesetzt umgekehrten Formen mit elektrischen Phasenunterschieden von 180° angeordnet sind.

19. Kapazitiver Meßwertumformer zur Lagemessung, dadurch gekennzeichnet, daß in dem in einem der vorangehenden Ansprüche beschriebenen Umformer weiterhin bereitgestellt wird:
eine Signalerzeugungseinrichtung (61, 62) zum selektiven Anlegen von sich periodisch verändernden Anregungssignalen an die ersten Sendeelektroden (12) in einer ersten Sequenz, welche der Sequenz, in der die Elektroden realtiv zueinander in der Gruppe der ersten Sendeelektroden angeordnet sind, und in einer zweiten Sequenz, welche verschieden von der genannten ersten Sequenz ist,
eine Einrichtung (63, 64) zum Verarbeiten der ersten und zweiten Ausgangssignale, welche von den ersten Empfangselektroden (14) in Antwort auf die erste und zweite Sequenz der Anregungssignale erzeugt werden, zum Bestimmen der relativen Verschiebung zwischen den beiden Maßstäben (10, 20).

20. Kapazitiver Meßwertumformer zur Lagemessung, dadurch gekennzeichnet, daß in dem in Anspruch 19 beschriebenen Umformer weiterhin bereitgestellt wird:
   eine Steuereinrichtung (80) zum Vorabspeichern der Sequenzen in einem Speicher und zum Steuern der Signalverarbeitungseinrichtung (63, 64), um selektiv die Ausgangssignale (Sa, Sb), die von den ersten Empfangselektroden (14) erhalten werden, zu kombinieren, die im Ansprechen auf die, an die ersten Sendeelektroden (12) angelegten verschiedenen Sequenzen von Anregungssignalen produziert worden sind.

21. Kapazitiver Meßwertumformer zur Lagemessung, dadurch gekennzeichnet, daß in einem der in den Ansprüche 19 oder 20 beschriebenen Umformer weiterhin bereitgestellt wird:
   eine Anregungssignalerzeugungseinrichtung (82) zum Erzeugen von verschiedenen Phasenkombinationen von Anregungssignalen (400), welche an die entsprechenden Elektroden wenigstens einer Gruppe von Sendeelektroden (12) in einer vorbestimmten räumlichen Anordnung angelegt werden, wobei jede der Phasenkombinationen der Anregungssignale zwei Sätze von Anregungssignalen umfaßt, die bezüglich einander phaseninvertiert sind und in räumlichen Phasenquadratur sind, wenn sie an die Sendeelektroden (12) angelegt werden und die relativen räumlichen Phasenpositionen, die von den entsprechenden Sätzen von Anregungssignalen in jeder Phasenkombination der Anregungssignale besetzt werden, sich von einer Phasenkombination zur nächsten zunehmend verändern;
   eine erste Steuereinrichtung (83) zum Steuern der genannten Anregungssignalerzeugungseinrichtung, um selektiv ein Paar einer ersten und zweiten Phasenkombination der Anregungssignale an wenigstens eine Gruppe von Sendeelektroden anzulegen;
   eine Ausgangssignal-Auswahleinrichtung (94) zum Auswählen eines Signals, das entweder der Differenz oder der Kombination der ersten und zweiten Ausgangssignale entspricht, die von den ersten Empfangselektroden (14a - 14d) erzeugt werden, als ein Ausgangssignal der Elektrodenfeldeinrichtung, und dadurch sukzessive erste und zweite Ausgangssignale der Elektrodenfeldeinrichtung im Ansprechen auf das Paar von Phasenkombinationen der Anregungssignale erzeugt;

eine Einrichtung (85, 86) zur Demodulation der ersten und zweiten Ausgangssignale, um erste und zweite Demodulationssignale (402) zu erzeugen, und zum Ausführen einer Doppelrampenintegration der ersten und zweiten Demodulationssignale (402), worin das erste modulierte Signal positiv über ein vorbestimmtes Zeitintervall (To) von einer Integrationseinrichtung (86) integriert wird; und das zweite Demodulationssignal invers von der Integrationseinrichtung (86) integriert wird, bis das Ausgangssignal (404) des Integrators auf einen Referenzpegel zurückkehrt, wobei die erste und zweite der Phasenkombinationen der Anregungssignale so ausgewählt werden, daß die Integration des zweiten Demodulationssignals die Integration des Ausgangssignals (404) in der gegenläufigen Richtung von der positiven Integration des ersten Ausgangssignals des Demodulators bewirkt;
   eine Einrichtung (88) zum Messen der Integrationszeit (T) der Integration des zweiten demodulierten Signals und eine Vergleichseinrichtung (92, 93) zum Erzeugen eines Ausgangssignals, wenn die Integrationszeit (T) einen vorbestimmten Grenzwert (Tm) überschreitet;
   eine zweite Steuereinrichtung (83), die im Ansprechen auf das Ausgangssignal der Vergleichseinrichtung (92) die Demodulationseinrichtung (85) und die Doppelrampenintegrationseinrichtung (86) zurücksetzt, um wiederholt selektiv ein verschiedenes weiteres Paar von ersten und zweiten Phasenkombinationen der Anregungssignale an die Gruppe von Sendeelektroden (12) anzulegen, und um zu bewirken, daß die Demodulationseinrichtung (85) und die Doppelrampenintegrationseinrichtung (86) die resultierenden ersten und zweiten Demodulationssignale (402) integrieren bis kein Ausgangssignal von der Vergleichseinrichtung (92) ausgegeben wird.

22. Kapazitiver Meßwertumformer zur Lagemessung, dadurch gekennzeichnet, daß in dem im Anspruch 21 beschriebenen Umformer der vorbestimmte Grenzwert (Tm) für die Integrationszeit (T) der demodulierten Signale der Reichweite entspricht, über die das Verhältnis der ersten und zweiten Ausgangssignale der Elektrodenfeldeinrichtung im wesentlichen linear ist.

23. Kapazitiver Meßwertumformer zur Lagemessung, dadurch gekennzeichnet, daß in dem in Anspruch 21 und 22 beschriebenen Umformer eine Phasendifferenz von 90° zwischen der ersten und zweiten Phasenkombinationen der Anregungssignale besteht.

24. Kapazitiver Meßwertumformer zur Lagemessung, dadurch gekennzeichnet, daß in einem der in den Ansprüchen 21 bis 23 beschriebenen Umformer weiterhin eine Recheneinheit (89) bereitgestellt wird, die auf die Steuereinrichtung (83) anspricht, und welche die relative Verschiebung zwischen den zwei Maßstäben aus der Integrationszeit (T) der Integration des zweiten demodulierten Signals, die von der Integrationszeitmessungseinrichtung (88) gemessen wird, bestimmt, wenn die Vergleichseinrichtung (92) im Anschluß auf eine Integration des zweiten Demodulationssignals kein Ausgangssignal erzeugt.

25. Kapazitiver Meßwertumformer zur Lagemessung, dadurch gekennzeichnet, daß in dem in Anspruch 24 beschriebenen Umformer weiterhin bereitgestellt wird;
eine Hauptsteuereinrichtung (81) zum Steuern der Anregungssignalerzeugungseinrichtung (82) und der Ausgangssignal-Auswahleinrichtung (94), um so einen Meßzyklus auszuführen, welcher nacheinander erzeugt:
einen Grobmeßwert von einem zweiten Demodulationssignal, welches von einem Ausgangssignal der Elektrodenfeldeinrichtung erzeugt wird, das der Differenz zwischen dem ersten und zweiten Ausgangssignal entspricht, die von den ersten Empfangselektroden (14a, 14b) erzeugt werden im Ansprechen auf eine Phasenkombination von Anregungssignalen (400), die in einer ersten räumlichen Ordnung, welche der ersten Sequenz entspricht, erzeugt werden;
einen mittleren Meßwert von einem zweiten Demodulationssignal, das von einem Ausgangssignal der Elektrodenfeldeinrichtung erzeugt wird, welches der Differenz zwischen dem ersten und zweiten Ausgangssignal entspricht, die von den ersten Empfangselektroden (16a, 16b) in Antwort auf eine Phasenkombination der Anregungssignale (400) in einer ersten räumlichen Ordnung erzeugt werden; und
einen Feinmeßwert von einem zweiten Demodulationssignal, das von der Kombination der ersten und zweiten Ausgangssignale erzeugt wird, die von den ersten Empfangselektroden (14a, 14b oder 16a, 16b) in Antwort auf eine Phasenkombination der Anregungssignale, welche in einer zweiten räumlichen Ordnung, die der zweiten Sequenz entspricht, erzeugt werden; und
die genannte Recheneinheit (89), die Grob-, Mittelund Feinmeßwerte kombiniert, um einen Lagemeßwert zu erzeugen, welcher der relativen Verschiebung zwischen den zwei Maßstäben (10, 20) entspricht.

**Revendications**

1. Transducteur du type capacitif pour mesurer des positions qui possède une première échelle (10) et une seconde échelle (20) qui sont placées près l'une de l'autre de manière telle qu'elles peuvent être déplacées l'une par rapport à l'autre ,
la première échelle susdite (10) est munie de premières électrodes d'émission (12) auxquelles des signaux de courant alternatif C.A. sont fournis et de premières électrodes de réception (14) qui sont placées en état isolé par rapport aux premières électrodes d'émission susdites (12) et auxquelles un circuit de mesure (32) est connecté,
la seconde échelle susdite (20) est munie de secondes électrodes de réception (22) qui comprennent des groupes d'électrodes placées le long de la direction de déplacement relatif (X) à des positions où elles peuvent faire face aux premières électrodes d'émission susdites (12) et qui sont en couplage capacitif avec les premières électrodes d'émission (12) et de secondes électrodes d'émission (24) qui comprennent des groupes d'électrodes placées le long de la direction de déplacement relatif (X) à des positions où elles peuvent faire face aux premières électrodes de réception (14) et qui sont en couplage capacitif avec les premières électrodes de réception (14) ,
chaque seconde électrode de réception (22) est reliée électriquement à une seconde électrode d'émission respective (24) par une électrode de couplage respective (26),
caractérisé en ce que
chaque paire reliée d'une seconde électrode de réception (22) et d'une seconde électrode d'émission (24) possède un décalage relatif (D) le long des directions de déplacement relatif (X) ,
lesdits décalages sont uniquement définis pour chaque position de déplacement relatif de sorte que des mesures absolues de position peuvent être réalisées.

2. Transducteur de type capacitif pour mesurer des positions caractérisé par le fait que, dans le transducteur décrit en revendication 1, les secondes électrodes de réception (22) et les secondes électrodes d'émission (24) sont placées de façon que la valeur du décalage de la seconde échelle (20) soit établie à zéro au centre de la seconde échelle (20) et que le décalage (D) augmente dans la direction opposée vers le côté plus ou moins , lorsque l'on s'approche des deux extrémités de l'échelle .

3.  Transducteur du type capacitif pour mesurer des positions caractérisé par le fait que, dans l'un quelconque des transducteurs décrits dans les revendications 1 et 2, les groupes adjacents (1, 2) des premières électrodes d'émission (12) forment des blocs l'un après l'autre et que les signaux C.A. (30a, 30b) de différentes phases sont fournis aux premières électrodes d'émission (12) de chaque groupe (1, 2) de sorte que, si le pas de ce bloc est considéré comme pas de longueur d'onde d'émission (Wt1), le décalage susdit (D) ne dépassera pas le pas susdit de longueur d'onde d'émission (Wt1) dans l'étendue mesurable de l'échelle.

4.  Transducteur de type capacitif pour mesurer des positions caractérisé par le fait que, dans le dispositif décrit en revendication 3, les premières électrodes de réception (14) comprennent un groupe de deux types d'électrodes pour délivrer des signaux de deux phases différentes et si le pas de longueur d'onde de réception est Wr1, le pas susdit de longueur d'onde d'émission est Wt1, le pas des secondes électrodes de réception (22) est Pr2 et le pas des secondes électrodes d'émission (24) est Pt2, le pas du groupe des premières électrodes de réception (14) est établi à :

    Wr1 = Wt1 x Pt2/Pr2

5.  Transducteur de type capacitif pour mesurer des positions caractérisé par le fait que, dans le transducteur décrit en revendication 4, les premières électrodes de réception (14) comprennent deux électrodes (14a, 14b) qui s'étendent le long de la direction de déplacement et sont essentiellement parallèles,

    les côtés adjacents ayant des formes mutuellement inversées.

6.  Transducteur de type capacitif pour mesurer des positions caractérisé par le fait que, dans le transducteur décrit en revendication 5, les formes mutuellement inversées susdites des premières électrodes de réception susdites (14a, 14b) consistent en des formes sinusoïdales.

7.  Transducteur de type capacitif pour mesurer des positions caractérisé par le fait que, dans le transducteur décrit en revendication 5, les formes mutuellement inversées susdites des premières électrodes de réception susdites (14a, 14b) consistent en des formes d'onde triangulaires.

8.  Transducteur de type capacitif pour mesurer des positions caractérisé par le fait que, dans le transducteur décrit dans l'une quelconque des revendications 1 à 7, des mesures absolues grossières peuvent être réalisées le long du domaine total de mesure à l'aide des décalages susdits (D) qui sont définis uniquement pour chaque position de déplacement relatif,

    les secondes électrodes de réception susdites (22) comportent un nombre d'électrodes ayant un pas d'égale distance (Pr2) égal au pas de longueur d'onde d'émission (Wt1) du groupe susdit de premières électrodes d'émission (12) divisé par un entier spécifique,

    et les dimensions grossières susdites peuvent être mesurées finement avec une précision d'échelle égale au pas susdit des secondes électrodes de réception (Pr2) divisé par le nombre d'électrodes d'émission du groupe susdit de premières électrodes d'émission (12).

9.  Transducteur de type capacitif pour mesurer des positions caractérisé par le fait que, dans le transducteur décrit en revendication 8, les secondes électrodes de réception (22) comportent un nombre d'électrodes possédant un pas d'égale distance (Pr2) égal au pas de longueur d'onde d'émission (Wt1) du groupe susdit de premières électrodes d'émission (12) divisé par un entier inférieur au nombre d'électrodes d'émission du groupe de premières électrodes d'émission (12).

10. Transducteur de type capacitif pour mesurer des positions caractérisé par le fait que, dans l'un quelconque des transducteurs décrits en revendication 8, les premières électrodes d'émission (12) possèdent un pas d'inégale distance (Pt1).

11. Transducteur de type capacitif pour mesurer des positions caractérisé par le fait que, dans l'un quelconque des transducteurs décrits en revendications 8 et 9, sur la seconde échelle (20) sont prévues deux séries de secondes électrodes de réception (22a, 22b) et de secondes électrodes d'émission (24a, 24b), sur la première échelle (10) sont prévues deux premières électrodes de réception (14) qui font face aux deux secondes électrodes d'émission susdites (24a, 24b) et sont en couplage capacitif avec elles et des opérations de mesure peuvent être effectuées en combinant les deux signaux de réception.

12. Transducteur de type capacitif pour mesurer des positions caractérisé par le fait que , dans le transducteur décrit en revendication 11, les deux secondes électrodes de réception susdites (22a, 22b) sont toutes les deux en couplage capacitif avec une seule première électrode d'émission (12) sur le côté de la première échelle (10).

13. Transducteur de type capacitif pour mesurer des positions caractérisé par le fait que dans le transducteur décrit dans l'une quelconque des revendications précédentes, la première échelle susdite (10 ) est munie de premières électrodes de réception grossières/fines (14a, 14b) et de premières électrodes de réception moyennes/ fines (16a, 16b) qui s'étendent chacune le long de la direction de déplacement et sont essentiellement parallèles, les côtés adjacents ayant des formes mutuellement inversées et situés dans un état isolé par rapport aux premières électrodes d émission susdites (12), auxquelles ledit circuit de mesure (32) est connecté ,

la seconde échelle susdite (20) est munie de secondes électrodes d'émission grossières/fines (24) et de secondes électrodes de réception moyennes/fines (28) qui comportent des groupes d'électrodes placées le long de la direction de déplacement relatif (X) à des positions où elles peuvent faire face aux premières électrodes de réception grossières/fines (14a, 14b) et aux premières électrodes de réception moyennes/fines (16a, 16b) et qui sont chacune en couplage capacitif avec les premières électrodes de réception grossières/fines (14a, 14b) et les premières électrodes de réception moyennes/fines (16a, 16b),

les secondes électrodes de réception (22) et les secondes électrodes d'émission grossières/fines (24) sont connectées électriquement les unes avec les autres par lesdites électrodes de couplage (26),

les secondes électrodes de réception (22) et les secondes électrodes d'émission grossières/fines (24) connectées ont chacune des décalages grossiers différents (D) dans le domaine total de mesure le long de la direction de déplacement relatif (X),

des mesures absolues grossières peuvent être réalisées le long du domaine total de mesure à l'aide des décalages grossiers susdits (D) qui sont uniquement définis pour chaque position de déplacement relatif,

les secondes électrodes de réception susdites (22) et les secondes électrodes d'émission moyennes/fines (28) sont connectées électriquement les unes avec les autres par lesdites électrodes de couplage (29) et les secondes électrodes de réception (22) et les secondes électrodes d'émission moyennes/fines (28) connectées ont chacune différents décalages moyens (Dm) le long de la direction de déplacement relatif (X) dans le domaine moyen de mesure égal au domaine total de mesure susdit divisé en fractions spécifiées,

des mesures absolues moyennes peuvent être faites dans le domaine moyen de mesure à l'aide des décalages moyens susdits (Dm) spécifiés pour chaque position de déplacement relatif,

les secondes électrodes de réception susdites (22) comportent un nombre d électrodes possédant un pas d'égale distance (Pr2) égal au pas de longueur d'onde d'émission (Wt1) du groupe susdit de premières électrodes d'émission (12) divisé par un entier spécifique,

et les dimensions moyennes susdites peuvent être mesurées finement avec une précision d'échelle égale au pas susdit des secondes électrodes de réception (Pr2) divisé par le nombre d'électrodes d'émission dans le groupe susdit de premières électrodes d'émission (12).

14. Tranducteur du type capacitif pour mesurer des positions caractérisé par le fait que, dans le transducteur décrit en revendication 13, les secondes électrodes de réception (22) et les secondes électrodes d'émission grossières/fines (24) sont placées de sorte que la valeur du décalage grossier (D) de la seconde échelle est établie à zéro au centre de la seconde échelle (20) et le décalage (D) augmente dans la direction opposée, vers le côté plus ou moins, lorsque l'on s'approche des deux extrémités de l'échelle.

15. Transducteur du type capacitif pour mesurer des positions caractérisé par le fait que, dans l'un quelconque des transducteurs décrits en revendications 13 et 14, les groupes adjacents des premières électrodes d'émission (12) forment des blocs l'un après l'autre et les signaux C.A. de différentes phases sont fournis aux premières électrodes d'émission (12) de chaque groupe, de sorte que, si le pas de ce bloc est pris comme le pas de longueur d'onde d'émission (Wt1), les deux décalages susdits (D, Dm) ne dépasseront pas le pas susdit de longueur d'onde d'émission (Wt1) dans l'étendue d'échelle mesurable.

16. Transducteur du type capacitif pour mesurer des positions caractérisé par le fait que, dans le dispositif décrit en revendication 15, les premières électrodes de réception grossière/fine (14a, 14b) et les premières électrodes de réception moyenne/fine (16a, 16b) comportent des groupes des deux types d'électrodes pour délivrer des signaux chacun de deux phases différentes,

si le pas de longueur d'onde de réception grossière/fine est Wr1, le pas de longueur d'onde d'émission susdit est Wt1, le pas des secondes électrodes de réception est Pr2 et le pas des secondes électrodes d'émission grossière/fine est Pt2, le pas du groupe pour les premières électrodes de réception grossière/fine (14a, 14b) est établi à :

Wr1 = Wt1 x Pt2/Pr2

si le pas de longueur d'onde de réception moyenne/fine est Wmr1 et le pas des premières électrodes d'émission moyenne/fine susdites est Pmt2, le pas du groupe des premières électrodes de réception moyenne/fine (16a, 16b) est établi à :

Wmr1 = Wt1 x Pmt2 / Pr2

17. Transducteur du type capacitif pour mesurer des positions caractérisé par le fait que, dans l'un quelconque des transducteurs décrits en revendication 13, sur la seconde échelle (29) sont placées, dans un état électriquement isolé les unes des autres, les secondes électrodes de réception grossière/fine (22a) et les secondes électrodes de réception moyenne/fine (22b) dans des positions où elles peuvent être en couplage capacitif avec les premières électrodes d'émission (12) et les secondes électrodes d'émission grossière/fine (24) ou les secondes électrodes d'émission moyenne/fine (28) sont reliées électriquement aux secondes électrodes de réception (22) par lesdites électrodes de couplage (26a, 26b) avec le décalage grossier (D) ou le décalage moyen (Dm) prescrit.

18. Transducteur du type capacitif pour mesurer des positions caractérisé par le fait que, dans le transducteur décrit en revendication 17, les secondes électrodes de réception grossière/fine susdites (22a) et les secondes électrodes de réception moyenne/fine (22b) sont placées le long de la direction du déplacement et sont essentiellement parallèles, les côtés adjacents possédant une forme de demi-onde sinusoïdale et placés selon des formes mutuellement inversées avec des différences de phase électrique de 180 degrés.

19. Transducteur du type capacitif pour mesurer des positions caractérisé par le fait que, dans le transducteur décrit dans l'une quelconque des revendications précédentes, sont en outre prévus :

des moyens de signaux d'excitation (61, 62) pour appliquer sélectivement des signaux d'excitation variant périodiquement aux premières électrodes d'émission (12) dans une première séquence suivant la séquence dans laquelle les électrodes sont placées les unes par rapport aux autres dans le premier groupe d'électrodes émettrices,

et dans une seconde séquence qui est différente de la première séquence susdite,

des moyens (63, 64) pour traiter les premier et second signaux de sortie délivrés par les premières électrodes de réception (14) en réponse aux première et seconde séquences des signaux d'excitation pour obtenir le déplacement relatif entre les deux échelles (10, 20).

20. Transducteur du type capacitif pour mesurer des positions caractérisé par le fait que, dans le transducteur décrit en revendication 19 sont prévus en plus :

des moyens de commande (80) pour préenregistrer lesdites séquences dans une mémoire et commander les moyens de traitement des signaux (63, 64) pour combiner sélectivement les signaux de sortie (Sa, Sb) obtenus à partir des premières électrodes de réception (14), qui ont été délivrés en réponse aux différentes séquences de signaux d'excitation appliqués aux premières électrodes d'émission (12).

21. Transducteur du type capacitif pour mesurer des positions caractérisé par le fait que, dans l'un quelconque des trasducteurs décrits en revendication 19 ou 20, sont de plus prévus :

des moyens pour générer des signaux d'excitation (82) afin de générer différentes combinaisons de phases des signaux d'excitation (400) pour application aux électrodes respectives d'au moins un groupe d'électrodes émettrices (12) dans un ordre spatial prédéterminé, chacune desdites combinaisons de phases des signaux d'excitation comprenant deux séries de signaux d'excitation qui sont en inversion de phase l'un par rapport à l'autre et en quadrature de phase spatiale quand appliqués auxdites électrodes émettrices (12) et les positions des phases spatiales relatives occupées par les séries respectives des signaux d'excitation dans chaque combinaison de phases des signaux d'excitation changeant successivement de façon incrémentale d'une combinaison de phase à la suivante ;

des premiers moyens de commande (83) pour commander lesdits moyens pour générer les signaux d'excitation afin d'appliquer sélectivement une paire de premiére et seconde combinaisons desdites combinaisons de phases des signaux d'excitation à au moins un groupe d'électrodes émettrices ;

des moyens de sélection des signaux de sortie (94) pour sélectionner un signal correspondant soit à la différence soit à la combinaison des premier et second signaux de sortie délivrés par les premières électrodes de réception (14a - 14d) comme un signal de sortie de l'agencement en rangée des électrodes, et produisant de ce fait des premier et second signaux de sortie successifs des agencements de rangées d'électrodes en réponse à ladite paire de combinaison de phases des signaux d'excitation ;

des moyens (85, 86) pour démoduler lesdits premier et second signaux de sortie pour fournir les premier et second signaux de démodulation (402) et pour effectuer une double intégration linéaire desdits premier et second signaux de démodulation (402) dans lequel ledit premier signal démodulé est intégré de façon positive pendant un intervalle de temps prédéterminé (To) par des moyens intégrateurs (86) ; et ledit second signal démodulé est intégré de façon inverse par lesdits moyens intégrateurs (86) jusqu'à ce que la sortie de l'intégrateur (404) revienne à un niveau de référence, lesdites première et seconde combinaisons desdites combinaisons de phase des signaux d'excitation étant sélectionnées de telle sorte que ladite intégration dudit second signal de démodulation provoque l'intégration de la sortie de l'intégrateur (404) dans la direction inverse de ladite intégration positive de ladite première sortie du signal de démodulation ;

des moyens (88) pour mesurer le temps d'intégration (T) de ladite intégration du second signal démodulé et des moyens comparateurs (92, 93) pour délivrer une sortie quand le temps d'intégration (T) dépasse une valeur limite prédéterminée (Tm) ;

des seconds moyens de commande (83) sensibles à ladite sortie desdits moyens comparateurs (92) pour réinitialiser lesdits moyens de démodulation (85) et de double intégration linéaire (86) , pour appliquer sélectivement de façon répétitive une paire supplémentaire différente de premier et second signaux desdites combinaisons de phases des signaux d'excitation audit groupe d'électrodes émettrices (12) et pour entrainer lesdits moyens de démodulation (85) et de double intégration linéaire (86) à intégrer les premier et second signaux de démodulation résultants (402) jusqu'à ce qu'il n'y ait plus de sortie desdits moyens comparateurs (92).

22. Transducteur du type capacitif pour mesurer des positions caractérisé par le fait que, dans le transducteur décrit en revendication 21, la valeur limite prédéterminée (Tm) pour ledit temps d'intégration (T) desdits signaux démodulés correspond à l'étendue sur laquelle le rapport desdits premier et second signaux de sortie des arrangements de rangées d'électrodes est sensiblement linéaire.

23. Transducteur du capacitif pour mesurer des positions caractérisé par le fait que dans le transducteur décrit en revendication 21 ou 22, il existe une différence de phase de 90° entre les premier et second signaux desdites combinaisons de phases des signaux d'excitation.

24. Transducteur du type capacitif pour mesurer des positions caractérisé par le fait que, dans l'un quelconque des transducteurs décrits en revendications 21 à 23, il est de plus prévu une unité arithmétique (89) sensible auxdits moyens de commande (83) laquelle calcule le déplacement relatif entre les deux échelles à partir du temps d'intégration (T) de l'intégration dudit second signal démodulé mesuré par lesdits moyens de mesure de temps d'intégration (88) quand lesdits moyens comparateurs (92) ne délivrent pas de sortie à la suite d'une intégration du second signal démodulé.

25. Transducteur du type capacitif pour mesurer des positions caractérisé par le fait que, dans le transducteur décrit en revendication 24, il est prévu de plus des moyens de commande principaux (83) pour commander lesdits moyens pour générer les signaux d'excitation (82) et lesdits moyens de sélection du signal de sortie (94) de façon à effectuer un cycle de mesure pour délivrer séquentiellement :

une valeur de mesure grossière à partir d'un second signal de démodulation délivré à partir d'un signal de sortie de l'agencement en rangée des électrodes correspondant à la différence entre les premier et second signaux de sortie produits par les premières électrodes de réception (14a, 14b) en réponse à une combinaison de phases des signaux d'excitation (400) générés dans un premier ordre spatial correspondant à ladite première séquence ;

une valeur de mesure moyenne à partir d'un second signal de démodulation délivré à partir d'un signal de sortie de l'agencement en rangée des électrodes correspondant à la différence entre les premier et second signaux de sortie produits par les premières électrodes de réception (16a, 16b) en réponse à une combinaison de phases des signaux d'excitation (400) générés dans ledit premier ordre spatial ; et

une valeur de mesure fine à partir d'un second signal de démodulation produit à partir de la combinaison des premier et second signaux de sortie délivrés par les premières électrodes de réception (14a, 14b ou 16a, 16b) en réponse à une combinaison de phases des signaux d'excitation générés dans un second ordre spatial correspondant à ladite seconde séquence ; et

ladite unité arithmétique (89) combine lesdites valeurs de mesure grossière, moyenne et fine pour fournir une mesure de position correspondant au déplacement relatif entre les deux échelles (10, 20) .

# FIG. 1

RELATIVE DISPLACEMENT

MEASURING CIRCUIT

32

x

10

Wt1

12

14

30a

30

OSC

30b

Pt2

24

D(x) DEFLECTION

26

22

Pr2

20

FIG. 2

F I G . 3

# FIG.4

$$Wt_1 = n \times Pt_1$$
$$n = 8$$

EP 0 248 165 B1

FIG.5

EP 0 248 165 B1

FIG. 6

FIG.7

EP 0 248 165 B1

# FIG. 8

# FIG. 9

RELATIVE DISPLACEMENT X

Sa

Sb

MEASURING CIRCUIT 32

14a 14b

Wr1

10

Pt1    1 6 3 8 5 2 7 4

12

PHASE CONVERTER

8
7
6
5
4
3
2
1

OSC 30

34

$Pt_1 = \frac{5}{8} Pr_2$

Wt1

Pt2    24

26

D(x) DEFLECTION

1 2 3 4 5

22

$Pr_2 = \frac{1}{5} Wt_1$

20

EP 0 248 165 B1

# FIG. 10

$Pt_1 = \frac{5}{8} Pr_2$

$Wt_1$

$Pt_1$

12

| 1 | 6 | 3 | 8 | 5 | 2 | 7 | 4 | 1 |

1 2 3 4 5 6 7 8 | 1 2 3 4 5 6 7 8 | 1 2 3 4 5 6 7 8 | 1 2 3 4 5 6 7 8 | 1 2 3 4 5 6 7 8 |

22

| 1 | 2 | 3 | 4 | 5 | 1 |

$Pr_2 = \frac{1}{5} Wt_1$

EP 0 248 165 B1

FIG. 11

MEASURING CIRCUIT 32

PHASE CONVERTER 34

30 OSC

14

10

12

$Pt_1 = \frac{3}{8} Pr_2$

$Pt_1$

$Wt_1$

24

26

20

22

1 2 3 4 5 6 7 8 | 1 2 3 4 5 6 7 8 | 1 2 3 4 5 6 7 8 | 1

$Pr_2 = \frac{1}{3} Wt_1$

EP 0 248 165 B1

FIG .12

EP 0 248 165 B1

FIG. 13

$Wt_1 = n \times Pt_1$
$n = 8$

$Pt_1 = \dfrac{5}{8} Pr_2$

EP 0 248 165 B1

F I G . 14

EP 0 248 165 B1

FIG. 15

FIG.16

FIG. 17

EP 0 248 165 B1

FIG. 19

63/64

(Sa − Sb) + (Sc − Sd)
((Sa + Sb) − (Sc + Sd))

204

Sa    Sb    Sc    Sd

100 — TRANSDUCER

61 —

1 2 3 4 5 6 7 8
( 1 4 7 2 5 8 3 6 )

FROM 80

FIG. 18

63/64

Sa − Sb
(Sa + Sb)

204

Sa    Sb

100 — TRANSDUCER

61 —

1 2 3 4 5 6 7 8
( 1 6 3 8 5 2 7 4 )

FROM 80

61

FIG.20

EP 0 248 165 B1

## FIG. 21

## FIG. 22

| | P1 | P2 | P3 | P4 | P5 | P6 | P7 | P8 |
|---|---|---|---|---|---|---|---|---|
| FIRST PHASE COMBINATION 0° | O | O | O | O | I | I | I | I |
| SECOND PHASE COMBINATION 45° | I | O | O | O | O | I | I | I |
| THIRD PHASE COMBINATION 90° | I | I | O | O | O | O | I | I |
| FOURTH PHASE COMBINATION 135° | I | I | I | O | O | O | O | I |
| FIFTH PHASE COMBINATION 180° | I | I | I | I | O | O | O | O |
| SIXTH PHASE COMBINATION 225° | O | I | I | I | I | O | O | O |
| SEVENTH PHASE COMBINATION 270° | O | O | I | I | I | I | O | O |
| EIGHTH PHASE COMBINATION 315° | O | O | O | I | I | I | I | O |

# FIG.23

OUTPUT $f_0$ OF OSC 81

TRANSMITTING SIGNALS
- 400-1
- 400-2
- 400-3
- 400-4
- 400-5
- 400-6
- 400-7
- 400-8

1st PHASE COMBINATION

3rd PHASE COMBINATION

RECEIVING SIGNALS

402-1
$v_1 = k \sin x$

402-2
$v_3 = k \cos x$

OUTPUT 404 OF INTEGRATOR 86

OUTPUT 406 OF ANALOG COMP. 87

OUTPUT 408 OF COUNTER 88

START    STOP

64

# F I G. 24

RELATIVE DISPLACEMENT

1st PHASE COMBINATION

2nd 3rd 4th 5th 6th 7th 8th

402

500

$v_1 = k\sin x$

$v_3 = k\cos x$

$v_2$, $v_4$, $v_5$, $v_6$, $v_7$, $v_8$

$x_1 = 0$

$x_2$

$x_a = x_m / \text{NUMBER OF PHASES}$ : MEASURING RANGE OF FIRST PHASE COMBINATION

$x_m$ : MAXIMUM MEASURING RANGE

RECEIVING SIGNALS

$v$

$x$

# FIG. 25

Vi INTEGRAL VALUE

INVERSE
INTEGRATION
$v_3 = k\cos x$

POSITIVE INTEGRATION
$v_1 = k\sin x$

$T_0$ $\quad$ $T$

# FIG. 32

$\sim 204$

63/64 $\sim$ | COARSE $(Sa-Sb)$, MEDIUM $(Sc-Sd)$
$\left[ (Sa+Sb) \quad or \quad (Sc+Sd) \right]$

$Sa$ $\quad$ $Sb$ $\quad$ $Sc$ $\quad$ $Sd$

100 $\sim$ | TRANSDUCER

61 $\sim$ | 1 2 3 4 5 6 7 8
$\left[ 1 \quad 6 \quad 3 \quad 8 \quad 5 \quad 2 \quad 7 \quad 4 \right]$

FROM 80

## FIG.26

```
        ┌──────────────┐
        │    BEGIN      │
        │ MEASUREMENT   │
        └──────┬───────┘
               │
               ▼
    ┌────────────────────────┐
    │ RESET  INTEGRATOR  86  │
    └───────────┬────────────┘
               │
    ┌────────────────────────┐
    │ OUTPUT OF N            │
    │ PHASE  COMBINATION     │
    └───────────┬────────────┘
               │
    ┌────────────────────────┐          ┌────────────────────────────┐
    │ POSITIVE INTEGRATION OF│          │ N PHASE COMBINATION        │
    │ SIGNALS RECEIVED DURING│          │ = N+1 PHASE COMBINATION    │
    │ A SPECIFIC TIME (To)   │          └────────────────────────────┘
    └───────────┬────────────┘
               │
    ┌────────────────────────┐
    │ OUTPUT OF N+2 PHASE    │
    │ COMBINATION START      │
    │ COUNTER                │
    └───────────┬────────────┘
               │
    ┌────────────────────────┐
    │ INVERSE  INTEGRATION   │
    └───────────┬────────────┘
               │
          ┌────────────┐
          │  INTEGRAL   │  NO
          │ VALUE Vi=0? ├──────►
          │   (Tm)     │
          └─────┬──────┘
             YES│
    ┌────────────────────────┐
    │ STOP COUNTER 88        │
    └───────────┬────────────┘
              T │
    ┌────────────────────────┐
    │ CALCULATION / DISPLAY  │
    └───────────┬────────────┘
               │
          ┌──────────┐
          │  E N D   │
          └──────────┘
```

EP 0 248 165 B1

# FIG. 27

Wtl

Wtl'

1
2
3
4
5
6
7
8

12-1  12-2  12-3  12-4  12-5  12-6  12-7  12-8

12  1  2  3  4  5  6  7  8

Ptl

22
26
24

1  2  3  4  5  6  7  8  9

14

$Pr2 = \frac{1}{9} Wtl$

$Ptl = \frac{9}{8} Pr2$

# FIG.28

RELATIVE DISPLACEMENT X

14a
14b
Wr1
10
Pt1    16385274
12
Wmr1
16b
16a

$Pt_1 = \frac{5}{8} Pr_2$

Wt1

Sa
Sb
Sd
Sc

32
MEASURING CIRCUIT

34
PHASE CONVERTER

8
7
6
5
4
3
2
1

30
OSC

EP 0 248 165 B1

# FIG.29

24

20

COARSE DEFLECTION D(x)

Pt₂ → $Pt_2$

26

22

Pr₂ → $Pr_2$

$Pr_2 = \frac{1}{5} Wt_1$

1 2 3 4 5

28

29

$Pmt_2$

22a

MEDIUM DEFLECTION Dm(x)

x

MEDIUM MEASURING RANGE Mx

EP 0 248 165 B1

FIG.30

MEAS-URING CIRCUIT

$Wt_1 = n \times Pt_1$
$n = 8$

$Pt_1 = \frac{5}{8} Pr_2$

FIG. 31